# EUROPÄISCHE PATENTSCHRIFT

(11) **EP 4 010 766 B1**
(45) Veröffentlichungstag und Bekanntmachung des Hinweises auf die Patenterteilung: **30.07.2025**
(21) Anmeldenummer: 19786451.5
(22) Anmeldetag: 24.09.2019
(51) Int. Cl.: G05B 19/042, G05B 19/418

(54) **VERFAHREN ZUR ERSTELLUNG EINES DIGITALEN ZWILLINGS EINER ANLAGE ODER VORRICHTUNG**
METHOD FOR GENERATING A DIGITAL TWIN OF A SYSTEM OR DEVICE
PROCÉDÉ POUR GÉNÉRER UN JUMEAU NUMÉRIQUE D'UNE INSTALLATION OU D'UN DISPOSITIF

(43) Veröffentlichungstag der Anmeldung: 15.06.2022
(73) Patentinhaber: Siemens Aktiengesellschaft, 80333 München (DE)
(72) Erfinder: HANNIMAN, Brent, 90451 Nürnberg (DE); LAMPARTER, Steffen, 85622 Feldkirchen (DE); MECKEL, Jens, 92353 Postbauer-Heng (DE)
(74) Vertreter: Siemens Patent Attorneys
(86) Internationale Anmeldenummer: PCT/EP2019/075599
(87) Internationale Veröffentlichungsnummer: WO 2021/058084

(56) Entgegenhaltungen:
- EP-A1- 3 392 725
- EP-A1- 3 483 682
- WO-A1-2016/141998

## Beschreibung

Die vorliegende Erfindung betrifft ein Verfahren zur Erstellung eines Digitalen Zwillings einer Anlage oder Vorrichtung.

Derartige Verfahren sind aus dem Stand der Technik bekannt.

So offenbart z.B. die US-Veröffentlichungsschrift US 2018/0210436 A1 ein Verfahren zur Erstellung eines Digitalen Zwillings, welcher auf einer Aggregation von statischen und dynamischen digitalen Modellen der einzelnen Geräte der Anlage beruht. Dabei wird ein Aggregationsalgorithmus offenbart, welcher aus den entsprechenden statischen und dynamischen Modellen der Einzelgeräte einen Gesamtblick auf die entsprechende Anlage ermöglicht. Weiterhin ermöglicht das Gesamtmodell dann entsprechende Alarmmeldungen bezüglich spezieller Betriebszustände der Prozessgeräte bzw. des entsprechenden industriellen Prozesses.

Weiterhin offenbart der Artikel "Resource virtualization: A core technology for developing cyber-physical production systems"; Yuqian Lu, Xun Xu; Journal of Manufacturing Systems, Volume 47, April 2018, Pages 128-140, ein Verfahren zur Erstellung eines Digitalen Zwillings zu einer Fabrik basierend auf einem Referenzmodell der Fabrik, wobei dabei ein semantisches Modell entwickelt wird, welches alle benötigten Konzepte und die physikalischen Ressourcen der Fabrik beschreibt, um daraus den digitalen Zwilling zu erstellen.

Die Veröffentlichungsschrift US 2018/0157735 A1 offenbart ein System, in welchem Technische Daten in einem multidisziplinären Engineering-System in Clustern von Daten zusammengefasst sind. Diese können beispielsweise für verschiedene Anwendungen in dem multidisziplinären Engineering-System verwendet werden. Dabei können die technischen Daten für verschiedene Zwecke gruppiert werden, wie z.B. eine Gruppe von Geräten, die in einem Sicherheitsbereich einer automatisierten Einrichtung enthalten sind, eine Gruppe von Geräten, die in einem Automatisierungssystem enthalten sind, oder eine Gruppe von Geräten, die einer bestimmten Bussteuerung zugeordnet sind.

WO 2016/141998 offenbart eine Vorrichtung zum Bereitstellen einer digitalen Abbildung einer physikalischen Entität, z.B. einer Maschine oder Anlage. Dabei weist die Vorrichtung eine Abbildungseinheit zum Abbilden einer physikalischen Struktur der physikalischen Entität auf eine digitale Struktur basierend auf einem vordefinierten Schema auf.

Es ist ein Nachteil des genannten Standes der Technik, dass eine Grundvoraussetzung der Erstellung des Digitalen Zwillings das Vorliegen digitaler Strukturen und Unterelemente ist, aus welchen dann der digitale Zwilling beispielsweise einer Anlage oder Fabrik zusammengebaut werden kann. Diese Verfahren sind nicht in Fällen anwendbar, wo beispielsweise bei bestehenden Anlagen und Fabriken keine derartigen fertigen digitalen Module für beispielsweise Komponenten der Anlage oder Fabrik vorliegen. Weiterhin ist es ein Nachteil des Standes der Technik, dass entsprechende Cluster-Strukturen bei Engineering-Daten vorgegeben sein müssen oder manuell zusammengestellt werden müssen.

Daher ist es eine Aufgabe der vorliegenden Erfindung, ein Verfahren zur Verfügung zu stellen, welches es ermöglicht, einen digitalen Zwilling einer Anlage oder Vorrichtung auf flexiblere und/oder einfachere Weise zu erzeugen oder einen derart erzeugten Digitalen Zwilling zur Verfügung zu stellen. Es ist eine alternative Aufgabe der vorliegenden Erfindung, ein Verfahren zur Verfügung zu stellen, welches die Erstellung eines Digitalen Zwillings einer Anlage oder Vorrichtung ermöglicht, für welche zumindest für einzelne Komponenten der Anlage oder Vorrichtung nicht bereits digitale Zwillinge bzw. entsprechende digitale Modelle vorliegen.

Diese Aufgabe wird gelöst durch ein Verfahren mit den Merkmalen des Patentanspruch 1.

Ein derartiges Verfahren ist dabei Zur Erstellung eines Digitalen Zwillings einer Anlage oder Vorrichtung ausgebildet und eingerichtet,
wobei eine erste Datenquelle mit Automatisierungs-Engineeringdaten bezüglich einer Automatisierung und/oder Automatisierungs-Planung der Anlage oder Vorrichtung oder Teilen davon vorliegt, und
wobei die Automatisierungs-Engineeringdaten Daten mindestens zweier Datenkategorien umfassen,
das Verfahren umfassend die nachfolgenden Schritte:
   a.) Identifizieren von Komponenten-Datenclustern (310, 320, 330, 340, 250) innerhalb der Daten der ersten Datenquelle (205) unter Verwendung eines als maschinelles Lernverfahren ausgebildeten Clustering-Verfahrens, wobei die Komponenten-Datencluster (310, 320, 330, 340, 250) Komponenten-Typen oder Komponenten-ID-Informationen bezüglich der Anlage oder Vorrichtung (100) zuordenbar oder zugeordnet sind,
   b.) automatisiertes oder teilautomatisiertes Zuweisen jeweils einer Komponenten-Typ-Bezeichnung (312, 322, 352) oder jeweils einer Komponenten-ID-Informations-Bezeichnung (314, 334, 344, 354) zu mindestens einem der identifizierten Komponenten-Datencluster (310, 320, 330, 340, 250),
      wobei das automatisierte oder teilautomatisierte Zuweisen unter Verwendung einer Clusterzuordnungs-Datenbank und/oder eines Clusterzuordnungs-Neuronalen-Netzes erfolgt,
   c.) Erstellen und Speicherung des Digitalen Zwillings (800) der Anlage oder Vorrichtung (100), umfassend ein Anordnen und/oder Speichern der gemäß Verfahrensschritt b.) erzeugten Informationen bezüglich der dem mindestens einen der identifizierten Komponenten-Datencluster jeweils zugewiesenen Komponenten-Typ-Bezeichnung oder Komponenten-ID-Informations-Bezeichnung, als Digitale-Zwilling-Datenbank.

Die vorstehend genannte Aufgabe wird weiterhin gelöst durch ein Verfahren zur Erstellung eines Digitalen Zwillings einer Anlage oder Vorrichtung, insbesondere ein Verfahren zur Erstellung eines Digitalen Zwillings einer Anlage oder Vorrichtung gemäß der vorliegenden Beschreibung, wobei eine erste Datenquelle aus der nachfolgenden Liste von Datenquellen vorliegt:
- Automatisierungs-Engineeringdaten bezüglich einer Automatisierung und/oder Automatisierungs-Planung der Anlage oder Vorrichtung oder Teilen davon,
- MCAD-Daten bezüglich einer mechanischen und/oder räumlichen Planung der Vorrichtung oder Anlage oder Teilen davon, und/oder bezüglich einer mechanischen und/oder räumlichen Ausgestaltung der Vorrichtung oder Anlage oder Teilen davon,
- ECAD-Daten bezüglich einer elektrischen Planung und/oder Stromlaufplanung der Vorrichtung oder Anlage oder Teilen davon,
   und/oder bezüglich einer elektrischen Ausgestaltung und/oder realisierten Stromlaufplanung der Vorrichtung oder Anlage oder Teilen davon,
- Roboter-Daten bezüglich einer Planung und/oder einer Ausgestaltung von einem oder mehreren Robotern der Vorrichtung oder Anlage,
- Beschreibungs-Daten bezüglich einer Planung und/oder Ausgestaltung der Vorrichtung oder Anlage oder Teilen davon.

Dabei umfasst die erste Datenquelle Daten mindestens zweier Datenkategorien.

Das genannte Verfahren umfasst dabei die nachfolgenden Schritte:
a.) Identifizieren von Komponenten-Datenclustern innerhalb der ersten Datenquelle, wobei die Komponenten-Datencluster Komponenten-Typen oder Komponenten-ID-Informationen bezüglich der Anlage oder Vorrichtung zuordenbar oder zugeordnet sind,
b.) Zuweisen jeweils einer Komponenten-Typ-Bezeichnung oder jeweils einer Komponenten-ID-Informations-Bezeichnung zu mindestens einem der identifizierten Komponenten-Datencluster,
c.) Erstellen und Speicherung des Digitalen Zwillings der Anlage oder Vorrichtung.

Dabei ist das Clustering im Rahmen des Verfahrensschritts a.) Derart eingerichtet und ausgestaltet, dass das Clustering entweder nach Komponenten-Typen oder nach Komponenten-ID-Informationen erfolgt. Das Ergebnis eines Clusterings gemäß Verfahrensschritte a.) sind also ein oder mehrere Cluster, wobei alle der identifizierten Cluster jeweils verschiedenen Komponenten-Typen zugeordnet oder zuordenbar sein können oder alle der identifizierten Cluster jeweils verschiedenen Komponenten-ID-Informationen zugeordnet oder zuordenbar sein können.

Merkmal b.) ist derart zu verstehen, dass Komponenten-Datencluster, welche Komponenten-Typen zugeordnet sind, jeweils eine Komponenten-Typ-Bezeichnung zugeordnet wird. Komponenten-Datencluster, welche dagegen Komponenten-ID-Informationen zugeordnete sind, werden entsprechend jeweils Komponenten-ID-Informations-Bezeichnungen zugeordnet.

Weiterhin ist Merkmal b.) so zu verstehen, dass jedem der mindestens einen identifizierten Komponenten-Datencluster jeweils eine entsprechende Bezeichnung zugeordnet wird, wobei in der Regel verschiedenen der Datencluster verschiedene Bezeichnungen zugeordnet werden. Es kann allerdings auch vorgesehen sein, dass verschiedenen Datenclustern dieselbe Bezeichnung zugeordnet wird.

Das erfindungsgemäße Verfahren erlaubt die Erstellung eines Digitalen Zwillings für eine Anlage oder Vorrichtung aufgrund der Daten, die im Rahmen eines Engineerings, z.B. des Automatisierungs-Engineerings, für die Vorrichtung bzw. Anlage erstellt wurden. Durch ein entsprechendes Clustering solcher Daten gemäß der vorliegenden Beschreibung lassen sich die zu bestimmten Komponenten der Anlage bzw. Vorrichtung zugehörigen Daten aus der ersten Datenquelle bzw. den Automatisierungs-Engineeringdaten identifizieren und damit ein Digitaler Zwilling für die Anlage oder Vorrichtung gemäß der vorliegenden Beschreibung erzeugen. Dies vereinfacht die Erstellung eines solchen Digitalen Zwillings gegenüber den aus dem Stand der Technik bekannten Methoden und Verfahren. Weiterhin ermöglicht es die Erstellung eines Digitalen Zwillings für eine Vorrichtung bzw. Anlage, ohne dass vorher schon digitale Modelle bzw. digitale Zwillinge für Komponenten der Vorrichtung bzw. Anlage vorliegen müssen.

Die Erstellung des Digitalen Zwillings kann beispielsweise eine geeignete Anordnung und/oder Speicherung der Informationen umfassen, die in einem oder mehreren der Verfahrensschritten a.), a1.), aa.), aa1.), b.), b1.), b2.), bb.), bb1.), bb2.), bbb.) gemäß den Patentansprüchen und/oder der vorliegenden Beschreibung identifiziert beziehungsweise erzeugt wurden. Weiterhin kann die Erstellung des Digitalen Zwillings auch aus einer entsprechenden Anordnung und oder Speicherung dieser Informationen bestehen.

Diese Anordnung und/oder Speicherung der identifizierten bzw. erzeugten Daten kann beispielsweise als Datenbank in einer Digitale-Zwilling-Datenbank erfolgen, beziehungsweise eine solche Digitale-Zwilling-Datenbank umfassen, und in einem beliebigen Datenbank-Format vorliegen. Solche Datenbank-Formate können z.B. sogenannte relationale Datenbankformate oder SQL-Datenbankformate oder auch sogenannte NoSQL-Datenbankformate oder Knowledge-Graph-Datenformate sein.

Dabei können verschiedene Teile des Digitalen Zwillings auch in verschiedenen der oben genannten Formate abgespeichert sein.

Weiterhin kann der Digitale Zwilling auch weitere Teile umfassen, die in keinem der oben genannten Datenbankformate vorliegen.

Im Gegensatz zu den o.g. relationalen Datenbanken (z.B. SQL-Datenbanken) bezeichnet "NoSQL" (Englisch für: Not only SQL) Datenbanken einen nicht-relationalen Ansatz. Unter NoSQL-Datenbanken werden im Zusammenhang mit der vorliegenden Beschreibung solche Datenbanken verstanden, welche den genannten nicht-relationalen Ansatz verfolgen. Insbesondere werden unter NoSQL-Datenbanken im Rahmen der vorliegenden Beschreibung Dokument-, Graph-, Objekt-, Attribut-Wert-Paar- und/oder Spalten-orientierte Datenbanken verstanden.

Aktuelle NoSQL-Datenbanken verzichten in der Regel auf starre Schemata der Tabellen, wie sie beispielsweise ihre relationalen Pendants aufweisen. Als schemafreie Datenbanken setzen sie auf flexiblere Techniken, um festzulegen, wie Daten gespeichert werden. Der Name NoSQL lässt sich auf den Einsatz anderer Protokolle für die Kommunikation mit den Clients als das SQL-Protokoll zurückführen.

Eine NoSQL-Datenbank im Zusammenhang mit der vorliegenden Beschreibung kann z.B. als eine Dokument-orientierte Datenbank, eine Graph-orientierte Datenbank, ein Knowledge-Graph, eine verteilte ACID-Datenbank, eine Key-Value-Datenbank, eine Attribut-Wertpaar-orientierte Datenbank, eine Multivalue-Datenbank, eine Objekt-orientierte Datenbank und/oder als eine Spalten-orientierte Datenbank oder eine Kombination oder Weiterentwicklung solcher Datenbanken eingerichtet und ausgestaltet sein.

Im Digitale Zwilling können die Informationen oder Teile der Informationen als relationale Datenbank abgelegt sein oder der Digitale Zwilling kann eine solche Datenbank umfassen. Weiterhin können im Digitalen Zwilling die Informationen oder Teile der Informationen auch als eine NoSQL-Datenbank, ein oder mehrere Knowledge-Graphen, eine nicht-relationale Datenbank, eine OWL-Datenbank, eine RDF-Datenbank und/oder eine SPARQL als Absprachefrage verwendenden Datenbank abgelegt sein oder der Digitale Zwilling kann derartige Datenbanken umfassen.

Weiterhin können für die Erstellung des Digitalen Zwillings zu den so identifizierten Komponenten beispielsweise aus einer entsprechenden Simulation-Datenbank zugehörige Komponenten-Simulationen ausgewählt werden. Die Identifikation der jeweiligen Komponenten bzw. die Auswahl der entsprechenden Simulationen kann dabei beispielsweise anhand der zugeordneten Komponenten-Typ-Bezeichnungen bzw. von Komponenten-ID-Information-Bezeichnungen erfolgen. Die ausgewählten Komponenten-Simulationen können dann weiterhin mit in den entsprechenden zugehörigen Komponenten-Datenclustern enthaltenen Daten aus der ersten Datenquelle bzw. dem Automatisierungs-Engineering entsprechend parametriert werden.

Unter Verwendung von beispielsweise ebenfalls identifizierten Beziehungsdaten zwischen den verschiedenen Komponenten-Datenclustern können dann die ausgewählten Komponenten-Simulationen weiterhin mit aus dem Stand der Technik bekannten Verfahren zu einer Simulation der Vorrichtung oder Anlage bzw. Teilen davon kombiniert werden. Auch innerhalb der jeweiligen Datencluster enthaltenen Daten können im Rahmen einer derartigen Erstellung einer Simulation der Vorrichtung oder Anlage verwendet werden. Eine solche Simulation kann dann beispielsweise ebenfalls einen digitalen Zwilling im Sinne der vorliegenden Erfindung bilden oder auch Teil eines solchen Digitalen Zwillings sein.

Ein gemäß der vorliegenden Beschreibung erstellter Digitaler Zwilling kann beispielsweise von Softwaresystemen verwendet werden oder in diese integriert sein. Solche Softwaresysteme können beispielsweise Systeme zur Planung, zum Entwurf, zur Simulation, zur Projektierung und/oder zum Einrichten von Vorrichtungen oder Anlagen ausgebildet und eingerichtet sein. Weiterhin kann ein solches Softwaresystem auch zur Planung, zum Entwurf, zur Simulation, zur Projektierung und/oder zum Einrichten der Automatisierung für eine Vorrichtung oder Anlage ausgebildet und eingerichtet sein.

Auf diese Weise können die Daten des Digitalen Zwillings sowohl im Rahmen der Planung und des Einrichtens der Vorrichtung oder Anlage gemäß der vorliegenden Beschreibung Verwendung finden als auch bei der Planung und dem Einrichten zukünftiger Vorrichtungen oder Anlagen.

Weitere Möglichkeiten zur Verwendung eines Digitalen Zwillings gemäß der vorliegenden Beschreibung sind in den Patentansprüchen sowie den nachfolgenden Teilen der Beschreibung dargestellt und im Detail erläutert.

Die Vorrichtung oder Anlage kann beispielsweise als eine Maschine, ein Gerät, ein Roboter, eine Produktionsanlage oder eine vergleichbare Einrichtung ausgebildet und eingerichtet sein oder auch derartige Teile als Komponenten umfassen. Solch eine Vorrichtung oder Anlage kann z.B. ein oder mehrere Komponenten, Antriebe, Sensoren, Maschinen, Geräte, Kommunikationseinrichtungen, Steuereinrichtungen oder Ähnliches umfassen.

Komponenten einer Anlage oder Vorrichtung können beispielsweise sein: funktional und/oder räumlich zusammengehörende Anlagenteile, Segmente, Gruppierungen, Komponenten, Aktoren, Sensoren (z.B. Roboter, Transporteinrichtungen bzw. bestimmte Typen davon (Transportband, Hängebahn, ... .), Motoren, Umrichter, Sensoren verschiedenster Typen (z.B. Temperatur-, Druck-, Berührungs-, Durchflusssensoren), Maschinen verschiedenster Typen (z.B. Werkzeugmaschinen, Pressen, Extruder, Spritzgußmaschinen) und deren Unter-Komponenten.

Unter Komponenten-Typen von in der Anlage oder Vorrichtung enthaltenen Komponenten werden beispielsweise Namen, Bezeichnungen und/oder eine Beschreibungen bestimmter Typen oder bestimmten Typ-Kategorien dieser Komponenten verstanden. Solche Komponenten-Typen können beispielsweise eine Linie, ein Roboter, eine Zelle, ein Aktor, ein Motor, ein Sensor, ein Temperatursensor, ein Umrichter, eine Transporteinrichtung und/oder vergleichbare Komponenten-Typen sein.

Unter Komponenten-ID-Informationen werden dagegen solche Informationen verstanden, die ganz konkrete Instanzen von in der Anlage oder Vorrichtung vorhandenen Komponenten kennzeichnen und/oder identifizieren. Solche Komponenten-ID-Informationen können z.B. Produktnamen, Bestellnummern, Seriennummern, Typ-Kennzeichen oder ähnliche eine bestimmte Komponente kennzeichnende - insbesondere die Komponente eindeutig kennzeichnende - Informationen sein.

Komponenten-Cluster Gemäß der vorliegenden Beschreibung können z.B. Komponenten-Typ-Cluster sein. Charakterisierend für einen bestimmten Komponenten-Typ-Cluster ist, dass in ihm Automatisierungs-Engineeringdaten bzw. Daten der ersten Datenquelle, oder auch Daten weiterer Datenquellen, enthalten sind, welche einem bestimmten Komponenten-Typ zugeordnet sind. Eine entsprechende Komponenten-Typ-Bezeichnung für einen solchen Cluster kann beispielsweise ein Name des Komponenten-Typs, eine Kurzbeschreibung oder auch ein entsprechender Code für diesen Komponenten-Typ sein. Beispiele für entsprechende Komponenten-Typen oder auch Komponenten-Typ-Bezeichnungen können beispielsweise sein: Roboter, Transporteinrichtung, Linie, Montageeinrichtung, Motor, Umrichter, Sensor, Controller, Switch.

Komponenten-Cluster gemäß der vorliegenden Beschreibung können weiterhin z.B. Komponenten-ID-Informations-Cluster sein. Charakterisierend für einen bestimmten Komponenten-ID-Informations-Cluster ist, dass in ihm Automatisierungs-Engineeringdaten bzw. Daten der ersten Datenquelle, oder auch Daten weiterer Datenquellen, enthalten sind, welche einer bestimmten Komponenten-Instanz, die beispielsweise durch eine bestimmte ID-Information (z.B. Seriennummer, Produktname) charakterisiert wird, zugeordnet sind. Insbesondere können Komponenten-ID-Informations-Cluster solche der o.g. Cluster sein, welche einer bestimmten Komponenten-Instanz, die beispielsweise durch einen bestimmte ID-Information eindeutig charakterisiert ist, zugeordnet sind. Eine entsprechende Komponenten-ID-Informations-Bezeichnung für einen solchen Cluster kann beispielsweise die genannte ID-Information sein. Beispiele für entsprechende ID-Informationen können z.B. konkrete Seriennummern, Bestellnummern, Markennamen (z.B. spezifisch für ein Produkt (Simatic S7-1512) oder allgemein für eine Produktfamilie (S7-Steuerung, Scalance Switch), Modell-Typ-Bezeichnungen, oder auch allg. Modellbezeichnungen sein.

Der Unterschied von Komponenten-Typen und Komponenten-ID-Informationen im Sinne der vorliegenden Beschreibung soll mit dem nachfolgenden Beispiel noch etwas verdeutlicht werden. In diesem Beispiel befinden sich in einer bestimmten Vorrichtung zwei Motoren mit unterschiedlichen Seriennummern. In diesem Beispiel könnten im Rahmen eines entsprechenden Clustering nach Komponenten-Typen beispielsweise die diesen Motoren zugeordneten Automatisierungs-Engineeringdaten einem dem Komponenten-Typ "Motor" zugeordneten Datencluster zugeordnet sein. Im Rahmen eines alternativen oder zusätzlichen Clustering nach Komponenten-ID-Informationen könnten dann weiterhin die Automatisierungs-Engineeringdaten zu dem Motor mit der ersten Seriennummer in einem dieser Seriennummer zugeordneten Komponenten-ID-Informations-Datencluster eingeordnet sein, während die Automatisierungs-Engineeringdaten zum Motor mit der zweiten Seriennummer in einem dieser zweiten Seriennummer zugeordneten Komponenten-ID-Informations-Datencluster eingeordnet sein könnten.

Das Identifizieren der Komponenten-Datencluster kann z.B. durch Anwendung eines Clustering-Verfahrens auf die Daten der ersten Datenquelle bzw. die Automatisierungs-Engineeringdaten zur Identifikation der Komponenten-Datenclustern innerhalb der ersten Datenquelle bzw. der Automatisierungs-Engineering-daten erfolgen.

Dabei kann es sich bei der Anwendung des Clustering-Verfahrens beispielsweise um ein automatisiertes Clustering-Verfahren handeln. Dabei kann beispielsweise mithilfe einer entsprechenden Software, bei deren Ablauf das Clustering-Verfahren automatisch ausgeführt wird, ein Clustering der Daten der ersten Datenquelle bzw. der Automatisierungs-Engineeringdaten erfolgen. Dabei können im Rahmen der Software beispielsweise einer oder auch mehrere Clustering-Algorithmen realisiert sein.

Weiterhin kann es sich beispielsweise bei der Anwendung des Clustering-Verfahrens auch um ein halb-automatisiertes Clustering-Verfahren handeln. Dies kann beispielsweise vermittels einer entsprechenden Software realisiert werden, bei deren Ablauf das Clustering-Verfahren halb-automatisch ausgeführt wird. Dies kann beispielsweise derart realisiert sein, dass beim Ablauf des Clustering Verfahrens die Software zu gewissen Zeitpunkten entsprechende Nutzereingaben erwartet.

Ganz allgemein werden als Cluster Gruppen von ähnlichen Datenpunkten oder Datengruppen bezeichnet, die durch eine Clusteranalyse gebildet werden.

Unter einer Clusteranalyse bzw. einem Clustering wird eine Technik des sogenannten "machine learning" verstanden, bei der Daten oder Datenpunkte in sogenannte "Cluster" gruppiert werden. Bei einem Satz von Daten bzw. Datenpunkten kann man z.B. ein Clusteranalyse-Verfahren, ein Clustering-Verfahren oder einen Clustering-Algorithmus verwenden, um jedes Datum bzw. jeden Datenpunkt in eine bestimmte Gruppe zu klassifizieren. Eine solche Gruppe wird dann als "Cluster" bezeichnet. Dabei weisen Daten bzw. Datenpunkte, die sich in derselben Gruppe (also demselben Cluster) befinden, ähnliche Eigenschaften und/oder Merkmale auf, während Datenpunkte in verschiedenen Gruppen sehr unterschiedliche Eigenschaften und/oder Merkmale aufweisen.

Mathematisch bestehen Cluster aus Objekten, die zueinander eine geringere Distanz (oder umgekehrt: höhere Ähnlichkeit) aufweisen als zu den Objekten anderer Cluster. Man kann entsprechende Clustering-Verfahren beispielsweise nach den verwendeten Distanz- bzw. Proximitätsmaßen zwischen Objekten der Cluster, aber auch zwischen ganzen Clustern, unterscheiden. Weiterhin bzw. alternativ kann man entsprechende Clustering-Verfahren auch nach jeweiligen Berechnungsvorschriften für solche Distanzmaße unterscheiden.

Unter Clusteranalysen bzw. Clustering-Verfahren sind Verfahren zur Entdeckung von Ähnlichkeitsstrukturen in großen Datenbeständen zu verstehen. Dazu zählen beispielsweise Methoden des überwachten beziehungsweise unüberwachten maschinellen Lernens, wie k-means oder DBSCAN. Das Ergebnis der Clusteranalyse sind Cluster. Der Vorteil ist hier, dass die Analyse der Daten vollautomatisiert durchgeführt werden kann. Überwachtes Lernen würde sich anbieten, wenn bereits Daten in kontextualisierter Form vorliegen. Algorithmen des unüberwachten Lernens ermöglichen es, auch Ähnlichkeitsstrukturen in Daten zu finden, die noch nicht kontextualisiert sind. Die gefundenen Cluster können hier von einem Experten auf dem Gebiet des Automatisierungssystems analysiert und komfortabel Agenten aus den gefundenen Clustern generiert werden.

Die Anwendung des Clustering-Verfahrens kann zum Beispiel die Anwendung eines Clustering-Algorithmus oder auch die Anwendung mehrerer Clustering-Algorithmen, beispielsweise nacheinander, umfassen. Solche Clustering-Algorithmen können beispielsweise ein sogenanntes "K-Means Clustering", ein sogenanntes "Mean-Shift Clustering", ein sogenanntes "Expectation-Maximization (EM) Clustering using Gaussian Mixture Models(GMM)", ein sogenanntes "Agglomerative Hierarchical Clustering" und/oder ein sogenanntes "Density-Based Spatial Clustering", z.B. ein Density-Based Spatial Clustering of Applications with Noise(DBSCAN)" sein. Weitere Beispiele für Clustering-Algorithmen können z.B. nachfolgende Algorithmen sein: "Mini Batch K-Means", "Affinity Propagation", "Mean Shift", "Spectral Clustering", "Ward", "Agglomeration Clustering", "Birch", "Gaussian Mixture".

Bei Clusteranalysen bzw. Clustering-Verfahren ist es notwendig, Abstände bzw. (Un-)ähnlichkeiten zwischen zwei Objekten, einem Objekt und einem Cluster oder zwei Clustern zu berechnen. Je nach Art der zugrunde liegenden Objekte, Daten oder Variablen kommen verschiedene Distanzmaße zum Einsatz. Bei sogenannten kategorialen Objekten, Daten oder Variablen (i.d.R. Daten, die bestimmten Kategorien oder Klassen zugeordnet oder zuordenbar sind) werden häufig Ähnlichkeitsmaße benutzt, d.h. ein Ähnlichkeitswert von Null bedeutet, dass die Objekte eine maximale Unähnlichkeit haben. Diese können in Distanzmaße umgewandelt werden. Bei numerischen oder metrischen Variablen werden Distanzmaße benutzt, d.h. ein Distanzmaß von Null bedeutet, dass die Objekte einen Abstand von Null, also maximale Ähnlichkeit haben. Weiterhin gibt entsprechende Distanz- oder Ähnlichkeitsmaße auch für weitere Arten von Variablen, wie beispielsweise binäre Daten, Text-Daten oder Zeit-Serien-Daten.

Bei der Durchführung des Clustering-Verfahrens, bzw. eines Clustering-Algorithmus gemäß der vorliegenden Beschreibung, können dabei, je nach Art der verwendeten Datenkategorien der Daten der ersten Datenquelle bzw. der Automatisierungs-Engineeringdaten, die verschiedensten fachüblichen Distanzmaße oder Ähnlichkeitsmaße für numerische Daten, binäre Daten, String-Daten, kategorische Daten, Text-Daten, und/oder Zeit-Serien-Daten verwendet werden.

Ein Clustering-Verfahren gemäß der vorliegenden Beschreibung kann dabei wie vorstehend erläutert ausgestaltet und eingerichtet sein. Dabei werden Techniken zur Identifikation von Ähnlichkeiten der Daten innerhalb der betrachteten Datensammlung verwendet. Das Clustering-Verfahren kann weiterhin beispielsweise die Anwendung eines gewissen Clustering-Algorithmus umfassen. Zudem kann das Clustering-Verfahren auch mehrstufig ausgebildet sein und die Verwendung von zwei oder mehr entsprechenden Clustering-Algorithmen (beispielsweise sequentiell) umfassen.

Beispiele für solche Clustering-Verfahren oder -Algorithmen sind:
- sogenanntes "unsupervised clustering",
- das sogenannte K-means Clustering-Verfahren,
- Verfahren aus der Bildbearbeitung zur Erkennung von zusammengehörenden Strukturen innerhalb vorliegender Bilder oder Bildinformationen
- eine Kombination der oben vorstehend genannten Verfahren.

Dabei kann das verwendete Clustering-Verfahren den Daten-Typen innerhalb der vorliegenden Datensammlung angepasst ausgewählt werden.

Verfahrensschritt a.) kann gegebenenfalls auch mehrfach hintereinander ausgeführt werden, indem das erste Clustering-Verfahren jeweils auf die Ergebnisse des vorhergehenden Clustering-Schritts angewendet werden. Gegebenenfalls kann zwischen den Clustering-Schritten auch eine weitere Bearbeitung bzw. Verarbeitung der Ergebnisse des vorherigen Clustering-Schritts erfolgen.

Weiterhin kann auch die Sequenz der Verfahrensschritte a.) und b.) mehrfach hintereinander ausgeführt werden, indem nach der Vergabe entsprechender Bezeichnungen für die identifizierten Cluster erneut ein Clustering-Verfahren auf diese identifizierten Cluster angewendet wird.

Die Identifikation der Komponenten-Datencluster kann beispielsweise durch Anwendung eines Clustering-Verfahrens auf die erste Datenquelle bzw. die Automatisierungs-Engineeringdaten erfolgen. Weiterhin kann die Identifikation der Komponenten-Datencluster auch unter Verwendung einer entsprechenden Zuordnung-Datenbank, beispielsweise einer Clusterzuordnung-Datenbank, erfolgen, wobei eine solche Datenbank beispielsweise bereits zu früheren Zeitpunkten identifizierte Zuordnungen von Automatisierungs-Engineeringdaten bzw. Daten der ersten Datenquelle zu bestimmten Clustern umfasst. Zudem kann die Identifikation der Komponenten-Datencluster auch unter Verwendung eines entsprechenden Zuordnungs-neuronalen-Netzes, beispielsweise eines Clusterzuordnungs-neuronalen-Netzes erfolgen. Ein solches Clusterzuordnung-neuronales-Netz kann beispielsweise unter Verwendung bereits ermittelter Zuordnungen von Automatisierungs-Engineeringdaten bzw. Daten der ersten Datenquelle zu Clustern trainiert worden sein.

Die Identifikation der Komponenten-Datencluster kann beispielsweise auch mehrere der vorstehend genannten Methoden parallel oder auch sequenziell umfassen.

Automatisierung-Engineering-Daten sind beispielsweise Daten, wie sie zur Automatisierung und/oder Steuerung der Anlage oder Vorrichtung erstellt und/oder vorgesehen sind. Solche Daten werden beispielsweise in sogenannten Engineering-Systemen erstellt, die dazu dienen, beispielsweise entsprechende Steuerprogramme zu erstellen und die Komponenten der Anlage oder Vorrichtung und auch der entsprechenden Steuerungen entsprechend zu parametrieren. Ein Beispiel für ein solches Engineering-System ist beispielsweise eine am Markt erhältliche Software mit dem Produktnamen "TIA-Portal".

Dabei können Automatisierungs-Engineeringdaten verschiedenste Daten umfassen, beispielsweise ein oder mehrere Steuerprogramme, Variablen, sogenannte "Tags", Programmbausteine, Funktionsbausteine, Datenbausteine, Programmblöcke, sogenannte "Programm Organizational Units" (POU), eine Aufstellung verwendeter Datentypen, Definitionen Benutzer-definierter Datentypen ("User Defined Type" (UDT)), ID-Informationen zu Komponenten, Konfigurationsdaten, Aufrufinformationen für Programmelemente, Kommentare, Steuerprogramme, Teile von Steuerprogrammen und/oder vergleichbare Daten.

Datenkategorien der Automatisierungs-Engineeringdaten können beispielsweise sein:
- Variablen oder sogenannte "Tags",
- Programmbausteine, Funktionsbausteine, Datenbausteine, Programmblöcken oder sogenannter POUs (POU: Program Organizationial Unit),
- Benutzerdefinierte Datentypen (z.B. UDTs),
- Informationen zu Komponenten der Vorrichtung oder Anlage,
- Aufrufinformationen für Programmbausteine bzw. POUs,
- Kommentare
oder vergleichbare Datenkategorien.

Dabei können Daten einer bestimmten Datenkategorie innerhalb der Automatisierung-Engineeringdaten beispielsweise zu einer entsprechenden Liste gesammelt, oder auch in einer Datenbank oder vergleichbaren Struktur einander zugeordnet sein. Das Zusammenstellen von Daten jeweils einer Datenkategorie aus den Automatisierung-Engineeringdaten kann auch in Vorbereitung auf die Durchführung des Verfahrens gemäß der vorliegenden Beschreibung erstellt werden. Ein solches Zusammenstellen von Daten kann beispielsweise erfolgen, um die entsprechenden Daten aus einem entsprechenden Automatisierung-Engineering-system danach zu exportieren und danach im Rahmen der Durchführung eines Verfahrens gemäß der vorliegenden Beschreibung zu verwenden.

Die einer jeweiligen der genannten Datenkategorien zugehörigen Daten können beispielsweise auch bereits als Listen, Tabellen und/oder Datenbankstrukturen innerhalb der Automatisierungs-Engineeringdaten vorliegen oder als solche von einem entsprechenden Engineering System zur Verfügung gestellt werden. Beispielsweise können Daten der entsprechenden oben genannten Datenkategorien als Tag- oder Variablen-Liste, als POU-Liste, Datatyp-Liste, Hardware-Komponenten-Liste, Aufruf-Struktur und/oder UDT-Liste vorliegen oder zur Verfügung gestellt werden.

Dabei können die einzelnen Daten innerhalb der Datenkategorien der Automatisierungs-Engineeringdaten weiterhin jeweils Meta-Informationen zu den jeweiligen Daten umfassen. Solche Metainformationen können beispielsweise Namen, Kommentare, Referenzierungen, physikalische Einheiten, ID-Informationen (wie beispielsweise Typen-Namen, Seriennummern, ID-Nummern, Funktions-Bezeichnungen, Funktionalität, o. ä.) oder sonstige ergänzende Informationen bezüglich der jeweiligen Daten sein

Dabei können für ein auf Automatisierung-Engineeringdaten, angewendetes Clustering-Verfahren, bzw. einen angewendeten Clustering-Algorithmus, beispielsweise folgende für die jeweiligen Datenkategorien charakteristischen Informationen herangezogen werden:
- den jeweiligen Daten zugeordnete Namen oder Bezeichnungen (z.B. Namen oder Bezeichnungen von Variablen, Tags, Programmbausteinen, Funktionsbausteinen, Datenbausteine, UDTs,...), oder
- den jeweiligen Daten zugeordnete Text-Information (z.B. Meta-Informationen, Kommentare oder Beschreibungs-Informationen zu Variablen, Tags, Programmbausteinen, Funktionsbausteinen, Datenbausteine, UDTs, Anlagen-/Vorrichtungs-Teilen oder -Komponenten, ...).

Weitere Informationen, die ebenfalls im Rahmen eines Clustering-Verfahrens oder -Algorithmus zu entsprechenden der genannten Datenkategorien herangezogen werden können, sind z.B.:
- Datentypen von Variablen, Tags oder z.B. auch von einem Daten-, Funktions- oder Programmbaustein verwendete Datentypen;
- Zahl der Ein- und/oder Ausgänge eines Daten-, Funktions- oder Programmbausteins oder auch Namen/Bezeichnungen der Ein- und/oder Ausgänge solcher Bausteine;
- Zahl, Namen oder Bezeichnungen von von einem bestimmten Daten-, Funktions- oder Programmbaustein aufgerufenen weiteren derartiger Bausteine;
- weitere vergleichbare Informationen zu den Datenkategorien von Automatisierungs-Engineeringdaten gemäß der vorliegenden Beschreibung.

Entsprechendes gilt nicht nur für Automatisierungs-Engineeringdaten bzw. Daten der ersten Datenquelle, sondern auch für jegliche vergleichbare Daten gemäß der vorliegenden Beschreibung.

Die Zuweisung der Komponenten-Typ-Bezeichnungen bzw. Komponenten-ID-Information-Bezeichnungen zu den jeweiligen identifizierten Komponenten-Datenclustern kann beispielsweise manuell, automatisiert oder auch teilautomatisiert erfolgen.

Bei einer manuellen Zuweisung kann beispielsweise einem Nutzer zu jedem der Datencluster auf einem Bildschirm die entsprechend zugeordneten Automatisierungs-Engineeringdaten bzw. die entsprechenden Daten aus der ersten oder einer weiteren Datenquelle gemäß der vorliegenden Beschreibung, angezeigt werden. Insbesondere können auch Metainformationen aus den genannten Datenquellen zu diesen Daten angezeigt werden. Diese Daten können dann von einem Nutzer zur Identifikation eines entsprechenden Komponenten-Typs bzw. einer Komponenten-ID-Information Bezeichnung herangezogen werden.

Die Zuweisung der Komponenten-Typ-Bezeichnung bzw. der Komponenten-ID Information Bezeichnung kann beispielsweise auch automatisiert erfolgen. Hierfür können beispielsweise eine Datenbank und/oder ein neuronales Netz vorgesehen sein. Dies kann zum Beispiel eine Datenbank gemäß der vorliegenden Beschreibung sein, in welcher die Ergebnisse von bereits in der Vergangenheit durchgeführten Clustering Schritten gemäß der vorliegenden Beschreibung, die Ergebnisse des zuweisen von entsprechenden Bezeichnungen zu Clustern gemäß der vorliegenden Beschreibung sowie identifizierte Beziehungsinformationen gemäß der vorliegenden Beschreibung gespeichert sind. Weiterhin kann dies auch ein neuronales Netz gemäß der vorliegenden Beschreibung sein, welches mit den Ergebnissen von früheren Clustering-Schritten gemäß der vorliegenden Beschreibung, Ergebnissen von Bezeichnung-Zuweisung-Schritten gemäß der vorliegenden Beschreibung oder auch Beziehungs-Informationen gemäß der vorliegenden Beschreibung trainiert wurde.

Im Rahmen der automatisierten Zuweisung der Komponenten-Typ-Bezeichnungen bzw. Komponenten-ID-Information-Bezeichnung können beispielsweise entsprechende Cluster-Zusammensetzungen in der Datenbank identifiziert werden bzw. in das entsprechende neuronale Netz eingegeben werden. Anhand der Datenbank kann dann beispielsweise eine entsprechende Bezeichnung für den entsprechenden Cluster ermittelt werden. Bei Verwendung des neuronalen Netzes kann eine entsprechende Bezeichnung beispielsweise eine Ausgabe Informationen des neuronalen Netzes nach Eingabe von entsprechenden dem Cluster zugeordneten Daten sein.

Für eine automatisierte Zuweisung der Komponenten-Typ-Bezeichnungen bzw. Komponenten-ID-Information-Bezeichnung können beispielsweise auch Metainformationen aus den genannten Datenquellen zu diesen Daten automatisch analysiert werden und dann automatisch daraus eine entsprechende Bezeichnung ausgewählt und/oder erstellt werden.

In einem teilautomatisierten Modus der Zuweisung von entsprechenden Bezeichnungen zu Clustern können auch automatisch Vorschläge für solche Zuweisungen erstellt werden, beispielsweise auf eine der vorstehend genannten Arten. Diese Vorschläge können dann einem Nutzer angezeigt werden. Durch Auswahl eines der Vorschläge - ggf. und einer Anpassung des entsprechenden Vorschlags durch den Nutzer - kann der ausgewählte Vorschlag dann zur Identifikation eines entsprechenden Komponenten-Typs bzw. einer Komponenten-ID-Information Bezeichnung zugewiesen werden.

In einer vorteilhaften Ausgestaltung kann das Verfahren derart ausgebildet und eingerichtet sein, dass nachfolgend Verfahrensschritt a.) und vor Verfahrensschritt c.) die nachfolgenden Verfahrensschritte durchgeführt werden:
a1.) Identifizieren von Sub-Komponenten-Datenclustern innerhalb der identifizierten Komponenten-Datencluster, wobei die Sub-Komponenten-Datencluster Sub-Komponenten-Typen oder Sub-Komponenten-ID-Informationen bezüglich der Anlage oder Vorrichtung zuordenbar oder zugeordneten sind,
   und
   dass nachfolgend Verfahrensschritt a1.) und vor Verfahrensschritt c.) der nachfolgende Verfahrensschritt durchgeführt wird:

   b1.) Zuweisung jeweils einer Sub-Komponenten-Typ-Bezeichnung oder jeweils einer Sub-Komponenten-ID-Informations-Bezeichnung zu mindestens einem der identifizierten Sub-Komponenten-Datencluster.

Ein derart ausgestaltetes Verfahren ermöglicht durch die Identifikation und Bezeichnung von Sub-Komponenten-Datencluster die Erzeugung eines hierarchischen Cluster-Modells der Vorrichtung oder Anlage welche die Erstellung eines Digitalen Zwillings für diese Vorrichtung oder Anlage weiter vereinfacht. Insbesondere wird die Erstellung des Digitalen Zwillings dadurch vereinfacht, dass durch eine solche Hierarchie eine Komponenten- und/oder Sub-Komponenten-Struktur der Vorrichtung bzw. Anlage aus eine Cluster-Struktur der Automatisierungs-Engineeringdaten bzw. der ersten Datenquelle für diese Vorrichtung oder Anlage übertragen wird. Es entsteht auf diese Weise also eine Cluster-Struktur, die einer Komponenten- und/oder Sub-Komponenten-Struktur der Vorrichtung oder Anlage nahe kommt oder sogar entspricht.

Verfahrensschritts a1.) richtet sich dabei auf die Identifikation von einem oder mehreren Sub-Komponenten-Datenclustern innerhalb der bereits identifizierten Komponenten-Datencluster. Innerhalb eines bestimmten Komponenten-Datencluster identifizierte Sub-Komponenten-Datencluster können dabei entsprechenden Unterkomponenten derjenigen Komponente entsprechen, welcher der Komponenten-Datencluster zugeordnet ist.

Bei Ausführung der Verfahrensschritte a1.) sowie gegebenenfalls b1.) kann beispielsweise ein hierarchisches System von Clustern gebildet werden. Im Rahmen von Clustering-Schritten zur Identifikation von Komponenten-Typ-Datenclustern könnte beispielsweise in einem ersten Clusteringschritt ein Cluster für den Komponenten-Typ "Roboter" identifiziert werden. In einem weiteren Clustering-Schritt zur Identifikation von Sub-Komponenten-Typ-Datenclustern könnte dann beispielsweise innerhalb dieses Clusters ein Sub-Cluster für eine Teilkomponente "Roboterarm" identifiziert werden. Wird beispielsweise ein weiterer Clustering-Schritt zur Identifikation von Sub-Komponenten-Typ-Datenclustern wiederum auf diesen Cluster für den "Roboterarm" angewendet kann beispielsweise innerhalb dieses Datenclusters ein Cluster identifiziert werden, der dem Komponenten-Typ "Motor" entspricht.

Auf diese Weise kann eine hierarchische Cluster-Struktur erzeugt werden, welche einer hierarchischen Komponentenstruktur der Vorrichtung oder Anlage entspricht. Weitere Beispiele für solche Komponenten-bzw. Cluster-Hierarchien sind beispielsweise analoge "Teile-von" Hierarchien wie: "Linie - Zelle - Roboter - Motor".

Entsprechende Hierarchien können auch innerhalb von Komponenten-ID-Information-Clustern erzeugt werden. So kann beispielsweise ein Cluster, der allgemein Robotern eines bestimmten Herstellers zugeordnet ist, Unter-Cluster enthalten, die verschiedenen Roboter-Typen dieses Herstellers zugeordnet sind. Diese Roboter-Typen-Unter-Cluster können dann wiederum in weitere Sub-Cluster untergliedert sein, die jeweils verschiedenen den jeweiligen Typen zugeordneten Robotermodellen dieses Herstellers zugeordnet sein können.

Unter der Formulierung "nachfolgend Verfahrensschritt" wird im Rahmen der vorliegenden Beschreibung verstanden, dass der der entsprechende Verfahrensschritte irgendwann nach dem genannten Verfahrensschritt ausgeführt wird, und diesem nicht unmittelbar folgen muss. Er kann diesem aber auch unmittelbar folgen.

Das Identifizieren der Sub-Komponenten-Datencluster gemäß Verfahrensschritt a1.) kann beispielsweise analog dem identifizieren der Komponenten Datencluster gemäß Verfahrensschritt a.) gemäß den Patentansprüchen und/oder der vorliegenden Beschreibung erfolgen.

Weiterhin können die Sub-Komponenten-Datencluster, Sub-Komponenten-Typen und/oder die Sub-Komponenten-ID-Informationen entsprechend der Komponenten-Datencluster, Komponenten-Typen und/oder Komponenten-ID-Informationen gemäß der vorliegenden Beschreibung ausgestaltet und eingerichtet sein.

Auch die Zuweisung der jeweiligen Sub-Komponenten-Typbezeichnungen oder Sub-Komponenten-ID-Information-Bezeichnungen zu den identifizierten Sub-Komponenten-Datenclustern gemäß Verfahrensschritt b1.) kann entsprechend der Zuweisung von Komponenten-Typ-Bezeichnungen oder Komponenten-ID-Information-Bezeichnungen zu Komponenten-Datenclustern gemäß Verfahrensschritt b.) und/oder der vorliegenden Beschreibung erfolgen.

Das Identifizieren der Sub-Komponenten-Datencluster kann beispielsweise mit einem zweiten Clustering Verfahren oder auch dem Clustering Verfahren gemäß Anspruch 1 erfolgen. Weiterhin kann das Identifizieren der Sub-Komponenten-Datencluster auch unter Verwendung einer Clusterzuordnungs-Datenbank oder eines Clusterzuordnungs-Neuronalen-Netzes gemäß der vorliegenden Beschreibung erfolgen. Das Identifizieren der sub-Komponenten-Datencluster kann auch mittels einer Kombination der vorstehend genannten Methoden erfolgen.

Dabei kann die die Clusterzuordnungs-Datenbank beispielsweise derart eingerichtet und ausgestaltet sein, dass beispielsweise bereits in der Vergangenheit ermittelte Zuordnungen von Cluster-Daten zu Sub-Komponenten-Datenclustern dort gespeichert sind. Weiterhin kann auch ein entsprechendes Clusterzuordnung-Neuronales-Netz mit entsprechend beispielsweise bereits in der Vergangenheit ermittelten Zuordnungen von Sub-Komponenten-Datenclustern zu entsprechenden Cluster-Daten trainiert worden sein.

Das zweite Clustering-Verfahren kann dabei als ein Clustering-Verfahren gemäß der vorliegenden Beschreibung ausgebildet und eingerichtet sein.

Dabei kann beispielsweise nach einem Clustering nach Komponenten-Typen ein Clustering nach Sub-Komponenten-Typen folgen. Weiterhin kann beispielsweise einem Clustering nach Komponenten-ID-Informationen ein Clustering nach Sub-Komponenten-ID-Informationen nachfolgen.

Weiterhin kann beispielsweise einem Clustering nach Komponenten-Typen auch ein Clustering nach Komponenten-ID-Informationen folgen und umgekehrt. Im ersteren Fall kann beispielsweise nachfolgend einem Clustering, welches Engineering-Daten bestimmten Komponenten-Typen zuordnet, ein Clustering nach ID-Informationen innerhalb der jeweiligen Typ-Cluster erfolgen. Auf diese Weise können beispielsweise Engineering-Daten, die beispielsweise einem Cluster für einen Komponenten-Typs zugeordnet sind, danach z.B. unterschiedlichen Komponenten dieses Komponenten-Typs zugeordnet werden.

Das zweite Clustering-Verfahren kann beispielsweise auf die Gesamtheit der in Verfahrensschritts b1.) identifizierten Komponenten-Datencluster angewendet werden. Als Ergebnis des zweiten Clustering-Verfahrens können dann beispielsweise Sub-Komponenten-Datencluster identifiziert werden, wobei beispielsweise einzelne der Komponenten-Datencluster einen oder mehrere der Sub-Komponenten-Datencluster umfassen können.

Dabei kann die Anwendung des zweiten Clustering-Verfahrens auf die Komponenten-Datencluster auch ergeben, dass zumindest bei einem oder mehreren der Komponenten-Datencluster keine weitere Untergliederung mehr möglich ist.

Verfahrensschritt a1.) kann entsprechend auch mehrfach durchgeführt werden. Dadurch ergibt sich eine hierarchische Strukturierung, mittels welcher sich die in Verfahrensschritt a1.) identifizierten Sub-Komponenten weiter in Sub-Sub-Komponenten und Sub-Sub-Sub-Komponenten usw. untergliedern und hierarchisch strukturieren lassen.

Dabei kann für jedes der genannten Clustering-Schritte jeweils ein bislang bereits verwendetes Clustering-Verfahren verwendet werden oder auch ein bislang noch nicht verwendetes Clustering-Verfahren, beispielsweise ein weiteres geeignetes Verfahren gemäß der vorliegenden Beschreibung.

Bei mehrfacher Ausführung von Verfahrensschritt a1.) kann das erste Clustering-Verfahren jeweils auf die Ergebnisse des vorhergehenden Clustering-Schritts angewendet werden. Gegebenenfalls kann zwischen verschiedenen Clustering-Schritten auch eine weitere Bearbeitung bzw. Verarbeitung der Ergebnisse des vorherigen Clustering-Schritts erfolgen.

Wenn Verfahrensschritt a1.) mehrfach ausgeführt wird, kann auch Verfahrensschritt b1.) entsprechend mehrfach ausgeführt werden. Dabei können dann für die entsprechenden Unterkomponenten wiederum Sub-Sub-Komponenten-Bezeichnungen und Sub-Sub-Sub-Komponenten-Bezeichnungen usw. den entsprechenden Clustern zugeordnet werden.

Beispiele für eine solche hierarchische Anordnung kann beispielsweise eine Abfolge von Roboter - Roboterarm - Motor sein, oder auch Linie - Zelle - Roboter/Motor.

Auf diese Weise lässt sich die Anlage oder Vorrichtung bezüglich ihrer zugeordneten Automatisierungsdaten hierarchisch strukturieren und diese hierarchische Struktur auch mit entsprechenden Bezeichnungen versehen.

So kann der unter Verwendung dieser Informationen erstellte digitale Zwilling eine hierarchische Struktur erhalten, die einer hierarchischen Struktur der Anlage oder Vorrichtung entspricht. Dies ermöglicht eine Analyse der Anlage oder Vorrichtung auf den verschiedensten Hierarchieebenen.

Weiterhin kann in diesem Fall vorgesehen sein, dass in Verfahrensschritt c.) der Digitale Zwilling unter Verwendung der Sub-Komponenten-Datencluster erstellt wird.

Ein Verfahren gemäß der vorliegenden Beschreibung kann weiterhin derart ausgebildet und eingerichtet sein, dass nachfolgend Verfahrensschritt a.) und/oder a1.) der nachfolgende Verfahrensschritt durchgeführt wird:
b2.) Identifizieren von Beziehungs-Informationen der gemäß Verfahrensschritt a.) identifizierten Komponenten-Datencluster durch Auswertung der Daten der ersten Datenquelle bzw. der Automatisierungs-Engineeringdaten und/oder Zusatzinformationen zu diesen Daten,
und/oder
Identifizieren von Beziehungs-Informationen zwischen gemäß Verfahrensschritt a1.) identifizierten Sub-Komponenten-Datencluster durch Auswertung der Daten der ersten Datenquelle bzw. der Automatisierungs-Engineeringdaten und/oder Zusatzinformationen zu diesen Daten,
wobei weiterhin in Verfahrensschritt c.) der Digitale Zwilling weiterhin unter Verwendung von dabei identifizierten Beziehungs-Informationen erstellt wird.

Beziehungs-Informationen können beispielsweise Eltern-Kind-Beziehungen zwischen Programmbausteinen, Programm-Komponenten und/oder Programm- bzw. Komponenten-Instanzen sein. Auch Aufruf-Informationen zwischen verschiedenen Programmbausteinen, Programm-Komponenten und/oder Programm-bzw. Programmkomponenten-Instanzen können solche Beziehungs-Informationen sein. Weiterhin können auch "ist-Teil-von"-Beziehungen zwischen Komponenten und ihren jeweiligen Sub-Komponenten Beispiele für Beziehungs-Informationen sein.

Beispielsweise können Beziehungs-Informationen Zusatzinformationen oder Meta-Daten zu einzelnen der verwendeten Daten oder auch identifizierten Clustern entnommen werden. Beziehungs-Informationen können beispielsweise weiterhin auch Cross-Referenzierung oder auch Materialfluss-Informationen entnommen werden.

Zusatzinformationen zu einzelnen oder Gruppen der Daten, die auch als Meta-Daten oder Meta-Informationen zu diesen Daten bezeichnet werden können, können beispielsweise Kommentare, Beschreibungen, physikalische Einheiten, Beziehungs-Beschreibungen zu anderen Daten, Funktionalitäten, Autoren, Berechtigungen oder vergleichbare Informationen sein.

Die Identifikation der Beziehungsinformationen kann beispielsweise durch eine Auswertung beispielsweise von Aufrufinformationen und/oder Aufrufketten von Programmbausteinen, Funktionsbausteinen, Datenbausteinen oder allgemein POUs gemäß der vorliegenden Beschreibung erfolgen. Auf diese Weise können beispielsweise funktionale Zusammenhänge zwischen verschiedenen Clustern, welche verschiedene der oben genannten Bausteine enthalten identifiziert werden.

So kann beispielsweise ein Fall vorliegen, in welchem im Rahmen eines Steuerungsprogramms für eine Anlage ein erster Funktionsbaustein einen zweiten Funktionsbaustein aufruft. Im Rahmen eines Clustering kann sich dann beispielsweise herausstellen, dass der erste Funktionsbaustein einem ersten Anlagen Komponenten-Cluster, und somit einer ersten Anlagenkomponente, zugeordnet ist, und der zweite Funktionsbaustein einem zweiten Anlagen Komponenten-Cluster, und somit einer zweiten Anlagenkomponente. Aufgrund der vorstehend genannten Aufruf-Information kann dann gefolgert werden, dass die zweite Anlagenkomponente der ersten funktional zugeordnet sein muss.

Weiterhin können Beziehungsinformationen beispielsweise anhand von Meta-Informationen zu bestimmten Automatisierungs-Engineeringdaten bzw. Daten der ersten Datenquelle oder auch Kommentaren zu solchen Daten ermittelt werden. Solche Metainformationen bzw. Kommentare können beispielsweise unmittelbar solche Beziehungsinformationen enthalten, wie beispielsweise eine Beschreibung und/oder Darstellung einer funktionalen Zuordnung, einer baulichen Zuordnung und/oder einer räumlichen Zuordnung. Weiterhin können Beziehungsinformationen beispielsweise auch aus Namen oder ID-Informationen ermittelt werden, beispielsweise aus der Übereinstimmung von Teilen von Namen unterschiedlicher Datenelemente derselben Kategorie.

Im Rahmen der vorliegenden Beschreibung bedeutet z.B. im vorgenannten Fall die Formulierung "nachfolgend Verfahrensschritt a.) und/oder a1.)", dass Verfahrensschritt bb2.) beispielsweise nach Verfahrensschritt a.), a1.), b.) und/oder b1.) erfolgen kann. Bezieht sich die Identifikation der Beziehungs-Informationen zumindest unter anderem auf gemäß Verfahrensschritt a1.) identifizierte Sub-Komponenten-Datencluster, so kann Verfahrensschritt bb2.) beispielsweise nach Verfahrensschritt a1.), b.) und/oder b1.) erfolgen.

Ein Verfahren gemäß der vorliegenden Beschreibung kann auch derart ausgebildet und eingerichtet sein, dass eine zweite Datenquellen aus der nachfolgenden Liste von Datenquellen vorliegt:
- MCAD-Daten bezüglich einer mechanischen und/oder räumlichen Planung der Vorrichtung oder Anlage oder Teilen davon, und/oder bezüglich einer mechanischen und/oder räumlichen Ausgestaltung der Vorrichtung oder Anlage oder Teilen davon;
- ECAD-Daten bezüglich einer elektrischen Planung und/oder Stromlaufplanung der Vorrichtung oder Anlage oder Teilen davon,
   und/oder bezüglich einer elektrischen Ausgestaltung und/oder realisierten Stromlaufplanung der Vorrichtung oder Anlage oder Teilen davon;
- Roboter-Daten einer Planung und/oder einer Ausgestaltung von einem oder mehreren Robotern der Vorrichtung oder Anlage;
- Beschreibungs-Daten bezüglich einer Planung und/oder Ausgestaltung der Vorrichtung oder Anlage oder Teilen davon; wobei das Verfahren weiterhin vor dem Erstellen des Digitalen Zwillings gemäß Merkmal c.) zusätzlich die nachfolgenden Verfahrensschritte umfasst:
   aa.) Identifizieren von Komponenten-Datenclustern innerhalb der zweiten Datenquelle, wobei die Komponenten-Datencluster Komponenten-Typen oder Komponenten-ID-Informationen bezüglich der Anlage oder Vorrichtung zuordenbar oder zugeordnet sind,
   bb.) Zuweisen jeweils einer Komponenten-Typ-Bezeichnung oder jeweils einer Komponenten-ID-Informations-Bezeichnung zu mindestens einem der in Verfahrensschritt aa.) identifizierten Komponenten-Datencluster,
   bbb.) Zuordnung der in Verfahrensschritt b.) gemäß Anspruch 1 oder 2 identifizierten Komponenten-Datencluster und/oder Sub-Komponenten-Datencluster der Automatisierungs-Engineeringdaten bzw. der ersten Datenquelle zu den in Verfahrensschritt bb.) identifizierten Komponenten-Datenclustern der Daten der zweiten Datenquelle.

Weiterhin kann beispielsweise nach Ablauf der vorstehend genannten Verfahrensschritte ein weiterer Ablauf dieser Verfahrensschritte unter Verwendung einer weiteren Datenquelle aus der Liste der vorstehend genannten Datenquellen - oder auch einer anderen Datenquelle - erfolgen. Auf diese Weise können durch ein Clustering gemäß der vorliegenden Beschreibung innerhalb verschiedenster Datenquellen und einer Durchführung eines entsprechenden Zuordnungsschritt gemäß dem vorstehend genannten Verfahrensschritt bbb.) zwischen innerhalb der verschiedenen Datenquellen identifizierten Cluster bestimmten Komponenten oder Komponenten-Teilen zugeordnet werden.

Auf diese Weise kann ein Digitaler Zwilling zu einer Vorrichtung oder Anlage erzeugt werden, der Daten zu dieser Vorrichtung oder Anlage aus den verschiedensten Datenquellen den verschiedenen Teilen oder Komponenten der Anlage oder Vorrichtung zuordnet und so ein konsistentes digitales Bild der Vorrichtung oder Anlage erzeugt. Dies vereinfacht und verbessert die Erstellung des Digitalen Zwillings, da eine größere Zahl von verwendeten Datenquellen die Zuordnung der Cluster zu verschiedenen Komponenten oder Anlagenteilen der Vorrichtung oder Anlage vereinfacht und eine bessere Vernetzung verschiedenartiger Daten bezüglich der Anlage oder Vorrichtung ermöglicht.

Das Identifizieren der Komponenten-Datencluster gemäß Verfahrensschritt aa.) kann dabei entsprechend dem Identifizieren von Komponenten-Datenclustern gemäß Verfahrensschritt a.) und/oder der vorliegenden Beschreibung erfolgen. Das Zuweisen der jeweiligen Komponenten-Typ-Bezeichnung gemäß Verfahrensschritt bb.) kann analog entsprechend dem Zuweisen von Komponenten-Typ-Bezeichnungen gemäß Verfahrensschritt b.) und/oder der vorliegenden Beschreibung erfolgen.

Dabei kann ein entsprechend angewendetes Clustering-Verfahren gemäß der vorliegenden Beschreibung ausgebildet und eingerichtet sein. Auch das Identifizieren von Beziehungs-Informationen zwischen den Datenclustern kann gemäß der vorliegenden Beschreibung ausgebildet und eingerichtet sein.

Dies vereinfacht und verbessert die Erstellung des Digitalen Zwillings, da durch eine größere Zahl von verwendeten Datenquellen die Zuordnung der Cluster zu verschiedenen Komponenten oder Anlagenteilen der Vorrichtung oder Anlage vereinfacht wird und eine bessere Vernetzung einer größeren Anzahl von verschiedenartigen Daten bezüglich der Anlage oder Vorrichtung ermöglicht wird.

Das Identifizieren der Komponenten-Datencluster gemäß Verfahrensschritt aa.) kann beispielsweise vermittels der Anwendung eines weiteren Clustering-Verfahrens auf zweite Datenquelle erfolgen.

Dabei kann die Zuordnung der Komponenten-Datencluster und/oder der Sub-Komponenten-Datencluster der Automatisierungs-Engineeringdaten bzw. der ersten Datenquelle zu den Komponenten-Datenclustern der zweiten Datenquelle beispielsweise derart erfolgen, dass die jeweiligen Komponenten-Typ-Bezeichnungen bzw. Komponenten-ID-Information-Bezeichnungen der jeweiligen Datencluster miteinander verglichen werden und bei gleichen oder ähnlichen Bezeichnungen eine entsprechende Zuordnung erfolgt.

Weiterhin können dabei auch beispielsweise eine oder mehrere der Beziehungsinformationen zwischen jeweiligen Datenclustern verglichen und bei der Zuordnung genützt werden. So kann beispielsweise bei nur ähnlichen Bezeichnungen von Datenclustern der zweiten Datenquelle und Datenclustern der Automatisierungs-Engineeringdaten bzw. der ersten Datenquelle dann eine Zuordnung der entsprechenden Datencluster zueinander vorgenommen werden, wenn sie zu weiteren Datenclustern jeweils gleichartige Beziehungen aufweisen.

Das Identifizieren der Komponenten-Datencluster innerhalb der Daten der zweiten Datenquelle kann dabei entsprechend der Identifikation der Komponenten-Datencluster innerhalb er ersten Datenquelle bzw. der Automatisierungs-Engineeringsdaten gemäß der vorliegenden Beschreibung erfolgen. So kann auch das Identifizieren der Komponenten-Datencluster innerhalb der Daten der zweiten Datenquelle beispielsweise unter Verwendung eines entsprechenden Clustering-Verfahrens, einer entsprechenden Clusterzuordnungs-Datenbank und/oder eines entsprechenden Clusterzuordnungs-Neuronalen-Netzes jeweils gemäß der vorliegenden Beschreibung erfolgen.

Dabei können für ein auf die vorstehenden genannten Datenkategorien (MCAD-Daten, ECAD-Daten, Roboter-Daten und/oder Beschreibungsdaten) gemäß der vorliegenden Beschreibung angewendetes Clustering-Verfahren, bzw. einen entsprechend angewendeten Clustering-Algorithmus, beispielsweise folgende für die jeweiligen Datenkategorien charakteristischen Informationen herangezogen werden:
- den jeweiligen Daten zugeordnete Namen oder Bezeichnungen;
- den jeweiligen Daten zugeordnete Text-Information (z.B. Meta-Informationen, Kommentare oder Beschreibungs-Informationen).

Weitere Informationen, die ebenfalls im Rahmen eines Clustering-Verfahrens oder -Algorithmus zu entsprechenden der genannten Datenkategorien herangezogen werden können, sind z.B.:
- Daten-, oder Signaltypen von Variablen, Tags, Signalen, Ein- und Ausgängen;
- von einem Daten-, Funktions-, Programmbaustein oder sonstigem Software-Element verwendete Datentypen;
- Verbindungstypen, Verbindungsnamen oder -bezeichnungen sowie Zahl der Verbindungen einer bestimmten mechanischen, elektrischen und/oder logischen Komponente oder Software-Komponente mit entsprechenden weiteren derartigen Komponenten;
- Zahl, Klasse, Typ und/oder Ausgestaltung der Ein- und/oder Ausgänge eines mechanischen, elektromechanischen, elektrischen oder logischen Bausteins oder auch eines Software-Bausteins oder auch Namen/Bezeichnungen der Ein- und/oder Ausgänge solcher Bausteine;
- Zahl, Namen oder Bezeichnungen von von einem bestimmten Daten-, Funktions- oder Programmbaustein aufgerufenen weiteren derartiger Bausteine;
- weitere vergleichbare Informationen zu den Datenkategorien von MCAD-Daten, ECAD-Daten, Roboter-Daten und/oder Beschreibungsdaten gemäß der vorliegenden Beschreibung.

Mechanische Daten oder MCAD-Daten können beispielsweise sein: 3D-Geometrien, Kinematische Informationen, Punkt-Wolken-Information, Namen/Bezeichnungen/Meta-Information zu mechanischen Komponenten oder Teilen, Beziehungsinformationen zu verschiedenen mechanischen Komponenten oder Teilen (z.B. Name, Bezeichnung und/oder Anzahl von mit einem bestimmten Teil verbundenen weiteren Komponenten sowie beispielsweise auch Art und Ausgestaltung derartiger Verbindungen), Bilddaten oder Konstruktions- bzw. CAD-Daten zu entsprechenden mechanischen Komponenten oder Teilen davon.

Elektrische Planungsdaten oder ECAD-Daten können beispielsweise sein: Funktionsbeschreibungen, Ortsangaben, ReferenzNummern für Produkte, Stück- oder Teilelisten, schematische Zeichnungen, Stromlaufpläne, Schaltpläne, Bilder von Komponenten oder Schaltungen, Namen, Bezeichnungen oder Anzahl von Ein- und/oder Ausgängen, Angaben zu dynamischem Verhalten (beispielsweise durch sogenannte "Makros" beschrieben) oder vergleichbare Daten zu elektrischen Eigenschaften und/oder Ausgestaltungen der Vorrichtung oder Anlage.

Roboter-Daten können neben den Automatisierungs-Engineeringdaten vergleichbaren Daten beispielsweise auch Daten wie Signal-Listen oder Roboterprogramme sein.

Die Roboter-Daten können auch die Vorrichtung oder Anlage insgesamt betreffen. Insbesondere, wenn diese im Wesentlichen oder auch ausschließlich aus einem oder mehreren Robotern besteht.

Beschreibung-Daten können beispielsweise Planungs- und/oder Beschreibungsdaten oder auch Bedienungsanleitungen bezüglich der Vorrichtung oder Anlage oder auch Komponenten und Teilen davon sein. Insbesondere können solche Beschreibung-Daten in Standard-Dokumentformaten, wie beispielsweise Text-Formate, Word-Format, PDF, Excel-Format, Visio-Format, verschiedenen Bildformaten, Fluss-Diagramm-Formaten, Mindmap-Formaten oder vergleichbaren Dokumentformaten vorliegen.

Ein Verfahren gemäß der vorliegenden Beschreibung kann weiterhin derart ausgebildet und eingerichtet sein,
dass nachfolgend Verfahrensschritt aa.) und vor Verfahrensschritt bbb.) die nachfolgenden Verfahrensschritte durchgeführt werden:
aa1.) Identifizieren von Sub-Komponenten-Datenclustern innerhalb der in Verfahrensschritt aa.) identifizierten Komponenten-Datencluster, wobei den Sub-Komponenten-Datenclustern Sub-Komponenten-Typen oder Sub-Komponenten-ID-Informationen bezüglich der Anlage oder Vorrichtung zuordenbar oder zugeordneten sind,
   und
bb1.) Zuweisung jeweils einer Sub-Komponenten-Typ-Bezeichnung oder jeweils einer Sub-Komponenten-ID-Informations-Bezeichnung zu mindestens einem der identifizierten Sub-Komponenten-Datencluster.

Die Formulierung "nachfolgend Verfahrensschritt aa.)" bedeutet auch hier, dass der hier genannte Verfahrensschritt irgendwann nachfolgend dem Verfahrensschritt aa.) erfolgt und nicht zwangsläufig unmittelbar dem Verfahrensschritt aa.) nachfolgen muss (dies aber kann).

Das Identifizieren von Sub-Komponenten-Datenclustern sowie die Zuweisung der Sub-Komponenten-Typ-Bezeichnung zu den entsprechenden Sub-Komponenten-Datenclustern kann dabei wiederum entsprechend der vorliegenden Beschreibung ausgestaltet und eingerichtet sein.

Das Identifizieren der Sub-Komponenten-Datencluster kann dabei beispielsweise durch die Anwendung eines weiteren zweiten Clustering-Verfahrens auf die innerhalb der Daten der zweiten Datenquelle identifizierten Komponenten-Datencluster erfolgen. Das weitere zweite Clustering-Verfahren kann dabei als ein Clustering-Verfahren gemäß der vorliegenden Beschreibung ausgebildet und eingerichtet sein. Es kann dabei dem Clustering-Verfahren gemäß Patentanspruch 1 oder dem weiteren Clustering-Verfahren gemäß der vorliegenden Beschreibung entsprechen oder von diesem verschieden sein.

Auch hier kann das Identifizieren der Sub-Komponenten-Datencluster wiederum unter Verwendung einer entsprechenden Clusterzuordnungs-Datenbank und/oder eines entsprechenden Clusterzuordnungs-Neuronalen-Netzes gemäß der vorliegenden Beschreibung erfolgen.

In einer vorteilhaften Ausgestaltung kann beispielsweise einem Clustering nach Komponenten-Typen ein Clustering nach Sub-Komponenten-Typen nachfolgen. Weiterhin kann beispielsweise einem Clustering nach Komponenten-ID-Informationen ein Clustering nach Sub-Komponenten-ID-Informationen nachfolgen.

Dabei kann beispielsweise einem Clustering nach Komponenten-Typen auch ein Clustering nach Komponenten-ID-Informationen folgen und umgekehrt. Im ersteren Fall kann beispielsweise nachfolgend einem Clustering, welches Daten der zweiten Datenquelle bestimmten Komponenten-Typen zuordnet, ein Clustering nach ID-Informationen innerhalb der jeweiligen Typ-Cluster erfolgen.

Das weitere zweite Clustering-Verfahren kann beispielsweise auf die Gesamtheit der in Verfahrensschritts bb1.) identifizierten Komponenten-Datencluster angewendet werden. Im Ergebnis des zweiten Clustering-Verfahrens können dann beispielsweise Sub-Komponenten-Datencluster identifiziert werden, wobei beispielsweise einzelne der Komponenten-Datencluster einen oder mehrere der Sub-Komponenten-Datencluster umfassen können.

Dabei kann die Anwendung des weiteren zweiten Clustering-Verfahrens auf die Komponenten-Datencluster auch ergeben, dass zumindest bei einem oder mehreren der Komponenten-Datencluster kein weiteres Clustering möglich ist.

Verfahrensschritt aa1.) kann auch mehrfach durchgeführt werden. Dadurch ergibt sich eine hierarchische Strukturierung, mittels welcher sich die in Verfahrensschritts aa1.) identifizierten sub-Komponenten weiter in sub-sub-Komponenten und sub-sub-sub-Komponenten usw. untergliedern und hierarchisch strukturieren lassen.

Dabei kann für jedes der genannten Clustering-Schritte jeweils ein bislang bereits verwendetes Clustering-Verfahren verwendet werden oder auch ein bislang im Rahmen des erfindungsgemäßen Verfahrens noch nicht verwendetes Clustering-Verfahren, beispielsweise gemäß der vorliegenden Beschreibung.

Weiterhin kann beispielsweise einem Clustering nach Komponenten-Typen auch ein Clustering nach Komponenten-ID-Informationen folgen und umgekehrt. Im ersteren Fall kann beispielsweise nachfolgend einem Clustering, welches Daten der zweiten Datenquelle bestimmten Komponenten-Typen zuordnet, ein Clustering nach ID-Informationen innerhalb der jeweiligen Typ-Cluster erfolgen, sodass Daten der zweiten Datenquelle, die beispielsweise einem Cluster für einen Komponenten-Typs zugeordnet sind, damit z.B. unterschiedlichen Komponenten-Instanzen dieses Komponenten-Typs zugeordnet werden können.

Bei mehrfacher Ausführung von Verfahrensschritt aa1.) kann das erste Clustering-Verfahren jeweils auf die Ergebnisse des vorhergehenden Clustering-Schritts angewendet werden. Gegebenenfalls kann zwischen den Clustering-Schritten auch eine weitere Bearbeitung bzw. Verarbeitung der Ergebnisse des vorherigen Clustering-Schritts erfolgen.

Wenn Verfahrensschritt aa1.) mehrfach ausgeführt wird, kann auch Verfahrensschritt bb1.) entsprechend mehrfach ausgeführt werden. Dabei können dann für die entsprechenden Unter-Komponenten wiederum Sub-Sub-Komponenten-Bezeichnungen und Sub-Sub-Sub-Komponenten-Bezeichnungen usw. den entsprechenden Clustern zugeordnet werden.

Auf diese Weise lässt sich die Anlage oder Vorrichtung bezüglich ihrer zugeordneten Daten der zweiten Datenquelle hierarchisch strukturieren und diese hierarchische Struktur auch mit entsprechenden Bezeichnungen versehen.

So erhält der unter Verwendung dieser Informationen erstellte digitale Zwilling eine hierarchische Struktur der Anlage oder Vorrichtung, welche eine Analyse der Anlage oder Vorrichtung auf den verschiedensten Hierarchieebenen ermöglicht.

Weiterhin kann in diesem Fall vorgesehen sein, dass in Verfahrensschritt c.) der Digitale Zwilling unter Verwendung der Sub-Komponenten-Datencluster erstellt wird.

Ein Verfahren gemäß der vorliegenden Erfindung kann weiterhin derart ausgestaltet und eingerichtet sein, dass nachfolgend Verfahrensschritt aa.) und/oder aa1.) der nachfolgende Verfahrensschritt durchgeführt wird:
bb2.) Identifizieren von Beziehungs-Informationen zwischen gemäß Verfahrensschritt aa.) identifizierten Komponenten-Datenclustern durch Auswertung der Daten der zweiten Datenquelle und/oder Zusatzinformationen zu diesen Daten,
   und/oder
Identifizieren von Beziehungs-Informationen zwischen gemäß Verfahrensschritt aa1.) identifizierten Sub-Komponenten-Datenclustern durch Auswertung der Daten der zweiten Datenquelle und/oder Zusatzinformationen zu diesen Daten wobei weiterhin
in Verfahrensschritt c.) der Digitale Zwilling weiterhin unter Verwendung von identifizierten Beziehungs-Informationen erstellt wird.

Beziehungs-Informationen können dabei gemäß der vorliegenden Beschreibung ausgebildet und eingerichtet sein.

Auch die Ermittlung der Beziehungs-Information kann dabei gemäß der vorliegenden Beschreibung ausgebildet und eingerichtet sein. Dabei können beispielsweise die im Rahmen der Ermittlung der Beziehungs-Informationen aus den Automatisierungs-Engineeringdaten bzw. den Daten der ersten Datenquelle dargestellten Ausgestaltungen und Erläuterungen entsprechend auf die Ermittlung von Beziehungsinformationen aus den Daten der zweiten Datenquelle übertragen werden. Insbesondere aus entsprechenden Roboter-Daten können analog der in Bezug auf die Automatisierungs-Engineeringdaten dargestellten Ausführungen Beziehungs-Informationen gewonnen werden.

So können Beziehungs-Informationen beispielsweise aus mechanischen Planungsdaten bzw. MCAD-Daten ermittelt werden. Hierzu können beispielsweise 3D-Geometrie-Informationen, Teile- bzw. Stücklisten oder auch Kinematik Informationen bezüglich der geometrischen Auslegung und Lokalisierung von Komponenten der Vorrichtung oder Anlage verwendet werden. Auch die Art und Ausgestaltung von Verbindungen von verschiedenen Komponenten der Vorrichtung oder Anlage kann entsprechend oder entsprechende Bilddaten können zur Ermittlung von Beziehungs-Informationen entsprechend ausgewertet und genützt werden.

Auch elektrische Planungsdaten oder ECAD-Daten können in analoger Weise zur Ermittlung der Beziehungsinformationen ausgewertet werden. Auch hier können beispielsweise Ortsangaben, Stück- oder Teillisten, schematische Zeichnungen, Stromlaufpläne, Bezeichnungen von Ein- und/oder Ausgängen oder auch Angaben zum dynamischen Verhalten entsprechend ausgewertet werden um Beziehungs-Informationen zwischen verschiedenen Komponenten der Vorrichtung oder Anlage zu identifizieren.

Beschreibung-Daten gemäß der vorliegenden Beschreibung können ebenfalls zur Identifikation von Beziehungs-Daten ausgewertet werden. Insbesondere können in derartigen Planungs- und/oder Beschreibungsdokumenten unmittelbar Beziehungsinformationen zwischen verschiedenen Komponenten der Vorrichtung oder Anlage enthalten sein.

Dabei bedeutet im Zusammenhang mit der vorliegenden Beschreibung die Formulierung "nachfolgend aa.)" und/oder "nachfolgen aa1.)", dass beispielsweise Verfahrensschritt bb2.) nach Verfahrensschritt aa.), aa1.), bb.) und/oder bb1.) erfolgen kann. Bezieht sich die Identifikation der Beziehungs-Informationen zumindest unter anderem auf gemäß Verfahrensschritt aa1.) identifizierte Sub-Komponenten-Datencluster, so kann Verfahrensschritt bb2.) beispielsweise nach Verfahrensschritt aa1.), bb.) und/oder bb1.) erfolgen.

Ein Verfahren gemäß der vorliegenden Beschreibung kann beispielsweise weiterhin derart ausgestaltet und eingerichtet sein,
dass nachfolgend Verfahrensschritt a.), a1.), aa.), aa1.), b.), b1.), b2.), bb.), bb1.), bb2.), bbb.) und/oder weiterer Verfahrensschritte gemäß der vorliegenden Beschreibung ein Ergebnis des jeweiligen Verfahrensschritts in einer Clusterzuordnungs-Datenbank gespeichert wird
   und/oder
dass nachfolgend Verfahrensschritt a.), a1.), aa.), aa1.), b.), b1.), b2.), bb.), bb1.), bb2.), bbb.) und/oder weiterer Verfahrensschritte gemäß der vorliegenden Beschreibung ein Clusterzuordnungs-Neuronales-Netz unter Verwendung von Ergebnissen des jeweiligen Verfahrensschritts trainiert wird.

Eine derartige Speicherung der Ergebnisse der genannten Verfahrensschritte in einer Clusterzuordnungs-Datenbank oder die Nutzung der entsprechenden Ergebnisse dieser Verfahrensschritte zum Trainieren eines Clusterzuordnungs-Neuronalen-Netzes ermöglicht die Nutzung der im Rahmen der genannten Verfahrensschritte erhaltenen Ergebnisse für zukünftige Clustering-Schritte oder Beschreibung-Zuweisungsschritte für entsprechend ermittelte Cluster.

Auf diese Weise können bei zukünftigen Clustering Verfahren die entsprechenden Erkenntnisse genützt werden und die zukünftigen Clustering Verfahren dadurch weiter vereinfacht und beschleunigt werden.

Das Abspeichern der Ergebnisse der Verfahrensschritt a.), a1.), aa.), aa1.), b.), b1.), b2.), bb.), bb1.), bb2.), bbb.) und/oder weiterer Verfahrensschritte gemäß der vorliegenden Beschreibung in einer der Clusterzuordnungs-Datenbank kann beispielsweise in einem SQL-Format oder auch NoSQL-Format erfolgen. Dabei kann die Datenbank beziehungsweise die Speicherung in der Datenbank gemäß der vorliegenden Beschreibung ausgebildet und eingerichtet sein oder Komponenten gemäß der vorliegenden Beschreibung umfassen.

Die Abspeicherung in der Clusterzuordnungs-Datenbank kann dabei jeweils derart vorgesehen und eingerichtet sein, dass die abgespeicherten Ergebnisse bei zukünftigen Analysen beispielsweise von entsprechenden Datensammlungen, Datenquellen und/oder Anlagenteil-Clustern verwendet werden können.

Dabei können in einer derartigen Clusterzuordnungs-Datenbank beispielsweise die Zuordnung bestimmter Daten zu einem bestimmten Cluster oder auch die Zuordnung bestimmter Daten oder Cluster zu bestimmten Cluster-Bezeichnungen oder ID-Informations-Bezeichnungen gespeichert sein. Weiterhin können in einer solchen Datenbank beispielsweise auch die Zuordnung verschiedener Cluster zueinander, wie sie beispielsweise gemäß Verfahrensschritt b2.), bb2.) oder bbb.) ermittelt wurden, gespeichert sein. Im Rahmen einer solchen Speicherung von Zuordnungen von Clustern zueinander können beispielsweise auch ermittelte Beziehungs-Informationen zwischen diesen Clustern gespeichert sein.

Dabei kann die Clusterzuordnungs-Datenbank beispielsweise zwei Untersegmente, einen Clusterzuordnungs-Typ-Datenbankbereich sowie einen Clusterzuordnungs-ID-Info-Datenbankbereich umfassen. Dabei kann beispielsweise im ersten der genannten Datenbankbereiche die Zuordnung von entsprechenden Clusterdaten zu bestimmten Typ-Beschreibungen oder -Bezeichnungen oder weiteren Typ-Informationen gespeichert sein. Im zweitgenannten Datenbankbereich kann dann beispielsweise eine Zuordnung von entsprechenden Clusterdaten zu ID-Informationen gespeichert sein.

Die Verwendung des Ergebnisses des jeweiligen Verfahrensschritts zum Trainieren eines entsprechenden neuronalen Netzes kann beispielsweise derart eingerichtet und ausgebildet sein, dass nachfolgend Verfahrensschritt a.), a1.), aa.), aa1.), b.), b1.), b2.), bb.), bb1.), bb2.), bbb.) und/oder weiterer Verfahrensschritte gemäß der vorliegenden Beschreibung die auf der Basis der verwendeten Daten ermittelten Komponenten-Datencluster oder Sub-Komponenten-Datencluster zum Anlernen eines entsprechenden neuronalen Netzes für die Identifikation derartiger Komponenten-Datencluster beziehungsweise Sub-Komponenten-Datencluster verwendet wird.

Dabei kann beispielsweise die Zuordnung der im jeweiligen Datencluster enthaltenen Daten zum jeweiligen Cluster und/oder einer diesem Cluster zugeordneten Komponenten-Typ- oder Komponenten-ID-Informations-Bezeichnung verwendet werden. Weiterhin kann auch die Zuordnung der jeweiligen Komponenten-Datencluster zu bestimmten zugehörigen realen Komponenten, physikalischen Anlagenteilen und/oder bestimmten Bezeichnungen zum Trainieren des entsprechenden neuronalen Netzes verwendet werden.

Ein Verfahren gemäß der vorliegenden Beschreibung kann weiterhin derart ausgestaltet und eingerichtet sein,
dass die Clusterzuordnungs-Datenbank und/oder das Clusterzuordnungs-Neuronale-Netz bei der Durchführung eines Verfahrens gemäß der vorliegenden Beschreibung verwendet wird, insbesondere, dass das Identifizieren der Komponenten-Datencluster und/oder der Sub-Komponenten-Datencluster unter Verwendung der Clusterzuordnungs-Datenbank und/oder des Clusterzuordnungs-Neuronalen-Netzes erfolgt,
   und/oder
dass das Zuweisen der Komponenten-Typ-Bezeichnung (oder Komponenten-ID-Informations-Bezeichnung und/oder der Sub-Komponenten-Typ-Bezeichnung oder jeweils einer Sub-Komponenten-ID-Informations-Bezeichnung unter Verwendung der Clusterzuordnungs-Datenbank und/oder des Clusterzuordnungs-Neuronalen-Netzes erfolgt.

Dies kann beispielsweise derart ausgebildet und eingerichtet sein, dass die beispielsweise gemäß der vorstehenden Beschreibung in einer entsprechenden Datenbank oder einem entsprechenden neuronale Netz gespeicherten Informationen dann beispielsweise dazu verwendet werden, weitere Datensammlungen, Datenquellen und/oder bereits ermittelte Datencluster in entsprechende Komponenten-Datencluster und/oder Sub-Komponenten-Datencluster aufzuteilen.

In einer vorteilhaften Ausgestaltung erfolgt ein Clustering entsprechend Verfahrensschritt a.), a1.), aa.), aa1.) und/oder weiterer Verfahrensschritte gemäß der vorliegenden Beschreibung unter Verwendung der Datenbank und/oder des trainierten Neuronalen Netzes.

In einer weiteren vorteilhaften Ausgestaltung erfolgt die Zuweisung einer Bezeichnung und/oder Beziehungs-Information entsprechend Verfahrensschritt b.), b1.), b2.), bb.), bb1.), bb2.) und/oder weiterer Verfahrensschritte gemäß der vorliegenden Beschreibung gemäß der vorliegenden Beschreibung unter Verwendung der Datenbank und/oder des trainierten Neuronalen Netzes.

In einer weiteren vorteilhaften Ausgestaltung erfolgt die Zuordnung von Clustern entsprechend Verfahrensschritt bbb.) und/oder weiterer Verfahrensschritte gemäß der vorliegenden Beschreibung unter Verwendung der Datenbank und/oder des trainierten Neuronalen Netzes.

So können beispielsweise die Daten der ersten Datenquelle, die Automatisierungs-Engineeringdaten und/oder die Daten der zweiten Datenquelle oder weiterer Datenquellen der Clusterzuordnung-Datenbank zugeführt werden und innerhalb dieser dann nach bereits in der Vergangenheit erfolgten Zuordnungen darin enthaltener Daten zu bestimmten Clustern gesucht werden und diese Cluster Zuordnungen dann ausgegeben werden. Weiterhin können beispielsweise bestimmten Clustern zugehörige Daten der ersten Datenquelle bzw. der Automatisierungs-Engineering-daten und/oder Daten der zweiten oder einer weiteren Datenquelle der Clusterzuordnung-Datenbank zugeführt werden und im Rahmen der Datenbank nach entsprechend in der Vergangenheit bereits solchen Clustern zugeordneten Komponenten-Beschreibungen recherchiert werden - und diese Zuordnungen dann wiederum ausgegeben werden.

In vergleichbarer Weise können beispielsweise Daten der ersten Datenquelle bzw. Automatisierungs-Engineeringdaten und/oder Daten der zweiten oder weiterer Datenquellen einem entsprechend der vorliegenden Beschreibung trainierten neuronalen Netz zugeführt werden, wonach vom neuronale Netz dann entsprechende Zuordnungen bestimmter dieser Daten zu entsprechenden Clustern ausgegeben werden. Zur Ermittlung von entsprechenden Komponenten-Beschreibungen zu bestimmten ermittelten Cluster-Daten können beispielsweise wiederum die einem bestimmten Cluster zugehörigen Daten in ein entsprechend der vorliegenden Beschreibung trainiertes neuronales Netz eingegeben werden, wobei das neuronale Netz dann eine entsprechende Komponenten-Beschreibung zum zugehörigen Cluster ausgibt.

Dabei kann weiterhin vorgesehen sein,
dass der Digitale-Zwilling und/oder die Clusterzuordnungs-Datenbank als eine relationale Datenbank, eine NoSQL-Datenbank und/oder eine Knowledge-Graph-Datenbank ausgebildet ist.

Die Speicherung des Digitalen Zwillings bzw. der Daten des Digitalen Zwillings kann in diesem Fall als Datenbank in einer Digitale-Zwilling-Datenbank erfolgen beziehungsweise eine solche Digitale-Zwilling-Datenbank umfassen und in einem beliebigen Datenbank-Format vorliegen. Solche Datenbank-Formate können z.B. sogenannte relationale Datenbankformate oder SQL-Datenbankformate oder auch sogenannte NoSQL-Datenbankformate und/oder Knowledge-Graph-Datenbankformate sein.

Die Clusterzuordnungs-Datenbank kann ebenfalls in einem beliebigen Datenbankformat vorliegen. Auch hier können solche Datenbank-Formate z.B. sogenannte relationale Datenbankformate oder SQL-Datenbankformate oder auch sogenannte NoSQL-Datenbankformate und/oder Knowledge-Graph-Datenbankformate sein.

Dabei können verschiedene Teile des Digitalen Zwillings und/oder der Clusterzuordnungs-Datenbank auch in verschiedenen der oben genannten Formate abgespeichert sein.

Weiterhin kann der Digitale Zwilling und/oder die Clusterzuordnungs-Datenbank auch weitere Teile umfassen, die in keinem der oben genannten Datenbankformate vorliegen.

Im Digitale Zwilling können die Informationen oder Teile der Informationen als relationale Datenbank abgelegt sein oder der Digitale Zwilling kann eine solche Datenbank umfassen. Weiterhin können im Digitalen Zwilling die Informationen oder Teile der Informationen auch als eine NoSQL-Datenbank, ein oder mehrere Knowledge-Graphen, eine nicht-relationale Datenbank, eine OWL-Datenbank, eine RDF-Datenbank und/oder eine SPARQL als Absprachefrage verwendenden Datenbank abgelegt sein, oder der Digitale Zwilling kann derartige Datenbanken umfassen.

Dabei können die genannten Datenbankformate, zum Beispiel eine relationale Datenbank, eine SQL-Datenbank, eine NoSQL-Datenbank und/oder ein Knowledge-Graph weiterhin gemäß der vorliegenden Beschreibung ausgebildet und eingerichtet sein.

Die vorstehend genannte Aufgabe wird weiterhin gelöst durch einen Digitaler Zwilling für eine Vorrichtung oder Anlage, wobei der Digitale Zwilling unter Verwendung eines Verfahrens gemäß der vorstehenden Beschreibung erstellt wurde.

Ein derart erzeugter Digitaler Zwilling löst die vorstehend genannte Aufgabe, da er auf vereinfachte Weise unter Verwendung des in der vorliegenden Beschreibung dargestellten Verfahrens erstellt wurde.

Die vorstehend genannte Aufgabe wird ebenfalls gelöst durch ein Computerlesbares Speichermedium umfassend einen Digitalen Zwilling, eine Clusterzuordnungs-Datenbank und/oder ein Clusterzuordnungs-Neuronales-Netz gemäß einem der vorstehenden Beschreibung.

Ein derart gespeicherter Digitaler Zwilling löst die vorstehend genannte Aufgabe, da der Digitale Zwilling auf vereinfachte Weise unter Verwendung des in der vorliegenden Beschreibung dargestellten Verfahrens erstellt wurde. Die auf dem Computer lesbaren Speichermedium gespeicherte Clusterzuordnung-Datenbank und/oder dass dort gespeicherte Clusterzuordnung-neuronale-Netz ermöglicht weiterhin die vereinfachte Erstellung eines Digitalen Zwillings gemäß der vorliegenden Beschreibung für eine weitere Vorrichtung oder Anlage, wie in der vorliegenden Beschreibung näher ausgeführt.

Die vorstehend genannte Aufgabe wird zudem gelöst durch die Verwendung eines Digitalen Zwillings gemäß der vorliegenden Beschreibung zum Identifizieren von Inkonsistenzen zwischen den Automatisierungs-Engineeringdaten bzw. den Daten der ersten Datenquelle und den Daten der zweiten Datenquelle.

Derartige Inkonsistenzen zwischen den Automatisierungs-Engineeringdaten bzw. den Daten der ersten Datenquelle und den Daten der zweiten Datenquelle können beispielsweise sein:
- Unterschiede bei der Anzahl der jeweils identifizierten Komponenten-Datencluster und/oder Sub-Komponenten-Datencluster nach einem Clustering der jeweiligen Daten;
- Unterschiede bei den jeweils zugewiesenen Komponenten-Typ-Bezeichnungen und/oder Komponenten-ID-Information-Bezeichnungen, die den jeweiligen Komponenten-Datenclustern oder Sub-Komponenten-Datenclustern jeweils zugewiesen wurden;
- Unterschiede bei den Beziehungsinformationen die jeweils zwischen verschiedenen der identifizierten Komponenten-Datencluster und/oder Sub-Komponenten-Datencluster ermittelt wurden.

In einem weiteren Verfahrensschritt können einem Nutzer beispielsweise die identifizierten Inkonsistenzen dargestellt werden. Weiterhin kann in einem weiteren Verfahrensschritt eine Eingabemaske derart zur Verfügung gestellt werden, dass ein Nutzer manuell beispielsweise zugewiesene Komponenten-Typ-Bezeichnungen und/oder Komponenten-ID-Informationsbezeichnungen zu bestimmten der Komponenten-Datencluster und/oder sub-Komponenten-Datencluster eingeben und/oder ändern kann.

Weiterhin kann vorgesehen sein, dass einem Nutzer, beispielsweise als Ergebnis einer entsprechenden Inkonsistenz-Prüfung, beispielsweise Komponenten-Typ-Bezeichnungen und/oder Komponenten-ID-Information-Bezeichnungen zu jeweils ermittelten Komponenten-Datenclustern und/oder Sub-Komponenten-Datenclustern der der ersten Datenquelle bzw. der Automatisierungs-Engineeringdaten und der Daten der zweiten Datenquelle angezeigt werden.

Weiterhin kann beispielsweise einem Nutzer zu jeder der dargestellten Komponenten-Tipp-Bezeichnungen und/oder Komponenten-ID-Information-Bezeichnungen über ein Auswahlmenü alternative Vorschläge für entsprechende Bezeichnungen gemacht werden. Dabei können die alternativen Vorschläge für entsprechende Bezeichnungen den Cluster-Bezeichnungen der jeweils anderen Datenquelle entnommen sein. Das bedeutet zum Beispiel, dass einer Komponenten-Typ-Bezeichnung eines bestimmten Datenclusters innerhalb der ersten Datenquelle bzw. der Automatisierungs-Engineeringdaten dann in einer Auswahlliste alle oder eine Auswahl derjenigen Komponenten-Typ-Bezeichnungen zur Verfügung gestellt werden, die im Rahmen der Cluster zur zweiten Datenquelle ermittelt wurden.

Auf diese Weise kann der Nutzer dabei unterstützt werden beispielsweise identifizierte Datencluster in beiden Datenquellen den entsprechend richtigen Bezeichnungen zuzuordnen.

Auf vergleichbare Weise können auch die jeweiligen Beziehungsinformationen, die im Rahmen des Clustering der ersten Datenquelle bzw. der Automatisierungs-Engineeringdaten sowie der Daten der zweiten Datenquelle ermittelt wurden, angezeigt und entsprechende Bezeichnungen für solche Beziehungsinformationen in entsprechenden Drop-Down-Menüs dargestellt werden. So können auch die im Rahmen des Clustering beider Datenquellen identifizierten Beziehungen aneinander angeglichen werden.

Auf die genannte Weise können also nicht nur Inkonsistenzen zwischen der ersten Datenquelle bzw. den Automatisierungs-Engineeringdaten und den Daten der zweiten Datenquelle identifiziert werden, sondern weiterhin ein Nutzer dabei unterstützt werden, derartige Inkonsistenzen zu beseitigen und gegebenenfalls sogar beide Datenquellen entsprechend zu korrigieren und/oder zu ergänzen.

In einer weiteren vorteilhaften Ausgestaltung können beispielsweise die identifizierten Inkonsistenzen auch zur Ermittlung von Fehlern in einer oder beider der Datenquellen sowie zur Identifikation von notwendigen Schritten verwendet werden, derartige Fehler zu korrigieren. Dies kann beispielsweise derart erfolgen, dass einem Nutzer entsprechende Hinweise gegeben werden und/oder beispielsweise selbsttätig auch schon Änderungsvorschläge gemacht werden.

Weiterhin kann das Verfahren auch derart ausgebildet und eingerichtet sein, dass solche identifizierten Fehler anhand der Informationen innerhalb des Digitalen Zwillings selbsttätig korrigiert werden. In diesem Fall kann einem Benutzer beispielsweise angezeigt werden, welche der Werte oder Begriffe selbsttätig korrigiert wurden, um ihm nachfolgend noch weitere Korrekturmöglichkeiten anzubieten.

Die vorstehend genannte Aufgabe wird auch gelöst durch die Verwendung eines Digitalen Zwillings gemäß der vorliegenden Beschreibung zur Erstellung eines Digitalen Zwillings einer geänderten Vorrichtung oder Anlage.

Das Erstellen eines derartigen Digitalen Zwillings für eine geänderte Vorrichtung oder Anlage, bzw. für die Planung einer Änderung der Vorrichtung oder Anlage, kann beispielsweise derart erfolgen, dass bestimmten Komponententypen oder Komponenten-ID-Informationen zugeordnete Cluster ersetzt werden durch geänderten Komponententypen oder Komponenten-ID-Informationen zugeordnete Cluster. So kann beispielsweise ein Ersetzen der entsprechenden Komponententypen oder auch Einzelkomponenten durch alternative Komponententypen oder Einzelkomponenten im neuen Digitalen Zwillings für die geänderte Vorrichtung oder Anlage berücksichtigt werden.

Entsprechend können auch Beziehungs-Informationen entsprechender Komponenten-Cluster oder Sub-Komponenten-Cluster angepasst werden, wenn sich die Beziehungen (Z.B. eine räumliche oder auch hierarchische Beziehung) der entsprechenden Komponenten entsprechend geändert haben oder eine solche Änderung geplant ist.

Die Daten dieses geänderten Digitalen Zwillings für die geänderte Vorrichtung oder Anlage, bzw. die geplante Änderung der Vorrichtung oder Anlage, können beispielsweise dazu verwendet werden, eine entsprechende Simulation der geänderten Vorrichtung oder Anlage zu erstellen oder deren Erstellung zu unterstützen.

Weiterhin können die Daten des Digitalen Zwillings für die geänderte Vorrichtung oder Anlage beispielsweise auch genützt werden, um ein Steuerprogramm für die geänderte Vorrichtung oder Anlage zu erstellen oder eine entsprechende Erstellung zu unterstützen. Weiterhin können diese Daten auch genützt werden, um ein entsprechendes Engineering Projekt, MCAD-Daten, ECAD-Daten, Roboter-Daten und/oder Beschreibungsdaten für die geänderte Vorrichtung oder Anlage zu erstellen.

Die vorstehend genannte Aufgabe wird auch gelöst durch die Verwendung eines Digitalen Zwillings gemäß der vorliegenden Beschreibung zur Erstellung einer Simulation der Vorrichtung oder Anlage oder Teilen davon und/oder zur virtuellen Inbetriebnahme der Vorrichtung oder Anlage oder Teilen davon.

Dabei wird unter einer Verwendung des Digitalen Zwillings zur Erstellung einer Simulation unter anderem verstanden, dass zumindest Teile der Daten des Digitalen Zwillings zumindest unter anderem zur Erstellung der Simulation der Vorrichtung oder Anlage verwendet werden. Dabei kann es erforderlich sein, dass auch noch andere Daten oder Datenquellen sowie gegebenenfalls auch Nutzer-Eingaben zur Erstellung der Simulation benötigt werden.

So können beispielsweise die identifizierten Komponenten-Datencluster und/oder sub-Komponenten-Datencluster, bzw. diesen zugeordnete Typ-Bezeichnungen oder ID-Information-Bezeichnungen, verwendet werden, um entsprechende Simulationsprogramme für die entsprechenden Komponenten beispielsweise innerhalb einer entsprechenden Simulation-Datenbank zu identifizieren und auszuwählen.

Weiterhin können beispielsweise identifizierte Beziehungs-Informationen zwischen entsprechenden Datenclustern zur logischen Verknüpfung von Simulationsprogrammen bezüglich diesen Datenclustern zugeordneten Komponenten herangezogen werden.

Auch können weitere Daten beispielsweise innerhalb bestimmter Datencluster ebenfalls zur Erstellung oder Parametrisierung einer entsprechenden Simulation verwendet werden. Solche Daten können beispielsweise 3D-Geometrien oder entsprechende kinematische Informationen zu bestimmten Teilen der Anlage oder Vorrichtung sein. Weiterhin können solche Informationen Referenzbezeichnungen für Produkte, Stücklisten und/oder auch entsprechende schematische Zeichnungen oder Schaltbilder der Vorrichtung oder Anlage sein. Auch Beschreibungsdaten wie beispielsweise Flussdiagramme können derartige Informationen sein, welche zur Erstellung und/oder Parametrisierung einer Simulation für die Vorrichtung oder Anlage herangezogen werden können.

In einer weiteren vorteilhaften Ausgestaltung können die Daten des Digitalen Zwillings auch bei der Verknüpfung von verschiedenen, jeweils Komponenten der Vorrichtung oder Anlage zugeordneten Simulationsprogrammen, verwendet werden. Bei einer solchen Verknüpfung müssen unter anderem die Ein- und Ausgangsdaten einer Simulation bezüglich einer bestimmten Komponente der Vorrichtung oder Anlage mit entsprechenden Ein- und Ausgangsdaten einer Simulation zu einer mit der genannten Komponente zumindest logisch verknüpften weiteren Komponente der Vorrichtung oder Anlage logisch verknüpft werden. Dadurch kann beispielsweise eine korrekte Kommunikation zwischen beiden Simulationen ermöglicht werden. Eine solche logische Verknüpfung und Ein- und Ausgangssignalen verschiedener Simulationen wird beispielsweise als "Signal Mapping" bezeichnet.

Daher kann in einer weiteren vorteilhaften Ausgestaltung ein Digitaler Zwilling gemäß der vorliegenden Beschreibung auch zu einem solchen "Signal Mapping" zwischen verschiedenen Komponenten und/oder Sub-Komponenten der Anlage oder Vorrichtung zugeordneten Simulationsprogrammen verwendet werden.

Ein solches Signal Mapping kann beispielsweise unter Verwendung des Digitalen Zwillings der Vorrichtung oder Anlage erfolgen oder vermittels des Digitalen Zwillings zumindest unterstützt werden. Dabei können beispielsweise Informationen aus weiteren Datenquellen zu den identifizierten Komponenten-Typen oder Komponenten-ID-Informationen herangezogen werden. Es können aber auch im Digitalen Zwillings selbst gespeicherte Informationen hierzu oder auch Informationen aus den entsprechenden Datenclustern selbst verwendet werden, beispielsweise entsprechende Variablennamen, Variablen-Informationen, Funktionsbausteine, Funktionsbausteines-Informationen, Datenbausteine und/oder entsprechende Datenbaustein-Informationen. Diesen Angaben können beispielsweise Namen, Bezeichnungen, Anordnungen und/oder ähnliche Informationen bezüglich Ein- und Ausgangssignalen einer entsprechenden Simulation für eine entsprechende Komponente entnommen werden. Aufgrund solcher Informationen können dann die Ein- und Ausgangssignale einer Simulation für eine bestimmte Komponente mit den entsprechenden Ein- und Ausgangssignalen einer weiteren Simulation für eine mit der bestimmten Komponente zumindest logisch verknüpften weiteren Komponente verknüpft werden.

Eine solche Verknüpfung kann wiederum selbsttätig erfolgen oder dadurch, dass ein Nutzer bei einem manuellen Zuordnen von entsprechenden denn Ein- und Ausgangssignalen, beispielsweise durch Anzeige von entsprechenden Vorschlägen, unterstützt wird.

Unter einer virtuellen Inbetriebnahme der Vorrichtung oder Anlage wird das Implementieren der Automatisierung der Vorrichtung oder Anlage anhand eines digitalen Modells der Vorrichtung oder Anlage und/oder einer Simulation der Vorrichtung oder Anlage verstanden. Dabei kann beispielsweise die Simulation oder das Modell der Vorrichtung oder Anlage mit einer realen Steuerungs-Hardware für die Vorrichtung oder Anlage verbunden sein (sogenanntes "Hardware in the Loop"). Weiterhin kann die Simulation oder das Modell der Vorrichtung oder Anlage auch mit einer Simulation der Steuerungs-Hardware verbunden sein (sogenanntes "Software in the Loop").

Auf diese Weise kann die Steuerung für die Anlage und der Betrieb der Anlage eingerichtet werden, ohne dass die reale Anlage bereits funktionsfähig vorliegen muss.

Dabei kann ein Digitaler Zwilling gemäß der vorliegenden Beschreibung beispielsweise zur Erstellung einer solchen Simulation der Vorrichtung oder Anlage, wie in der vorliegenden Beschreibung bereits erläutert, verwendet werden. Weiterhin kann beispielsweise dem digitalen Zwilling auch ein Steuerprogramm und/oder deren Bausteine entnommen werden, um die entsprechende Steuerungshardware oder Steuerungshardware-Simulation entsprechend einzurichten. Weiterhin können dem digitalen Zwilling auch weitere für die virtuelle Inbetriebnahme sinnvolle oder erforderliche Daten entnommen werden, wie beispielsweise weitere Informationen zur verwendeten Hardwarekomponenten, zu den verwendeten Kommunikationsprotokollen oder ähnliche Informationen.

Die vorstehend genannte Aufgabe wird auch gelöst durch die Verwendung eines Digitalen Zwillings gemäß der vorliegenden Beschreibung zur Prüfung, ob der digitale Zwilling ursprünglichen Planungsdaten der Vorrichtung oder Anlage entspricht. Ursprüngliche Planungsdaten können dabei beispielsweise Daten eines digitalen Entwurfssystems für die Vorrichtung oder Anlage sein, oder auch druckschriftliche Pläne, Zeichnungen, Stücklisten, Funktionsbeschreibungen und/oder andere Planungsdaten für die Vorrichtung oder Anlage.

Im Rahmen der Prüfung, ob der digitale Zwilling den ursprünglichen Planungsdaten der Vorrichtung oder Anlage entspricht, kann beispielsweise überprüft werden, ob der digitalen Zwilling dieselben Komponenten und/oder Subkomponenten aufweist, wie sie im Rahmen der ursprünglichen Planungsdaten ebenfalls festgehalten sind. Weiterhin kann beispielsweise auch überprüft werden, ob die Komponenten und/oder Subkomponenten der Vorrichtung oder Anlage gemäß dem digitalen Zwilling dieselben Beziehungsinformationen aufweisen, wie sie ursprünglich in den Planungsdaten für die Vorrichtung oder Anlage festgehalten sind.

Weitere vorteilhafte Ausgestaltungen finden sich in den Unteransprüchen.

Nachfolgend wird die vorliegende Erfindung beispielhaft mit Bezug auf die beigefügten Figuren näher erläutert.

Es zeigen:
Figur 1: Schematische Darstellung einer Montageeinheit gemäß dem vorliegenden Ausführungsbeispiel;
Figur 2: Auflistung verschiedener Engineering- und/oder Planungsdaten für die Montageeinheit;
Figur 3: schematischer Ablauf der Erstellung eines Digitalen Zwillings für die Montageeinheit;
Figur 4: schematischer Ablauf bei der Erstellung eines Digitalen Zwillings für die Montageeinheit unter Verwendung von Daten verschiedener Engineering-Datenquellen;
Figur 5: Darstellung von Daten verschiedener Datenkategorien der Automatisierungs-Engineeringdaten für eine beispielhafte Beschreibung eines Ablaufs zur Erstellung eines Digitalen Zwillings für die Montageeinrichtung;
Figur 6: Ergebnis eines 1. Clustering Schritts bezüglich der Automatisierungs-Engineeringdaten;
Figur 7: Ergebnis eines 2. Clustering Schritts bezüglich der Automatisierungs-Engineeringdaten;
Figur 8: das Ergebnis des 2. Clustering Schritts mit weiterhin identifizierten Beziehungs-Zuordnungen zwischen verschiedenen Komponenten;
Figur 9: beispielhafte Darstellung von Daten verschiedener Datenkategorien zur mechanischen CAD-Daten der Montageeinheit;
Figur 10: Ergebnis der Anwendung eines 1. und 2. Clustering Schritts sowie einer Beziehungs-Zuordnung auf die mechanischen CAD-Daten;
Figur 11: schematische grafische Darstellung eines Digitalen Zwillings der Montageeinheit basierend auf den in den beispielhaften Verfahrensschritten ermittelten Daten und Informationen.

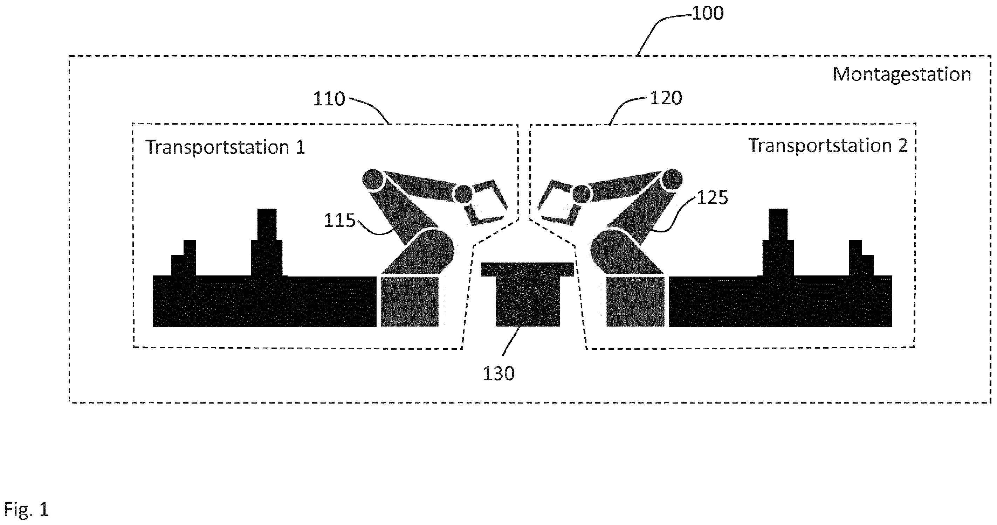

Figur 1 zeigt eine Montagestation 100 oder Montageeinheit 100 mit einer ersten Transportstation 110 sowie einer zweiten Transportstation 120. Dabei umfasst die erste Transportstation 110 eine erste Robotereinheit 115 sowie die zweite Transportstation 120 eine zweite Robotereinheit 125. Weiterhin umfasst die Montagestation 100 eine Montageplattformen 130.

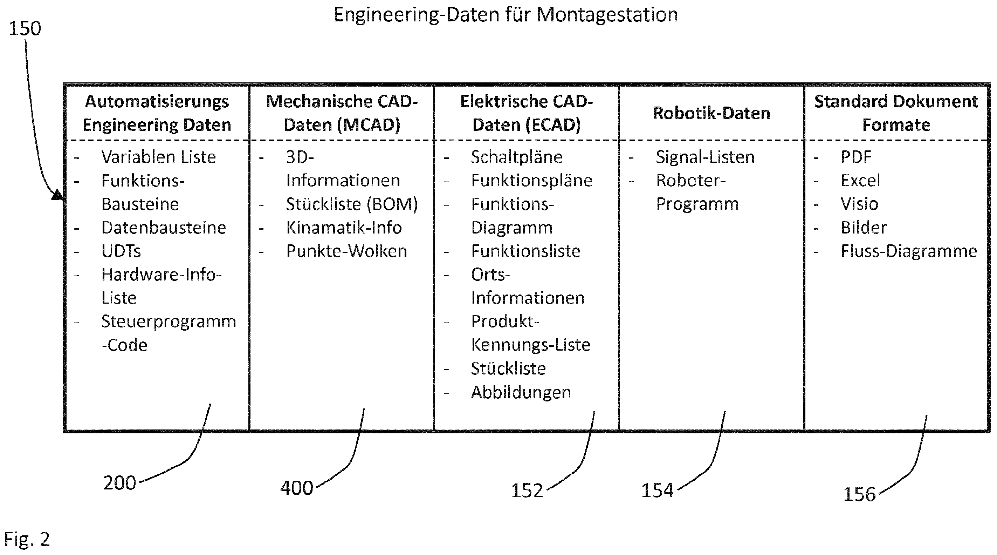

Figur 2 zeigt eine Auflistung von Engineering-Daten 150 für die in Figur 1 dargestellte Montagestation 100. Die Engineeringdaten 150 umfassen dabei Automatisierungs-Engineeringdaten 200, mechanische CAD-Daten (MCAD) 400, elektrische CAD-Daten (ECAD) 152, Robotikdaten 154 sowie Daten in Standard-Dokumentformaten 156.

Dabei umfassen die Automatisierungs-Engineeringdaten 200 Daten, welche im Rahmen einer Automatisierung der Montagestation 100 beispielsweise über entsprechende Controller oder Steuereinrichtungen (z.B. eine oder mehrere speicherprogrammierbare Steuerungen) benötigt oder verwendet werden.

Solche Daten sind beispielsweise eine Variablen Liste der im Rahmen der Steuerung der Montageeinrichtung 100 verwendeten Variablen innerhalb einer solchen Steuerung. Weiterhin umfassen die Automatisierungs-Engineeringdaten 200 zur Steuerung verwendete Funktionsbausteine, Datenbausteine oder auch den Code eines entsprechenden Steuerprogramms zur Steuerung der Montageeinrichtung durch einen entsprechenden Controller oder eine entsprechende speicherprogrammierbare Steuerung.

Die Automatisierungs-Engineeringdaten 200 umfassen auch eine Auflistung von benutzerdefinierten Datenformaten (sogenannte "UDTs" (User Defined Types), die im Rahmen der Erstellung der Automatisierungs-Engineeringdaten 150 erstellt oder eingerichtet wurden.

Weiterhin umfasst die Automatisierungs-Engineeringdaten 200 eine Auflistung von Informationen zu den in der Montagestation 100 verwendeten Hardwarekomponenten. Diese Informationen können beispielsweise Komponenten-Namen, Komponenten-ID-Informationen (beispielsweise Markennamen, Seriennummern, Bestellnummern, o. ä.), Komponenten-Typ-Bezeichnungen, Komponenten Beschreibungsinformationen, eine Auflistung von jeweils verwendeten Parametern und/oder entsprechenden Parametergrenzwerten, geometrische Informationen zu entsprechenden Hardwarekomponente und/oder Zusatz-, Hintergrund- oder Support-Informationen zu den entsprechenden Hardwarekomponenten umfassen.

Die MCAD-Daten 400 umfassen eine Stückliste der Komponenten der Montagestation 100, 3D-Informationen zu den Komponenten der Montagestation 100 sowie zur Montagestation 100 selbst. Weiterhin umfassen die MCAD Daten 400 Kinematik-Informationen bezüglich einzelner Komponenten der Montagestation 100, der Montagestation 100 insgesamt, sowie zwischen verschiedenen der Komponenten der Montagestation 100. Weiterhin umfassen die MCAD-Daten auch Punkte-Wolken-Informationen bezüglich einzelner Komponenten der Montagestation 100 sowie der Montagestation 100 insgesamt.

Die ECAD-Daten 152 umfassen Schaltpläne der Montagestation 100 sowie deren Komponenten, Funktionspläne, Funktions-Diagramme, Funktionslisten sowie Orts-Informationen bezüglich elektrischer Bausteine und Komponenten der Komponenten der Montagestation 100. Die ECAD-Daten umfasst weiterhin eine Stückliste von verwendeten elektrischen und elektronischen Komponenten, eine entsprechende Produkt-Kennungs-Liste sowie Abbildungen von solchen Komponenten und entsprechenden Schaltungen, wie sie im Rahmen der Montagestation 100 sowie der Komponenten der Montagestation 100 verwendet werden.

Die Robotik-Daten 154 der Engineering-Daten 150 für die Montagestation 100 umfassen Signal-Listen der Robotereinheiten 115, 125 der Montagestation 100 sowie Roboter-Programme für die Robotereinheiten 115, 125 der Montagestation 100.

Die in den Engineering-Daten 150 für die Montagestation 100 enthaltenen Informationen in Standard-Dokument-Formaten 156 umfassen PDF-Dateien, Excel-Dateien, Visio-Dateien, Bilder und Fluss-Diagramme mit Informationen bezüglich der Montagestation 100 und Ihrer Komponenten. Solche Informationen können beispielsweise Funktionsbeschreibungen, Bedienungsanleitungen, Parameter- und sonstige Daten-Listen, Bilddarstellungen und ähnliche Informationen sein.

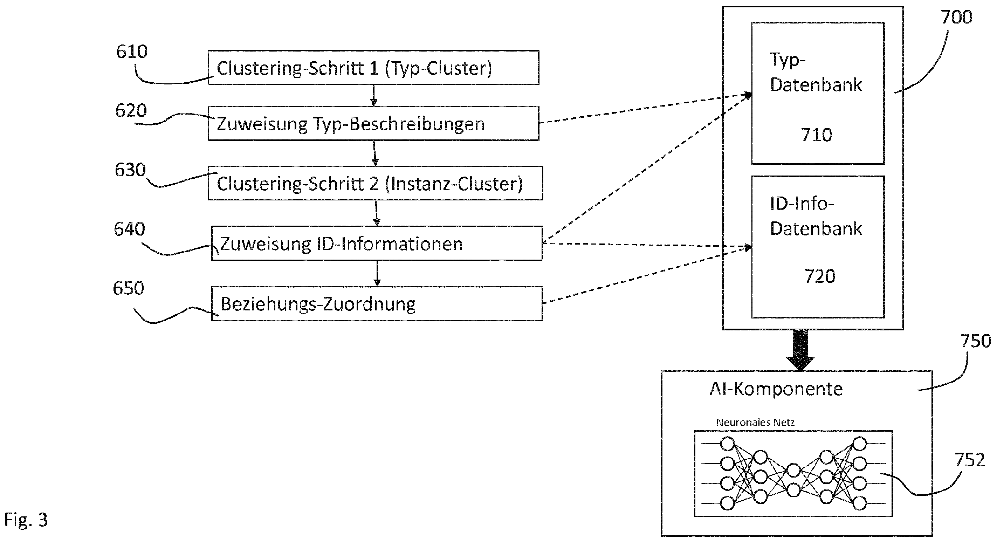

Figur 3 stellt beispielhaft und schematisch einen Beispiel-Ablauf zur Erstellung von Daten für einen digitalen Zwilling 800 für die Montagestation 100 gemäß der vorliegenden Beschreibung. Im weiteren wird dieser Ablauf exemplarisch am Beispiel des Clusterings von Automatisierungs-Engineeringdaten 200 für die Montagestation 100 erläutert. Dabei bilden die Automatisierungs-Engineeringdaten 200 auch ein Beispiel für eine erste Datenquelle gemäß der vorliegenden Beschreibung.

Die Erstellung des Digitalen Zwillings 800 gemäß Figur3 beginnt mit einem ersten Clustering-Schritt 610, in welchem Typ-Cluster innerhalb von für das Clustering ausgewählten Daten aus den Automatisierungs-Engineeringdaten 200 mit einem ersten Clustering-verfahren identifiziert werden. Dabei werden jeweils Daten, die zu einem bestimmten Komponenten-Typ gehören, jeweils einem zugeordneten Cluster zugewiesen. Solche Komponententypen können beispielsweise ein Roboter, eine Linie, eine Montagestation, ein Motor, ein Umrichter, ein Sensor oder ähnliche Komponententypen sein. Dies wird im Zusammenhang mit den nachfolgenden Figuren noch näher erläutert.

In einem zweiten Zuweisung-Schritt 620 werden den identifizierten Typ-Clustern entsprechende Typ-Beschreibungen zugeordnet. Diese Zuweisung kann beispielsweise manuell durch einen Benutzer geschehen oder auch halbautomatisch oder automatisch anhand vor gespeicherten entsprechenden Informationen.

Figur 3 zeigt weiterhin eine Datenbank 700, welche eine Typ-Datenbank 710 sowie eine ID-Info-Datenbank 720 umfasst. Die Ergebnisse des Zuweisung-Schritt 620 werden dann in der Typ Datenbank 710 entsprechend gespeichert, indem unter anderem beispielsweise die Informationen zu den identifizierten Typ-Clustern mit den jeweiligen Typ-Beschreibungen innerhalb der Datenbank assoziiert werden.

Nachfolgend werden in einem zweiten Clustering Schritt 630 ID-Informations-Cluster innerhalb der im ersten Clustering-Schritt 610 gefundenen Typ-Cluster identifiziert. Dabei werden innerhalb eines Typclusters jeweils Daten, die zu einer bestimmten Komponente bzw. Komponenten-Instanz gehören einem entsprechenden Cluster zugeordnet. Solche bestimmten Komponenten bzw. Komponenten-Instanzen können beispielsweise durch eine Seriennummer oder Bestellnummer gekennzeichnet sein, oder durch einen entsprechenden Produktnamen oder auch Herstellernamen. Dabei können innerhalb eines der identifizierten Typ-Cluster beispielsweise verschiedene ID-Informations-Cluster zu verschiedenen Komponenten vorliegen. Weiterhin kann auch der identifizierte Typ-Cluster genau einem ID-Information-Cluster entsprechen, d. h. es gibt genau eine Komponente eines bestimmten Typs.

Nachfolgend wird in einem weiteren Zuweisungsschritt 640 jedem der identifizierten ID-Informations-Cluster eine entsprechende ID-Information zugewiesen. Solche ID-Informationen können dann beispielsweise eben die vorstehend bereits genannten entsprechenden Serien- oder Bestellnummern, Produktnamen oder Herstellernamen sein.

Danach erfolgt ein Beziehungs-Zuordnung-Schritt 650, bei welchen Beziehungen zwischen verschiedenen der identifizierten Typ-Cluster und/oder ID-Informations-Cluster identifiziert werden. Solche Beziehungen können beispielsweise Beziehungen wie Z. B. "Funktional zugeordnet", "ist Teil von", "ist zugeordnet", "ist verbunden mit", o. ä. Beziehungen sein. Die Ermittlung solche Beziehungen kann beispielsweise anhand der Beziehungen einzelner Daten innerhalb der Automatisierungs-Engineering-Daten 200 erfolgen. So können derartige Beziehungen beispielsweise aus Aufruf-Ketten oder -Reihenfolgen von Programmbausteine, Funktionsbausteinen, Datenbausteinen oder ähnlichen Strukturen abgeleitet werden. Weiterhin können Beziehungen auch aus Variablennamen oder ähnlichen Daten geschlossen werden.

Weiterhin werden die in der Typ-Datenbank 710 sowie der ID-Informations-Datenbank 720 gespeicherten Daten genutzt, um eine AI-Komponente 750 mit einem neuronalen Netz 752 zu trainieren. Zum Training des neuronalen Netzes 752 wird beispielsweise die Zuordnung bestimmter Daten zu bestimmten Clustern und/oder auch die Zuordnung bestimmter Bezeichnungen zu bestimmten Clustern und/oder den darin enthaltenen Daten verwendet.

Das trainierte neuronale Netz 752 der AI-Komponente 750 kann dann beispielsweise auch im Rahmen der in Figur 3 dargestellten Clustering Schritte 610, 630 sowie der Zuweisungsschritte 620, 640 eingesetzt werden. So können beispielsweise im Rahmen eines der Clustering Schritte 610, 630 die Quelldaten dem trainierten neuronalen Netz 752 zugeführt werden, welches dann eine entsprechende Cluster-Struktur bzw. entsprechende den einzelnen Daten zugeordnete Cluster oder Cluster-Bezeichnungen ausgeben kann und so entsprechend in den jeweiligen Clustering-Schritten 610, 630 eingesetzte Clustering-Verfahren ergänzen oder gegebenenfalls sogar ersetzen können.

In analoger Weise kann die AI Komponente 750 auch für den Typ-Beschreibung-Zuweisung 620 oder den ID-Information-Zuweisungsschritt 640 verwendet werden. Weiterhin können auch die im Beziehungs-Zuordnungsschritt 650 identifizierten Beziehungen zum entsprechenden Trainieren des neuronalen Netzes 752 verwendet werden und so auch später mit einem entsprechend trainierten neuronalen Netz 752 der Beziehungs-Zuordnungsschritt 650 unterstützt werden.

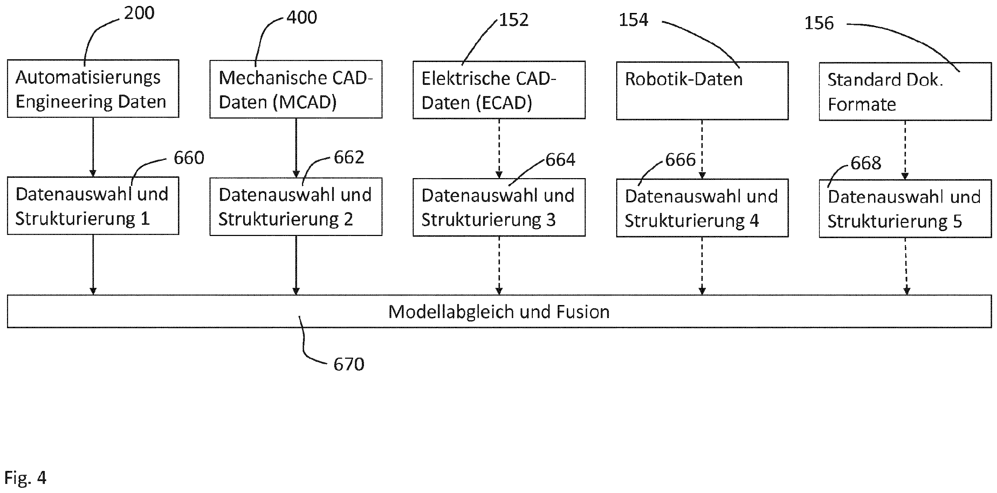

Figur 4 zeigt eine beispielhafte schematische Darstellung für Schritte zur Erstellung eines Digitalen Zwillings 800 gemäß der vorliegenden Beschreibung unter Verwendung von Daten aus verschiedenen Engineering-Datenquellen 200, 400, 152, 154, 156.

Hierzu werden Automatisierungs-Engineeringdaten 200, wie sie beispielsweise im Zusammenhang mit Figur 2 näher erläutert und ausgeführt sind, einem oder mehreren Datenauswahl- und Strukturierungsschritten 660 unterzogen, wie sie beispielsweise im Rahmen von Figur 3 näher erläutert sind. Weiterhin werden mechanische CAD-Daten 400, wie sie beispielsweise ebenfalls im Zusammenhang mit Figur 2 näher erläutert sind, ebenfalls einem oder mehreren Datenauswahl- und Strukturierungsschritten 662 unterzogen, wie sie im Zusammenhang mit Figur 3 bereits näher erläutert wurden. Auf die gleiche Weise werden die elektrischen CAD-Daten 152, die Robotikdaten 154 sowie die Standard Dokument-Daten 156, die ebenfalls im Zusammenhang mit Figur 2 näher erläutert sind, jeweils Datenauswahl- und Strukturierungsschritten 664, 666, 668, unterzogen, wobei diese Datenauswahl- und Strukturierungsschritte 664, 666, 668, dabei jeder für sich unabhängig voneinander wieder gemäß den in Bezug auf Figur 3 näher erläuterten Verfahren ausgestaltet und eingerichtet sein können.

In einem weiteren Datenabgleich- und Fusionsschritt 670 werden die dann die im Rahmen der Datenauswahl- und Strukturierungsschritte 660, 662, 664, 666, 668 jeweils ermittelten Datencluster einander zugeordnet. Diese Zuordnung erfolgt derart, dass jeweils diejenigen Datencluster der verschiedenen Datenquellen 200, 400, 152, 154, 156, jeweils einander zugeordnet werden, die zu gleichen Komponenten-Typen, Komponenten-Typen-Bezeichnungen, Komponenten-ID-Informationen und/oder Komponenten-ID-Information-Bezeichnungen gehören. Dieser Modellabgleich- und Fusionsschritt 670 erzeugt damit ein konsistentes Datenmodell für die Montagestation 100 über die Grenzen der verschiedenen Datenquellen 200, 400, 152, 154, 156 hinweg und ist damit eine gute Grundlage für die Erstellung eines Digitalen Zwillings 800 gemäß der vorliegenden Beschreibung.

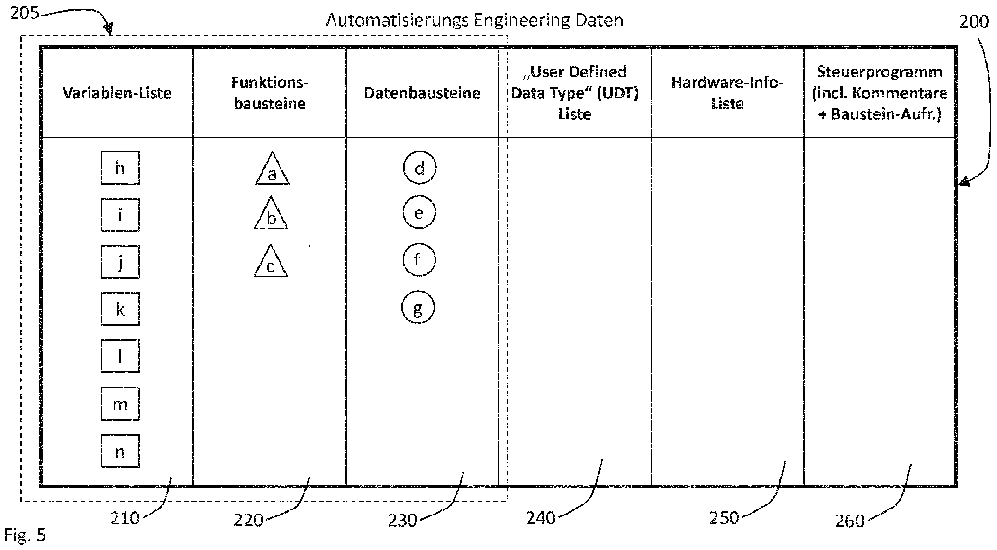

Anhand der Figuren 5-8 sollen nun beispielhaft die in Bezug auf Figur 3 bereits erläuterten Verfahrensschritte 610, 620, 630, 640, 650 am Beispiel von exemplarischen Automatisierung-Engineering Daten 200 für die Montagestation 100 näher erläutert werden.

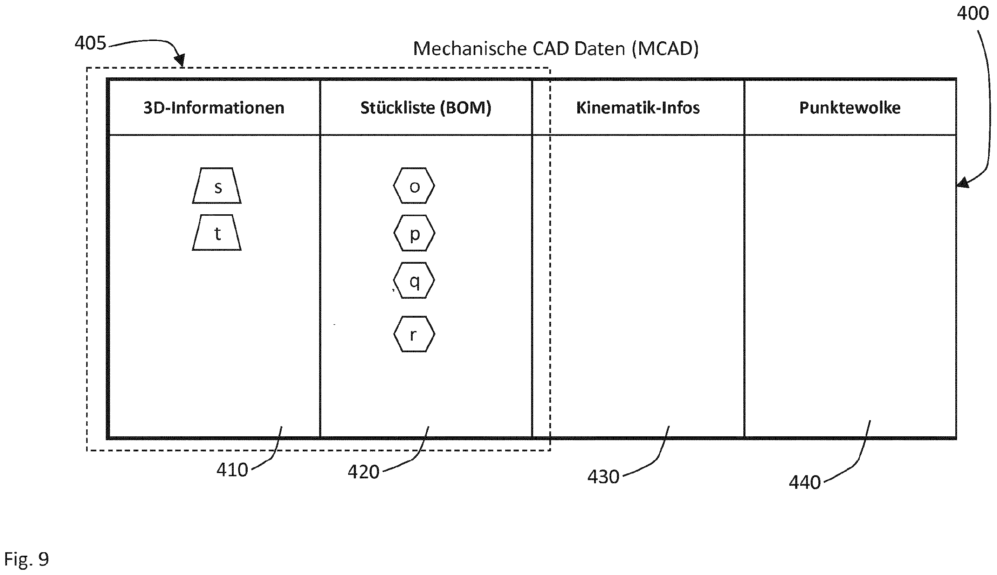

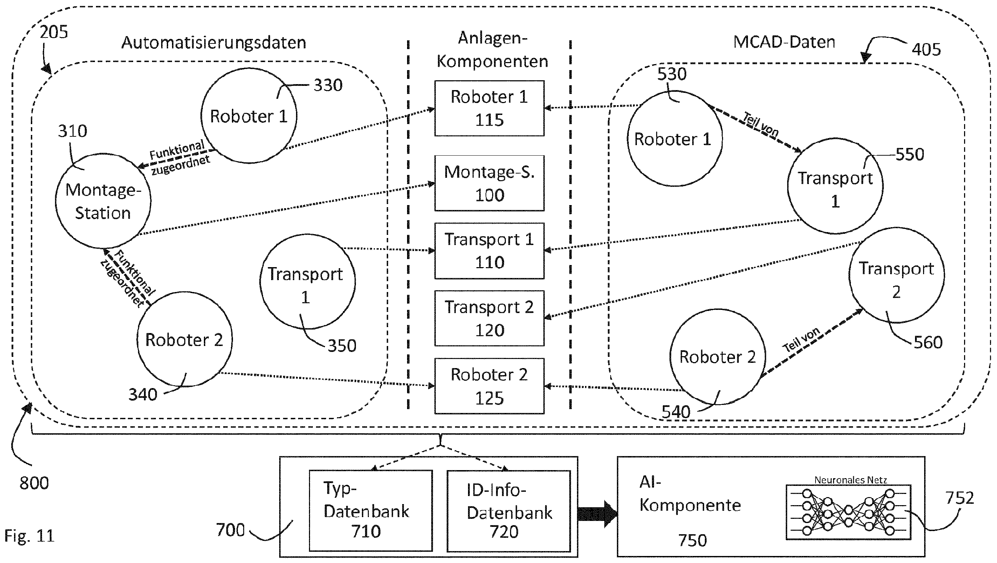

Anhand der Figuren 9-10 wird ein analoges Clustering anhand von exemplarischen MCAD-Daten 400 für die Montagestation 100 erläutert wonach dann in Bezug auf Figur 11 der bereits im Zusammenhang mit Figur 4 näher erläuterte Modellabgleichs- und Fusionsschritt 670 exemplarisch anhand der in Bezug auf die Clusteringsanalyse der Automatisierungs-Engineeringdaten 200 gemäß den Figuren 5-8 und der MCAD-Daten 400 gemäß den Figuren 9-10 identifizierten Datencluster näher erläutert wird.

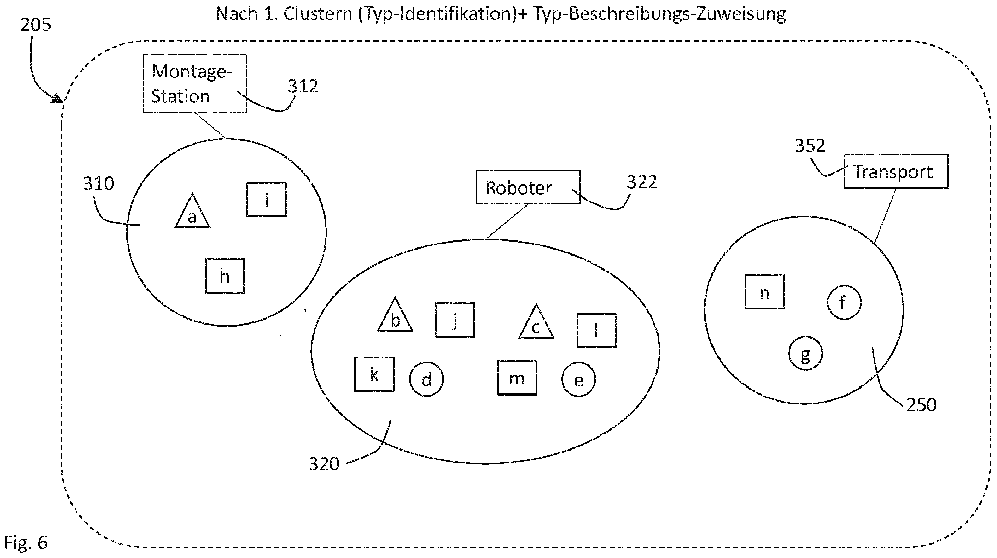

Figur 5 zeigt ein exemplarisches Beispiel für Automatisierungs-Engineeringdaten 200 für die Montagestation 100. In diesem Beispiel umfassen die Automatisierungs-Engineeringdaten 200 eine Variablenliste 210 mit den Variablen h bis n, die jeweils mit einem quadratischen Symbol gekennzeichnet sind. Weiterhin umfassen die Automatisierungs-Engineeringdaten 200 eine Funktionsbausteins-Liste 220 mit Funktionsbausteinen a bis c, welche durch dreieckige Symbole dargestellt sind. Die Automatisierungs-Engineeringdaten 200 umfassen weiterhin eine Datenbausteins-Liste 230 mit Datenbausteinen d bis g, die jeweils durch kreisförmige Symbole dargestellt sind. Weiterhin umfassen die Automatisierungs-Engineeringdaten 200 auch noch eine UDT-Liste, 240, eine Hardware-Information-Liste 250 sowie ein Steuerprogramm 260, welche allerdings im in den Figuren 6-8 dargestellten Clustering-Ausführungsbeispiel nicht verwendet werden.

Figur 6 zeigt das Ergebnis eines ersten Clusteringschritts zur Identifikation von Clustern 310, 320, 250, die jeweils Komponenten-Typen der Montagestation 100 zugeordnet sind. Ein solcher Clustering Schritt kann beispielsweise wie im ersten Clustering-Schritt 610 im Rahmen der Figur 3 näher erläutert ausgestaltet und eingerichtet sein.

Weiterhin zeigt Figur 6 auch das Ergebnis eines nachfolgenden Typ-Beschreibungs-Zuweisungsschritts zur Zuweisung entsprechender Komponenten-Typ-Bezeichnungen 312, 322, 352 zu den entsprechenden Clustern 310, 320, 250. Ein solcher Typ-Zuweisungsschritt kann beispielsweise entsprechend dem ersten Typ-Beschreibungszuweisungsschritt 620 gemäß Figur 3 ausgestaltet und eingerichtet sein.

Für den ersten Clusteringschritt 610 werden aus den Automatisierungs-Engineeringdaten 200 gemäß Figur 5 als eine Datenauswahl 205 bzw. erste Datenquelle 205 die Variablenliste 210, die Funktionsbausteins-Liste 220 sowie die Datenbausteins-Liste 230 ausgewählt. Für das Clustering werden dann in Bezug auf die Variablen h bis n jeweils zugeordnete Variablennamen herangezogen. Für die Funktionsbausteine a bis c werden jeweils von den Funktionsbausteinen verwendete Variablen bzw. deren zugehörigen Namen herangezogen. Für die Daten Bausteine d bis g werden für das Clustering ebenfalls von den Datenbausteinen verwendete Variablen bzw. deren zugehörige Namen herangezogen.

Die ausgewählten für das Clustering verwendeten Variablennamen eignen sich beispielsweise gut für das entsprechende Clustering, da üblicherweise bei der Vergabe von Variablennamen im Rahmen des Engineerings, z.B. für die Montagestation 100, die Zugehörigkeit von Variablen zu bestimmten Komponenten, Subkomponenten oder Anlagenteilen in den Variablennamen mit einkodiert wird. Daher kann beispielsweise aus der Übereinstimmung von bestimmten Teilen eines Variablennamen auf eine entsprechende Gemeinsamkeit bei der Zuordnung dieser Variablen zu verschiedenen Komponenten, Komponententeilen oder Sub-Komponenten der Montagestation 100 geschlossen werden.

Nach der Auswahl und Durchführung eines entsprechenden Clustering Verfahren auf die vorstehend genannten Daten, beispielsweise gemäß der vorliegenden Beschreibung, wird dann das in Figur 6 dargestellte Clusterbild erhalten, in welchem die Variablen i und h sowie der Funktionsbaustein a einem ersten Cluster 310 zugeordnet sind. Die Variablen k, j, 1, m, die Funktionsbausteine b und c sowie die Datenbausteine d und e finden sich in einem zweiten Cluster 320. Weiterhin sind die Variable n in sowie die Datenbausteine g und f einem dritten Cluster 250 zugeordnet.

Nachfolgend werden in einem weiteren Schritt den identifizierten Clustern 310, 320, 250 jeweils entsprechende Komponenten-Typ-Bezeichnung 312, 322, 352 zugewiesen. Diese Komponenten-Typ-Bezeichnungs-Zuweisung kann beispielsweise gemäß der vorliegenden Beschreibung oder auch wie im Zusammenhang mit dem in Figur 3 dargestellten Komponenten-BeschreibungsZuweisungsschritt 620 ausgebildet und eingerichtet sein.

Im vorliegenden Beispiel kann diese Zuweisung von Komponenten-Typ-Bezeichnungen 312, 322, 352 beispielsweise teilautomatisiert erfolgen, wobei beispielsweise für die im ersten Datencluster 310 enthaltenen Daten Meta-Informationen zu diesen Daten bzw. Beschreibungsinformationen zu diesen Daten herangezogen werden und nach Übereinstimmungen in diesen Daten besucht wird. Ergibt sich aus dieser Suche eindeutig eine Gemeinsamkeit, so kann diese beispielsweise einem Nutzer als Vorschlag zur Bestätigung dargestellt werden. Dieser kann den Vorschlag beispielsweise akzeptieren, wodurch dieser Begriff dann als Komponenten-Typ-Bezeichnung 312, 322, 352 für den jeweiligen der Cluster 310, 320, 250 zugewiesen wird. Bei verschiedenen Übereinstimmungen zwischen den genannten Daten kann beispielsweise eine entsprechende Auswahl einem Nutzer dargestellt werden, der dann die geeignete Komponenten-Typ-Bezeichnung 312, 322, 352 für den jeweiligen der Cluster 310, 320, 250 auswählt.

Dieses Verfahren kann auch vollständig automatisiert ablaufen, wonach das System selbst nach einer geeigneten Methodik die gefundenen Übereinstimmungen auswertet und daraus eine entsprechende Komponenten-Typ-Bezeichnung 312, 322, 352 erzeugt und dem jeweiligen der Cluster 310, 320, 250 zugeordnet. Diese Zuordnung kann dann beispielsweise von einem Nutzer nachträglich noch geändert werden.

Dieser Zuweisungs-Schritt kann auch weiterhin vollständig manuell erfolgen, indem ein Nutzer beispielsweise die vorstehend dargestellten Meta- oder Beschreibungsinformationen manuell auswertet und daraus eine entsprechende Komponenten-Typ-Bezeichnung 312, 322, 352 für den jeweiligen der Cluster 310, 320, 250 bildet.

Im vorliegenden Beispiel wurde auf eine der drei vorstehend erläuterten Arten für den ersten Cluster 310 eine Komponenten-Typ-Bezeichnung "Montagestation" 312 ermittelt und diesem Cluster 310 zugeordnet. Funktional bedeutet dies, dass die im Cluster enthaltenen Daten, die Variable a sowie die Funktionsbausteine i und h, der Gesamt-Funktionalität der Montagestation 100 insgesamt zugeordnet werden können.

Auf analoge Weise wurde dem zweiten Cluster 320 eine Cluster-Typ-Bezeichnung "Roboter" 322 zugeordnet. Funktional können also die in diesem zweiten Datencluster 320 enthaltenen Daten der Funktionalität der Roboter 115, 125 innerhalb der Montagestation 100 zugeordnet werden.

Auf wiederum entsprechende Weise wurde dem dritten Cluster 250 die Typ-Bezeichnung "Transport" 352 zugeordnet. Damit kann die Funktionalität der im zweiten Cluster 250 enthaltenen Daten den Transportstationen eins und zwei 110, 120 der Montagestation 100 zugeordnet werden.

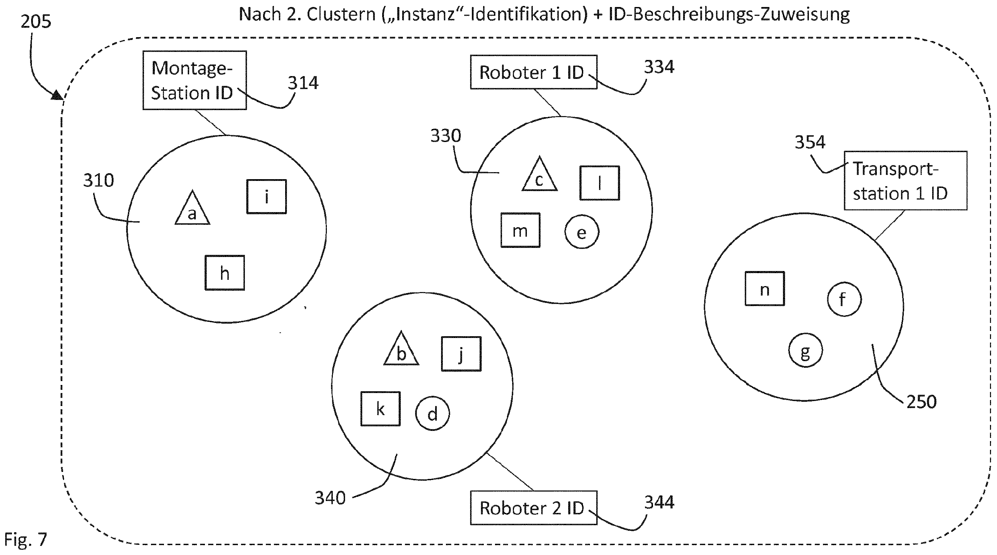

Figur 7 zeigt das Ergebnis, nachdem ein zweiter Clusteringschritt 630 zur Identifizierung von Komponenten-ID-Informationsclustern sowie ein zweiter Zuweisungsschritt 640 zur Zuweisung von Komponenten-ID-Information-Bezeichnungen zu den identifizierten Clustern gemäß den Erläuterungen zu Figur 3 auf die in Figur 6 dargestellten Cluster angewendet wurden.

Das Ergebnis des zweiten Clusteringschritts 630 sind dabei vier Cluster 310, 330, 340, 250. Dabei entsprechen der erste Cluster 310 dem bereits im ersten Clustering Schritt identifizierten ersten Cluster 310 und der vierte Cluster 250 dem im ersten Schritt definierten dritten Cluster 250.

Daraus kann beispielsweise gefolgert werden, dass die gemäß dem ersten Clustering Schritt 610 dem Typ "Montagestation" zugeordneten Daten genau einer Montagestation mit einer spezifischen ID-Information zuordenbar sind. Genauso können die gemäß dem ersten Clusteringschritt 610 dem Typ "Transportstation" zugeordneten Daten im entsprechenden Datencluster 250 genau einer bestimmten Transportstation mit einer bestimmten Transportstation-ID-Kennung zugewiesen werden. Durch den zweiten Clustering Schritt 610 wurden also in diesen beiden Fällen keine neuen Cluster identifiziert, sondern das zweite Clustering 610 hat hier keine Änderung der Clusterstruktur ergeben.

Anders ist der Fall bezüglich des im ersten Clustering Schritt 610 identifizierten zweiten Clusters 320, der dem Komponenten-Typ "Roboter" zugeordnet ist. Die Anwendung des zweiten Clustering Schritts 630 hat hier eine Aufteilung der im Typ-Cluster 320 enthaltenen Daten in zwei Komponenten-ID-Information-Cluster 330, 340 ergeben, wie dies in Figur sieben dargestellt ist. Dabei sind die Variablen 1 bis m, der Funktionsbaustein c sowie der Datenbaustein e einem ersten dieser Cluster 330 zugehörig. Die Variablen j bis k, der Funktionsbaustein b sowie der Datenbaustein d sind einem zweiten dieser Cluster 340 zugeordnet. Daraus kann beispielsweise geschlossen werden, dass die dem Komponenten-Typ "Roboter" zugewiesenen Daten zwei unterschiedlichen Roboter-Instanzen zugeordnet werden können.

Entsprechend dem ersten Beschreibungszuweisungsschritt 620 können dann auch für die im zweiten Clustering Schritt 630 identifizierten Cluster entsprechende Komponenten-ID-Information-Bezeichnungen 314, 334, 344, 354, zugewiesen werden. Hierbei können wiederum anhand der den entsprechenden Variablen zugewiesenen Beschreibungs- und Meta-Informationen dem ersten Cluster 310 eine konkrete ID-Information 314 für die Montagestation 100 zugewiesen werden. Dem zweiten Komponenten-ID-Informationscluster 330 wird dann eine eindeutige ID-Kennung des ersten Roboters 115 der Montagestation 100 zugeordnet, während dem dritten Komponenten- ID-Informations-Cluster 340 eine eindeutige ID Kennung des zweiten Roboters 125 der Montagestation 100 zugewiesen wird. Dem vierten Komponenten-ID-Informationscluster 250 wurde dann auf analoge Weise eine eindeutige ID-Kennung 352 für die erste Transportstation 110 der Montagestation 100 zugeordnet.

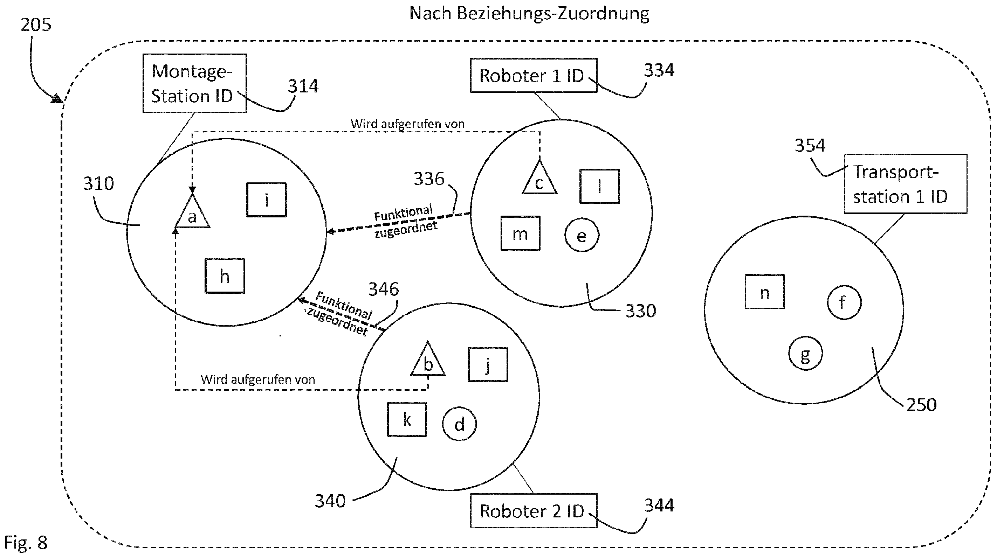

Figur 8 zeigt das Ergebnis eines auf die vorhergehenden Verfahrensschritte 610, 620, 630, 640, nachfolgenden Beziehungs-Zuordnungsschritt 650, wie er in Bezug auf Figur 3 näher erläutert wurde. Dieser Beziehungs-Zuordnungsschritt 650 wurde auf das entsprechende Clustering-Ergebnis gemäß Figur 7 angewendet. Zur Identifikation von Beziehungs-Zuordnungen zwischen den in Figur sieben dargestellten Clustern 310, 330, 340, 250 wurde eine der Funktionsbausteins-Liste 220 entnehmbare Aufrufstruktur bzw. Aufrufskette für die Funktionsbausteine a bis c automatisiert ausgewertet. Alternativ kann diese Auswertung auch teilautomatisiert gemäß der vorliegenden Beschreibung oder auch manuell erfolgen.

Das Ergebnis diese Auswertung ist in Figur 8 dargestellt. Dabei ist vermittels strichpunktierter Pfeile zwischen den Funktionsbausteinen a und c sowie a und b dargestellt, dass der Funktionsbausteinen c vom Funktionsbaustein a aufgerufen wird und der Funktionsbaustein b ebenfalls vom Funktionsbaustein a. Der Funktionsbaustein a ist dem Cluster 310 für die Montagestation 100 mit der Montagestation-Kennung 314 zugewiesen, der Funktionsbaustein b dem zweiten Roboter 125 mit der zweiten Roboter ID Kennung 344, sowie der Funktionsbausteinen c dem ersten Roboter 115 mit der ersten Roboter ID-Kennung 334. Aus der vorstehend ausgeführten Aufrufs-Zuordnung kann dann geschlossen werden, dass der dem ersten Roboter 115 zugewiesene Datencluster 330 funktional dem der Montagestation 100 zugeordneten Datencluster 310 zugeordnet ist, was über einen gestrichelten Pfeil 336 in Figur 8 dargestellt ist. Analog ist der dem zweiten Roboter 125 zugeordnete Datencluster 340 ebenfalls dem der Montagestation 100 zugeordneten Datencluster 310 zugeordnet, was wiederum über einen gestrichelten Pfeil 346 in Figur 8 dargestellt ist.

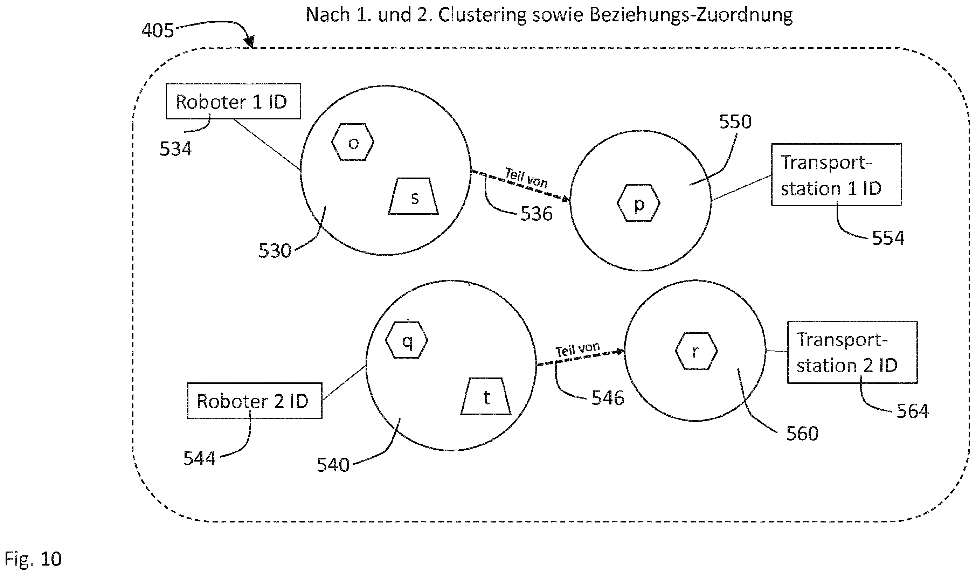

In den Figuren 9 und 10 ist eine Anwendung der Verfahrensschritte 610, 620, 630, 640, 650, die in Bezug auf Figur 3 näher erläutert wurden, auf der Montagestation 100 zugeordnete mechanische CAD Daten 400 beispielhaft erläutert. Dabei entspricht der prinzipielle Ablauf der Verfahrensschritte 610, 620, 630, 640, 650 dem vorstehend in Bezug auf die Figu- ren 5 bis 8 erläuterten Ablauf in Bezug auf ein entsprechendes Clustering der Automatisierungs-Engineeringdaten 200 für die Montagestation 100.

Figur 9 zeigt MCAD-Daten 400 für die Montagestation 100. Diese MCAD Daten 400 umfassen eine Liste von 3D-Informationen 410 zu Komponenten der Montagestation 100, die durch Trapeze mit den Buchstaben s bis t in Figur 9 dargestellt sind. Weiterhin umfassen die MCAD-Daten 400 eine Stückliste 420, welche Informationen zu vier Einzelkomponenten der Montagestation 100 enthält, die durch Sechsecke mit den Buchstaben o bis r symbolisiert sind. Weiterhin umfassen die MCAD-Daten 400 eine Liste mit Kinematik-Informationen 430 sowie eine Liste mit Punkte-Wolken-Informationen 440. Für die nachfolgend erläuterten Clustering Schritte wurden die 3D-Informationsliste 410 sowie die Stückliste 420 ausgewählt, was durch eine als punktiertes Rechteck dargestellte Auswahl 405 in Figur 9 dargestellt ist.

Figur 10 zeigt das Ergebnis des Clusterings der MCAD-Daten gemäß der in Figur 9 dargestellten Auswahl 405 aus der gesamten Menge der MCAD Daten 400. Das in Figur 10 dargestellte Clustering-Ergebnis für die MCAD Daten 405 entspricht dem in Figur 8 dargestellten Clustering Ergebnis für die entsprechenden Automatisierung-Engineering Daten 205. Dabei zeigt Figur zehn das Ergebnis des Clustering, nachdem auf die MCAD-Daten 405 die in Bezug auf Figur drei erläuterten Verfahrensschritte 610, 620, 630, 640, 650 angewendet wurden. Dabei erfolgt die Anwendung dieser Verfahrensschritte analog der Anwendung dieser Schritte wie sie in Bezug auf die Automatisierungs-Engineeringdaten 200 im Zusammenhang mit den Figuren 5 bis 8 erläutert wurden.

Figur 10 zeigt daher das Ergebnis nach einer Abfolge eines ersten Clustering Schritts 610 nach Komponenten-Typen, eines ersten Bezeichnungsschritts der dabei identifizierten Cluster mit Komponenten-Typ-Bezeichnungen 620, einem zweiten Clustering Schritt 630 nach Komponenten-ID-Informationen und einem die nachfolgenden zweiten Bezeichnung Schritt 640 zur Bezeichnung der dabei identifizierten Cluster mit Komponenten-ID-Information-Bezeichnungen. Als letzter Schritt folgte dann wiederum ein Beziehungs-Zuordnungsschritt 650 zur Identifikation von Beziehungen zwischen den im zweiten Clustering Schritt 630 identifizierten ID-Informations-Cluster.

Dabei ergibt sich dann, wie in Figur 10 dargestellt, ein erster Cluster 530, welcher dem ersten Roboter 115 der Montagestation 100 zugeordnet ist, und dem daher eine ID-Information für diesen ersten Roboter 534 zugewiesen wurde. Dieser erste Robotercluster 530 umfasst die Teile "∘" gemäß der Stückliste 420 der MCAD Daten 400 und die 3D-Information "s". Ein zweiter Cluster 540 ist dem zweiten Roboter 125 der Montagestation 100 zugewiesen. Daher ist Cluster 540 eine ID-Kennung des zweiten Roboters 544 als Komponenten-ID-Information-Bezeichnung 544 zugeordnet. Diese zweiter Robotercluster 540 umfasst Informationen zur Komponente "q" aus der Stückliste 420 der MCAD Daten 400 und die 3D-Information "t".

Weiterhin zeigt Figur 10 einen der ersten Transportstation 110 zugewiesenen Cluster 550, welchem eine ID-Kennung dieser ersten Transportstation 554 als Komponenten-ID-Informations-Bezeichnung zugeordnet ist. Dieser Cluster enthält die Information "p" aus der Stückliste 420 der MCAD-Daten 400. Weiterhin zeigt Figur 10 einen der zweiten Transportstation 120 zugewiesenen Cluster 560, welchem die ID-Kennung dieser zweiten Transportstation 564 als Komponenten-ID-Information-Bezeichnung zugeordnet ist. Dieser Cluster enthält die Information "r" aus der Stückliste 420 der MCAD Daten 400.

Durch Analyse von beispielsweise in der Stückliste 420 der MCAD-Daten 400 enthaltenen Informationen zu den Komponenten o bis r wurden weiterhin die Informationen ermittelt, dass der erste Roboter 115 ein Teil der Transportstation 110 ist und der zweite Roboter 125 ein Teil der Transportstation 120. Diese Beziehungen wurden den jeweiligen Clustern 530, 540, 550, 560 für die genannten Komponenten 110, 115, 120, 125 ebenfalls zugeordnet, indem der Cluster 530 für den ersten Roboter 115 und dem Cluster 550 für die erste Transportstation 110 eine entsprechende "Teil von" Beziehung zugeordnet wurde, welche in Figur 10 durch einen gestrichelten Pfeil 536 zwischen diesen Clustern 530, 550 symbolisiert ist. Entsprechend ist dem Cluster 540 für den zweiten Roboter 125 und dem Cluster 560 für die zweite Transportstation 120 eine entsprechende "Teil von" Beziehung zugeordnet, welche in Figur 10 durch einen gestrichelten Pfeil 546 zwischen beiden Clustern symbolisiert ist.

Figur 11 zeigt das Ergebnis der Anwendung eines Modellabgleichs- und Fusionsschritts 670, wie er beispielsweise im Zusammenhang mit den Erläuterungen in Bezug auf Figur 4 näher dargestellt wurde. Dabei ist in Figur 11 in einem linken Teil eine vereinfachte Darstellung des Clustering-Ergebnisses bezüglich der Automatisierungs-Engineeringdaten 205 gezeigt, wie sie in Figur 8 dargestellt ist. Weiterhin ist in einem rechten Teil in Figur 11 eine vereinfachte Darstellung des Clustering-Ergebnisses bezüglich der MCAD-Daten 405 gezeigt, wie es in Figur 10 dargestellt wurde.

Im Rahmen des Modellabgleichs- und Fusionsschritt 670 wurden dann sämtliche identifizierten Komponenten-ID-Informations-Bezeichnungen 314, 334, 344, 354, 534, 544, 554, 564 gesammelt und diesen Bezeichnungen jeweils entsprechende Symbole für entsprechende Komponenten 100, 110, 115, 120, 125 zugeordnet. Diese symbolische Komponentendarstellung für die Montagestation 100, die erste Transportstation 110, den ersten Roboter 115 der ersten Transportstation 110 sowie die zweite Transportstation 120 mit ihrem zweiten Roboter 125 ist in einem mittleren Abschnitt in Figur 11 dargestellt.

Weiterhin ist in Figur 11 jeweils durch Pfeile zwischen den jeweiligen Clustern 330, 310, 340, 350 der Automatisierungs-Engineeringdaten 205 sowie der jeweiligen Cluster 530, 540, 550, 560 der MCAD-Daten 405 eine Zuordnung der entsprechenden Cluster zu diesen im mittleren Teil von Figur 11 durch Rechtecke symbolisierten Anlagenteilen 100, 110, 115, 120, 125 dargestellt.

Die hierbei identifizierte und in Figur 11 dargestellte Information wird nun zur Erstellung eines entsprechenden Digitalen Zwillings 800 für die Montagestation 100 als entsprechende Datenbank fixiert. Dabei werden sowohl die Zuordnungen der einzelnen Daten aus den Automatisierungs-Engineeringdaten 205 und MCAD-Daten 405 zu den verschiedenen Clustern, deren jeweilige Komponenten-Typ-Bezeichnungen als auch deren Komponenten-ID-Information-Bezeichnungen sowie auch die Beziehungen der verschiedenen Cluster untereinander und zu den Komponenten der Montagestation 100 entsprechend im Digitalen Zwilling 800 erfasst und gespeichert.

Weiterhin sind innerhalb dieses Digitalen Zwillings 800 auch entsprechende Links der einzelnen Daten im Digitalen Zwilling 800 zu den ursprünglichen Automatisierungs-Engineering-Quelldaten 205 und MCAD-Quelldaten 405 hinterlegt, über welche wieder eine Verbindung und damit auch ein Zugriff auf die ursprüngliche Datenquelle ermöglicht wird. Damit ist auch der Zugriff auf die komplette dort gespeicherte Information möglich. Vorteilhafterweise eignet sich beispielsweise eine Speicherung dieses Digitalen Zwillings 800 in einem Knowledge-Graph-Datenbankformat oder auch einem vergleichbaren NoSQL-Datenbankformat. Dabei kann in Figur 11 die Darstellung des Ergebnisses des Modellabgleichs- und Fusionsschritts 670 als eine mögliche Darstellung des Digitalen Zwillings 800 der Montagestation 100 betrachtet werden.

Auf der Basis dieses Digitalen Zwillings 800 ist es dann beispielsweise weiterhin möglich, eine Simulation für die Montagestation 100 oder Teile davon zu erstellen. Hierzu können beispielsweise die im Rahmen der Erstellung des digitalen Zwillings 800 identifizierten Komponenten-ID-Information-Bezeichnungen 314, 334, 344, 354, 534, 544, 554, 564 herangezogen werden, um passend zu den entsprechenden Komponenten entsprechende Simulationen dafür auszuwählen, beispielsweise aus einer Datenbank-Sammlung derartiger Simulationen. Diese Simulationen können dann weiterhin unter Verwendung der entsprechenden zugehörigen Daten aus den zugeordneten Datenclustern parametriert, eingerichtet und untereinander verbunden werden. Auf diese Weise kann aufgrund des erstellten Digitalen Zwillings 800 eine Simulation der Montagestation 100 erstellt werden. Auch das Erstellen dieser Simulation kann wiederum als ein Erstellen eines Digitalen Zwillings im Sinne der vorliegenden Beschreibung betrachtet werden. Auch die so erstellte Simulation ist eine weitere mögliche Ausgestaltung für einen digitalen Zwilling im Sinne der vorliegenden Beschreibung.

In Figur 11 ist weiterhin die Datenbank 700 mit der Typ Datenbank 710 sowie der ID-Information-Datenbank 720 dargestellt, die im Rahmen der Beschreibung zur Figur 3 bereits erläutert wurden. Figur 11 zeigt auch die AI-Komponente 750 mit dem neuronalen Netz 752, welche ebenfalls bereits im Rahmen der Beschreibung zur Figur 3 näher erläutert wurden. Durch entsprechende Verbindungpfeile in Figur 11 ist symbolisiert, dass das Ergebnis und die Informationen im digitalen Zwilling 800 im Rahmen der Typ Datenbank 710 und der ID-Information-Datenbank 720 gespeichert werden und diese Daten auch zum Training des neuronalen Netzes 752 in der AI-Komponente 750 herangezogen wird - wie bereits im Zusammenhang mit Figur 3 erläutert.

## Patentansprüche

1. Verfahren zur Erstellung eines Digitalen Zwillings (800) einer Anlage oder Vorrichtung (100),
wobei eine erste Datenquelle mit Automatisierungs-Engineeringdaten (205) bezüglich einer Automatisierung und/oder Automatisierungs-Planung der Anlage oder Vorrichtung (100) oder Teilen davon vorliegt, und
wobei die Automatisierungs-Engineeringdaten (205) Daten mindestens zweier Datenkategorien umfassen,
das Verfahren **gekennzeichnet durch** die nachfolgenden Schritte:
a.) Identifizieren von Komponenten-Datenclustern (310, 320, 330, 340, 250) innerhalb der Daten der ersten Datenquelle (205) unter Verwendung eines als maschinelles Lernverfahren ausgebildeten Clustering-Verfahrens, wobei die Komponenten-Datencluster (310, 320, 330, 340, 250) Komponenten-Typen oder Komponenten-ID-Informationen bezüglich der Anlage oder Vorrichtung (100) zuordenbar oder zugeordnet sind,
b.) automatisiertes oder teilautomatisiertes Zuweisen jeweils einer Komponenten-Typ-Bezeichnung (312, 322, 352) oder jeweils einer Komponenten-ID-Informations-Bezeichnung (314, 334, 344, 354) zu mindestens einem der identifizierten Komponenten-Datencluster (310, 320, 330, 340, 250),
wobei das automatisierte oder teilautomatisierte Zuweisen unter Verwendung einer Clusterzuordnungs-Datenbank und/oder eines Clusterzuordnungs-Neuronalen-Netzes erfolgt,
c.) Erstellen und Speicherung des Digitalen Zwillings (800) der Anlage oder Vorrichtung (100), umfassend ein Anordnen und/oder Speichern der gemäß Verfahrensschritt b.) erzeugten Informationen bezüglich der dem mindestens einen der identifizierten Komponenten-Datencluster jeweils zugewiesenen Komponenten-Typ-Bezeichnung oder Komponenten-ID-Informations-Bezeichnung, als Digitale-Zwilling-Datenbank.

2. Verfahren gemäß Anspruch 1,
**dadurch gekennzeichnet,**
**dass** nachfolgend Verfahrensschritt a.) und vor Verfahrensschritt c.) die nachfolgenden Verfahrensschritte durchgeführt werden:
a1.) Identifizieren von Sub-Komponenten-Datenclustern (330, 340) innerhalb der gemäß Anspruch 1 identifizierten Komponenten-Datencluster (320), wobei die Sub-Komponenten-Datencluster (330, 340) Sub-Komponenten-Typen oder Sub-Komponenten-ID-Informationen bezüglich der Anlage oder Vorrichtung (100) zuordenbar oder zugeordneten sind,
und
**dass** nachfolgend Verfahrensschritt a1.) und vor Verfahrensschritt c.) der nachfolgende Verfahrensschritt durchgeführt wird:
b1.) Zuweisung jeweils einer Sub-Komponenten-Typ-Bezeichnung oder jeweils einer Sub-Komponenten-ID-Informations-Bezeichnung (334, 344) zu mindestens einem der identifizierten Sub-Komponenten-Datencluster (340).

3. Verfahren gemäß Anspruch 1 oder 2,
**dadurch gekennzeichnet,**
**dass** nachfolgend Verfahrensschritt a.) und/oder a1.) der nachfolgende Verfahrensschritt durchgeführt wird:
b2.) Identifizieren von Beziehungs-Informationen (336, 346) der gemäß Verfahrensschritt a.) identifizierten Komponenten-Datencluster (310, 320, 330, 340, 250) durch Auswertung der Daten der ersten Datenquelle (205) und/oder Zusatzinformationen zu diesen Daten,
und/oder
Identifizieren von Beziehungs-Informationen (336, 346) zwischen gemäß Verfahrensschritt a1.) identifizierten Sub-Komponenten-Datencluster durch Auswertung der Daten der ersten Datenquelle und/oder Zusatzinformationen zu diesen Daten wobei weiterhin
in Verfahrensschritt c.) der Digitale Zwilling (800) weiterhin unter Verwendung von identifizierten Beziehungs-Informationen (336, 346) erstellt wird.

4. Verfahren gemäß einem der vorstehenden Ansprüche,
**dadurch gekennzeichnet,**
**dass** eine zweite Datenquellen (405) aus der nachfolgenden Liste von Datenquellen vorliegt:
- MCAD-Daten (400) bezüglich einer mechanischen und/oder räumlichen Planung der Vorrichtung oder Anlage (100) oder Teilen davon,
und/oder bezüglich einer mechanischen und/oder räumlichen Ausgestaltung der Vorrichtung oder Anlage oder Teilen davon,
- ECAD-Daten (152) bezüglich einer elektrischen Planung und/oder Stromlaufplanung der Vorrichtung oder Anlage oder Teilen davon,
und/oder bezüglich einer elektrischen Ausgestaltung und/oder realisierten Stromlaufplanung der Vorrichtung oder Anlage oder Teilen davon,
- Roboter-Daten (154) bezüglich einer Planung und/oder einer Ausgestaltung von einem oder mehreren Robotern (115, 125) der Vorrichtung oder Anlage (100),
- Beschreibungs-Daten (156) bezüglich einer Planung und/oder Ausgestaltung der Vorrichtung oder Anlage (100) oder Teilen davon,
wobei das Verfahren weiterhin vor dem Erstellen des Digitalen Zwillings (800) gemäß Merkmal c.) zusätzlich die nachfolgenden Verfahrensschritte umfasst:
aa.) Identifizieren von Komponenten-Datenclustern (530, 540, 550, 560) innerhalb der zweiten Datenquelle (405), wobei die Komponenten-Datencluster (530, 540, 550, 560) Komponenten-Typen oder Komponenten-ID-Informationen bezüglich der Anlage oder Vorrichtung (100) zuordenbar oder zugeordnet sind,
bb.) Zuweisen jeweils einer Komponenten-Typ-Bezeichnung oder jeweils einer Komponenten-ID-Informations-Bezeichnung (534, 544, 554, 564) zu mindestens einem der in Verfahrensschritt aa.) identifizierten Komponenten-Datencluster (530, 540, 550, 560),
bbb.) Zuordnung der in Verfahrensschritt b.) gemäß Anspruch 1 oder 2 identifizierten Komponenten-Datencluster (310, 320, 330, 340, 250) und/oder Sub-Komponenten-Datencluster der Daten der ersten Datenquelle zu den in Verfahrensschritt bb.) identifizerten Komponenten-Datenclustern (530, 540, 550, 560) .

5. Verfahren gemäß Anspruch 4,
**dadurch gekennzeichnet,**
**dass** nachfolgend Verfahrensschritt aa.) und vor Verfahrensschritt bbb.) die nachfolgenden Verfahrensschritte durchgeführt werden:
aa1.) Identifizieren von Sub-Komponenten-Datenclustern innerhalb der gemäß Anspruch 4 identifizierten Komponenten-Datencluster (530, 540, 550, 560), wobei den Sub-Komponenten-Datenclustern (530, 540, 550, 560) Sub-Komponenten-Typen oder Sub-Komponenten-ID-Informationen bezüglich der Anlage oder Vorrichtung zuordenbar oder zugeordneten sind,
und
bb1.) Zuweisung jeweils einer Sub-Komponenten-Typ-Bezeichnung oder jeweils einer Sub-Komponenten-ID-Informations-Bezeichnung (534, 544, 554, 564) zu mindestens einem der identifizierten Sub-Komponenten-Datencluster.

6. Verfahren gemäß Anspruch 4 oder 5,
**dadurch gekennzeichnet,**
**dass** nachfolgend Verfahrensschritt aa.) und/oder aa1.) der nachfolgende Verfahrensschritt durchgeführt wird:
bb2.) Identifizieren von Beziehungs-Informationen (536, 546) zwischen gemäß Verfahrensschritt aa.) identifizierten Komponenten-Datenclustern (530, 540, 550, 560) durch Auswertung der Daten der zweiten Datenquelle (405) und/oder Zusatzinformationen zu diesen Daten,
und/oder
Identifizieren von Beziehungs-Informationen zwischen gemäß Verfahrensschritt aa1.) identifizierten Sub-Komponenten-Datenclustern durch Auswertung der Daten der zweiten Datenquelle und/oder Zusatzinformationen zu diesen Daten wobei weiterhin
in Verfahrensschritt c.) der Digitale Zwilling (800) weiterhin unter Verwendung von identifizierten Beziehungs-Informationen (536, 546) erstellt wird.

7. Verfahren gemäß einem der vorstehenden Ansprüche,
**dadurch gekennzeichnet,**
**dass** nachfolgend Verfahrensschritt a.), a1.), aa.), aa1.), b.), b1.), b2.), bb.), bb1.), bb2.), bbb.) und/oder weiterer Verfahrensschritte gemäß einem der vorstehenden Ansprüche ein Ergebnis des jeweiligen Verfahrensschritts in einer Clusterzuordnungs-Datenbank (700) gespeichert wird
und/oder
**dass** nachfolgend Verfahrensschritt a.), a1.), aa.), aa1.), b.), b1.), b2.), bb.), bb1.), bb2.), bbb.) und/oder weiterer Verfahrensschritte gemäß einem der vorstehenden Ansprüche ein Clusterzuordnungs-Neuronales-Netz (752) unter Verwendung von Ergebnissen des jeweiligen Verfahrensschritts trainiert wird.

8. Verfahren gemäß Anspruch 7,
**dadurch gekennzeichnet,**
**dass** die Clusterzuordnungs-Datenbank (700) und/oder das Clusterzuordnungs-Neuronale-Netz (752) bei der Durchführung eines Verfahrens gemäß einem der Ansprüche 1 bis 6 verwendet wird, insbesondere, dass das Identifizieren der Komponenten-Datencluster (310, 320, 330, 340, 250, 530, 540, 550, 560) und/oder der Sub-Komponenten-Datencluster unter Verwendung der Clusterzuordnungs-Datenbank (700) und/oder des Clusterzuordnungs-Neuronalen-Netzes erfolgt (752),
und/oder
**dass** das Zuweisen der Komponenten-Typ-Bezeichnung (312, 322, 352) oder Komponenten-ID-Informations-Bezeichnung (314, 334, 344, 354, 534, 544, 554, 564) und/oder der Sub-Komponenten-Typ-Bezeichnung oder jeweils einer Sub-Komponenten-ID-Informations-Bezeichnung unter Verwendung der Clusterzuordnungs-Datenbank und/oder des Clusterzuordnungs-Neuronalen-Netzes erfolgt.

9. Verfahren gemäß einem der vorstehenden Ansprüche,
**dadurch gekennzeichnet,**
**dass** der Digitale-Zwilling (800) und/oder die Clusterzuordnungs-Datenbank (700) als eine relationale Datenbank, eine NoSQL-Datenbank und/oder eine Knowledge-Graph-Datenbank ausgebildet ist.

10. Verfahren zur Erstellung eines Digitalen Zwillings (800) einer Anlage oder Vorrichtung (100) gemäß einem der Ansprüche 1 bis 9,
wobei eine erste Datenquelle (205) aus der nachfolgenden Liste von Datenquellen vorliegt:
- Automatisierungs-Engineeringdaten (205) bezüglich einer Automatisierung und/oder Automatisierungs-Planung der Anlage oder Vorrichtung (100) oder Teilen davon,
- MCAD-Daten (400) bezüglich einer mechanischen und/oder räumlichen Planung der Vorrichtung oder Anlage (100) oder Teilen davon,
und/oder bezüglich einer mechanischen und/oder räumlichen Ausgestaltung der Vorrichtung oder Anlage oder Teilen davon,
- ECAD-Daten (152) bezüglich einer elektrischen Planung und/oder Stromlaufplanung der Vorrichtung oder Anlage oder Teilen davon,
und/oder bezüglich einer elektrischen Ausgestaltung und/oder realisierten Stromlaufplanung der Vorrichtung oder Anlage oder Teilen davon,
- Roboter-Daten (154) bezüglich einer Planung und/oder einer Ausgestaltung von einem oder mehreren Robotern (115, 125) der Vorrichtung oder Anlage (100),
und wobei die erste Datenquelle (205) Daten mindestens zweier Datenkategorien umfassen.

11. Verfahren gemäß Anspruch 10,
**dadurch gekennzeichnet,**
**dass** eine von der ersten Datenquelle (205) unterschiedliche zweite Datenquelle (405) aus der nachfolgenden Liste von Datenquellen ausgewählt wird:
- Automatisierungs-Engineeringdaten (205) bezüglich einer Automatisierung und/oder Automatisierungs-Planung der Anlage oder Vorrichtung (100) oder Teilen davon,
- MCAD-Daten (400) bezüglich einer mechanischen und/oder räumlichen Planung der Vorrichtung oder Anlage (100) oder Teilen davon,
und/oder bezüglich einer mechanischen und/oder räumlichen Ausgestaltung der Vorrichtung oder Anlage oder Teilen davon,
- ECAD-Daten (152) bezüglich einer elektrischen Planung und/oder Stromlaufplanung der Vorrichtung oder Anlage oder Teilen davon,
und/oder bezüglich einer elektrischen Ausgestaltung und/oder realisierten Stromlaufplanung der Vorrichtung oder Anlage oder Teilen davon,
- Roboter-Daten (154) bezüglich einer Planung und/oder einer Ausgestaltung von einem oder mehreren Robotern (115, 125) der Vorrichtung oder Anlage (100),
- Beschreibungs-Daten (156) bezüglich einer Planung und/oder Ausgestaltung der Vorrichtung oder Anlage (100) oder Teilen davon,
wobei das Verfahren weiterhin vor dem Erstellen des Digitalen Zwillings (800) gemäß Merkmal c.) zusätzlich die nachfolgenden Verfahrensschritte umfasst:
aa.) Identifizieren von Komponenten-Datenclustern (530, 540, 550, 560) innerhalb der zweiten Datenquelle (405), wobei die Komponenten-Datencluster (530, 540, 550, 560) Komponenten-Typen oder Komponenten-ID-Informationen bezüglich der Anlage oder Vorrichtung (100) zuordenbar oder zugeordnet sind,
bb.) Zuweisen jeweils einer Komponenten-Typ-Bezeichnung oder jeweils einer Komponenten-ID-Informations-Bezeichnung (534, 544, 554, 564) zu mindestens einem der in Verfahrensschritt aa.) identifizierten Komponenten-Datencluster (530, 540, 550, 560),
bbb.) Zuordnung der in Verfahrensschritt b.) gemäß Anspruch 10 oder 11 identifizierten Komponenten-Datencluster (310, 320, 330, 340, 250) und/oder Sub-Komponenten-Datencluster der ersten Datenquelle (205) zu den in Verfahrensschritt bb.) identifizerten Komponenten-Datenclustern (530, 540, 550, 560) .

12. Verfahren gemäß einem der Ansprüche 10 oder 11,
**dadurch gekennzeichnet,**
**dass** das Verfahren weiterhin gemäß den Merkmalen eines oder mehrerer der Ansprüche 5 bis 9 entsprechend ausgebildet und eingerichtet ist.

13. Digitaler Zwilling für eine Vorrichtung oder Anlage,
**dadurch gekennzeichnet,**
**dass** der Digitale Zwilling (800) unter Verwendung eines Verfahrens gemäß einem der Ansprüche 1 bis 12 erstellt wurde.

14. Computerlesbares Speichermedium umfassend einen Digitalen Zwilling (800), der mit einem Verfahren gemäß einem der Ansprüche 1 bis 12 erstellt wurde.

15. Verwendung eines Digitalen Zwillings (800), der mit einem Verfahren gemäß einem der Ansprüche 4 bis 9 erstellt wurde, zur Identifizierung von Inkonsistenzen zwischen den Automatisierungs-Engineeringdaten (205) und den Daten der zweiten Datenquelle (405), oder
Verwendung eines Digitalen Zwillings, der mit einem Verfahren gemäß einem der Ansprüche 11 oder 12 erstellt wurde, zur Identifizierung von Inkonsistenzen zwischen den Daten der ersten Datenquelle (205) und den Daten der zweiten Datenquelle (405).

16. Verwendung eines Digitalen Zwillings (800), der mit einem Verfahren gemäß einem der Ansprüche 1 bis 12 erstellt wurde,
- zur Erstellung eines Digitalen Zwillings einer geänderten Vorrichtung oder Anlage,
- zur Erstellung einer Simulation der Vorrichtung oder Anlage (100) oder Teilen davon und/oder zur virtuellen Inbetriebnahme der Vorrichtung oder Anlage (100) oder Teilen davon, und/oder
- zur Prüfung, ob der digitale Zwilling (800) ursprünglichen Planungsdaten der Vorrichtung oder Anlage (100) entspricht.

## Claims

1. Method for creating a digital twin (800) of an installation or device (100),
wherein a first data source containing automation engineering data (205) in relation to automation and/or an automation plan of the installation or device (100) or parts thereof is present, and
wherein the automation engineering data (205) comprise data from at least two data categories, the method being **characterized by** the following steps:
a.) identifying component data clusters (310, 320, 330, 340, 250) within the data from the first data source (205) using a clustering method in the form of a machine learning method, wherein the component data clusters (310, 320, 330, 340, 250) are able to be associated with or are associated with component types or component ID information in relation to the installation or device (100),
b.) assigning, in automated or semi-automated fashion, a respective component type designation (312, 322, 352) or a respective component ID information designation (314, 334, 344, 354) to at least one of the identified component data clusters (310, 320, 330, 340, 250),
wherein the automated or semi-automated assignment is carried out using a cluster association database and/or a cluster association neural network,
c.) creating and storing the digital twin (800) of the installation or device (100), comprising arranging and/or storing the information, generated according to method step b.), in relation to the component type designation or component ID information designation assigned in each case to the at least one of the identified component data clusters, as a digital twin database.

2. Method according to Claim 1,
**characterized**
**in that**, following method step a.) and before method step c.), the following method steps are performed:
a1.) identifying subcomponent data clusters (330, 340) within the component data clusters (320) identified according to Claim 1, wherein the subcomponent data clusters (330, 340) are able to be associated with or are associated with subcomponent types or subcomponent ID information in relation to the installation or device (100),
and
**in that**, following method step a1.) and before method step c.), the following method step is performed:
b1.) assigning a respective subcomponent type designation or a respective subcomponent ID information designation (334, 344) to at least one of the identified subcomponent data clusters (340).

3. Method according to Claim 1 or 2,
**characterized**
**in that**, following method step a.) and/or a1.), the following method step is performed:
b2.) identifying relationship information (336, 346) of the component data clusters (310, 320, 330, 340, 250) identified according to method step a.) by evaluating the data from the first data source (205) and/or additional information regarding these data,
and/or
identifying relationship information (336, 346) between subcomponent data clusters identified according to method step a1.) by evaluating the data from the first data source and/or additional information regarding these data,
wherein, furthermore,
in method step c.), the digital twin (800) is furthermore created using identified relationship information (336, 346).

4. Method according to one of the preceding claims, **characterized**
**in that** a second data source (405) from the following list of data sources is present:
- MCAD data (400) in relation to a mechanical and/or spatial plan of the device or installation (100) or parts thereof, and/or in relation to a mechanical and/or spatial design of the device or installation or parts thereof,
- ECAD data (152) in relation to an electrical plan and/or circuit diagram of the device or installation or parts thereof, and/or in relation to an electrical design and/or implemented circuit diagram of the device or installation or parts thereof,
- robotics data (154) in relation to a plan and/or a design of one or more robots (115, 125) of the device or installation (100),
- description data (156) in relation to a plan and/or design of the device or installation (100) or parts thereof,
wherein the method furthermore additionally comprises, before the creation of the digital twin (800) according to feature c.), the following method steps:
aa.) identifying component data clusters (530, 540, 550, 560) within the second data source (405), wherein the component data clusters (530, 540, 550, 560) are able to be associated with or are associated with component types or component ID information in relation to the installation or device (100),
bb.) assigning a respective component type designation or a respective component ID information designation (534, 544, 554, 564) to at least one of the component data clusters (530, 540, 550, 560) identified in method step aa.),
bbb.) associating the component data clusters (310, 320, 330, 340, 250) and/or subcomponent data clusters of the data from the first data source identified in method step b.) according to Claim 1 or 2 with the component data clusters (530, 540, 550, 560) identified in method step bb.).

5. Method according to Claim 4,
**characterized**
**in that**, following method step aa.) and before method step bbb.), the following method steps are performed:
aal.) identifying subcomponent data clusters within the component data clusters (530, 540, 550, 560) identified according to Claim 4, wherein subcomponent types or subcomponent ID information in relation to the installation or device are able to be associated with or are associated with the subcomponent data clusters (530, 540, 550, 560),
and
bb1.) assigning a respective subcomponent type designation or a respective subcomponent ID information designation (534, 544, 554, 564) to at least one of the identified subcomponent data clusters.

6. Method according to Claim 4 or 5,
**characterized**
**in that**, following method step aa.) and/or aa1.), the following method step is performed:
bb2.) identifying relationship information (536, 546) between component data clusters (530, 540, 550, 560) identified according to method step aa.) by evaluating the data from the second data source (405) and/or additional information regarding these data,
and/or
identifying relationship information between subcomponent data clusters identified according to method step aa1.) by evaluating the data from the second data source and/or additional information regarding these data,
wherein, furthermore,
in method step c.), the digital twin (800) is furthermore created using identified relationship information (536, 546).

7. Method according to one of the preceding claims, **characterized**
**in that**, following method step a.), a1.), aa.), aa1.), b.), b1.), b2.), bb.), bb1.), bb2.), bbb.) and/or further method steps according to one of the preceding claims, a result of the respective method step is stored in a cluster association database (700)
and/or
**in that**, following method step a.), a1.), aa.), aa1.), b.), b1.), b2.), bb.), bb1.), bb2.), bbb.) and/or further method steps according to one of the preceding claims, a cluster association neural network (752) is trained using results from the respective method step.

8. Method according to Claim 7,
**characterized**
**in that** the cluster association database (700) and/or the cluster association neural network (752) is used when performing a method according to one of Claims 1 to 6, in particular in that the component data clusters (310, 320, 330, 340, 250, 530, 540, 550, 560) and/or the subcomponent data clusters are identified using the cluster association database (700) and/or the cluster association neural network (752),
and/or
**in that** the component type designation (312, 322, 352) or component ID information designation (314, 334, 344, 354, 534, 544, 554, 564) and/or the subcomponent type designation or in each case one subcomponent ID information designation is assigned using the cluster association database and/or the cluster association neural network.

9. Method according to one of the preceding claims,
**characterized**
**in that** the digital twin (800) and/or the cluster association database (700) is in the form of a relational database, a NoSQL database and/or a knowledge graph database.

10. Method for creating a digital twin (800) of an installation or device (100) according to one of Claims 1 to 9,
wherein a first data source (205) from the following list of data sources is present:
- automation engineering data (205) in relation to automation and/or an automation plan of the installation or device (100) or parts thereof,
- MCAD data (400) in relation to a mechanical and/or spatial plan of the device or installation (100) or parts thereof, and/or in relation to a mechanical and/or spatial design of the device or installation or parts thereof,
- ECAD data (152) in relation to an electrical plan and/or circuit diagram of the device or installation or parts thereof, and/or in relation to an electrical design and/or implemented circuit diagram of the device or installation or parts thereof,
- robotics data (154) in relation to a plan and/or a design of one or more robots (115, 125) of the device or installation (100),
and wherein the first data source (205) comprises data from at least two data categories.

11. Method according to Claim 10,
**characterized**
**in that** a second data source (405), different from the first data source (205), is selected from the following list of data sources:
- automation engineering data (205) in relation to automation and/or an automation plan of the installation or device (100) or parts thereof,
- MCAD data (400) in relation to a mechanical and/or spatial plan of the device or installation (100) or parts thereof, and/or in relation to a mechanical and/or spatial design of the device or installation or parts thereof,
- ECAD data (152) in relation to an electrical plan and/or circuit diagram of the device or installation or parts thereof, and/or in relation to an electrical design and/or implemented circuit diagram of the device or installation or parts thereof,
- robotics data (154) in relation to a plan and/or a design of one or more robots (115, 125) of the device or installation (100),
- description data (156) in relation to a plan and/or design of the device or installation (100) or parts thereof,
wherein the method furthermore additionally comprises, before the creation of the digital twin (800) according to feature c.), the following method steps:
aa.) identifying component data clusters (530, 540, 550, 560) within the second data source (405), wherein the component data clusters (530, 540, 550, 560) are able to be associated with or are associated with component types or component ID information in relation to the installation or device (100),
bb.) assigning a respective component type designation or a respective component ID information designation (534, 544, 554, 564) to at least one of the component data clusters (530, 540, 550, 560) identified in method step aa.),
bbb.) associating the component data clusters (310, 320, 330, 340, 250) and/or subcomponent data clusters from the first data source (205) identified in method step b.) according to Claim 10 or 11 with the component data clusters (530, 540, 550, 560) identified in method step bb.).

12. Method according to either of Claims 10 and 11,
**characterized**
**in that** the method is furthermore accordingly designed and configured in accordance with the features of one or more of Claims 5 to 9.

13. Digital twin for a device or installation,
**characterized**
**in that** the digital twin (800) has been created using a method according to one of Claims 1 to 12.

14. Computer-readable storage medium comprising a digital twin (800) that has been created using a method according to one of Claims 1 to 12.

15. Use of a digital twin (800) that has been created using a method according to one of Claims 4 to 9 to identify inconsistencies between the automation engineering data (205) and the data from the second data source (405), or
use of a digital twin that has been created using a method according to either of Claims 11 to 12 to identify inconsistencies between the data from the first data source (205) and the data from the second data source (405).

16. Use of a digital twin (800) that has been created using a method according to one of Claims 1 to 12
- to create a digital twin of a changed device or installation,
- to create a simulation of the device or installation (100) or parts thereof and/or to virtually commission the device or installation (100) or parts thereof, and/or
- to check whether the digital twin (800) corresponds to original planning data of the device or installation (100).

## Revendications

1. Procédé pour générer un jumeau numérique (800) d'une installation ou d'un dispositif (100),
dans lequel est présente une première source de données avec des données d'ingénierie d'automatisation (205) relatives à une automatisation et/ou une planification d'automatisation de l'installation ou du dispositif (100) ou de parties de ceux-ci, et
dans lequel les données d'ingénierie d'automatisation (205) comprennent des données d'au moins deux catégories de données, le procédé est **caractérisé par** les étapes suivantes :
a.) identification de groupes de données de composante (310, 320, 330, 340, 250) à l'intérieur des données de la première source de données (250) en employant un procédé de groupage conçu en tant que procédé d'apprentissage machine, dans lequel les groupes de données de composante (310, 320, 330, 340, 250) peuvent être attribués ou sont attribués à des types de composantes ou des informations d'identification de composante relatifs/relatives à l'installation ou au dispositif (100),
b.) attribution automatisée ou semi-automatisée respectivement d'une désignation de type de composante (312, 322, 352) ou respectivement d'une désignation d'informations d'identification de composante (314, 334, 344, 354) à au moins un des groupes de données de composante (310, 320, 330, 340, 250) identifiés,
dans lequel l'attribution automatisée ou semi-automatisée s'effectue en employant une base de données d'attribution de groupes et/ou un réseau neuronal d'attribution de groupes,
c.) création et conservation en mémoire du jumeau numérique (800) de l'installation ou du dispositif (100), comprenant un agencement et/ou une conservation en mémoire des informations produites selon l'étape de procédé b.) relatives à la désignation de type de composante ou la désignation d'informations d'identification de composante attribuée respectivement à l'au moins un des groupes de données de composante identifiées, en tant que base de données de jumeau numérique.

2. Procédé selon la revendication 1,
**caractérisé en ce qu'**à la suite de l'étape de procédé a.) et avant l'étape de procédé c.), les étapes de procédé suivantes sont exécutées :
a1.) identification de groupes de données de sous-composante (330, 340) à l'intérieur du groupe de données de composante (320) identifié selon la revendication 1, dans lequel les groupes de données de sous-composante (330, 340) peuvent être attribués ou sont attribués à des types de sous-composante ou des informations d'identification de sous-composante relatifs/relatives à l'installation ou au dispositif (100),
et
qu'à la suite de l'étape de procédé a1.) et avant l'étape de procédé c.), l'étape de procédé suivante est exécutée :
b1.) attribution respectivement d'une désignation de type de sous-composante ou respectivement d'une désignation d'informations d'identification de sous-composante (334, 344) à au moins un des groupes de données de sous-composante (340) identifiés.

3. Procédé selon la revendication 1 ou 2, **caractérisé en ce qu'**à la suite de l'étape de procédé a.) et/ou a1.), l'étape de procédé suivante est exécutée :
b2.) identification d'informations de relation (336, 346) des groupes de données de composante (310, 320, 330, 340, 250) identifiés selon l'étape de procédé a.) par évaluation des données de la première source de données (205) et/ou d'informations supplémentaires à ces données,
et/ou
identification d'informations de relation (336, 346) entre des groupes de données de sous-composante identifiés selon l'étape de procédé a1.) par évaluation des données de la première source de données et/ou d'informations supplémentaires à ces données,
dans lequel en outre
à l'étape de procédé c.), le jumeau numérique (800) est créé en outre en utilisant des informations de relation identifiées (336, 346) .

4. Procédé selon l'une quelconque des revendications précédentes, **caractérisé en ce**
**qu'**une deuxième source de données (405) de la liste suivante de sources de données est présente :
- données MCAD (400) relatives à une planification mécanique et/ou physique du dispositif ou de l'installation (100) ou de parties de ceux-ci,
et/ou relatives à un agencement mécanique et/ou physique du dispositif ou de l'installation ou de parties de ceux-ci,
- données ECAD (152) relatives à une planification électrique et/ou une planification de câblage du dispositif ou de l'installation ou de parties de ceux-ci,
et/ou relatives à un agencement électrique et/ou une planification de câblage réalisée du dispositif ou de l'installation ou de parties de ceux-ci,
- données de robot (154) relatives à une planification et/ou un agencement d'un ou de plusieurs robot(s) (115, 125) du dispositif ou de l'installation (100),
- données de description (156) relatives à une planification et/ou un agencement du dispositif ou de l'installation (100) ou de parties de ceux-ci,
dans lequel le procédé comprend en outre en plus les étapes de procédé suivantes avant de créer le jumeau numérique (800) selon la caractéristique c.) :
aa.) identification de groupes de données de composante (530, 540, 550, 560) à l'intérieur de la deuxième source de données (405), dans lequel les groupes de données de composante (530, 540, 550, 560) peuvent être attribués ou sont attribués à des types de composantes ou des informations d'identification de composante relatifs/relatives à l'installation ou au dispositif (100),
bb.) attribution respectivement d'une désignation de type de composante ou respectivement d'une désignation d'informations d'identification de composante (534, 544, 554, 564) à au moins un groupe de données de composante (530, 540, 550, 560) identifié à l'étape de procédé aa.),
bbb.) attribution des groupes de données de composante (310, 320, 330, 340, 250) identifiés à l'étape de procédé b.) selon la revendication 1 ou 2 et/ou groupes de données de sous-composante des données de la première source de données aux groupes de données de composante (530, 540, 550, 560) identifiés à l'étape de procédé bb.).

5. Procédé selon la revendication 4,
**caractérisé en ce qu'**à la suite de l'étape de procédé aa.) et avant l'étape de procédé bbb.), les étapes de procédé suivantes sont exécutées :
aa1.) identification de groupes de données de sous-composante à l'intérieur des groupes de données de composante (530, 540, 550, 560) identifiés selon l'étape 4, dans lequel des types de sous-composante ou des informations d'identification de sous-composante relatifs/relatives à l'installation ou au dispositif peuvent être attribués ou sont attribués aux groupes de données de composante (530, 540, 550, 560),
et
bb1.) attribution respectivement d'une désignation de type de sous-composante ou respectivement d'une désignation d'informations d'identification de sous-composante (534, 544, 554, 564) à au moins un des groupes de données de sous-composante identifiés.

6. Procédé selon la revendication 4 ou 5,
**caractérisé en ce qu'**à la suite de l'étape de procédé aa.) et/ou aa1.), l'étape de procédé suivante est exécutée :
bb2.) identification d'informations de relation (536, 546) entre des groupes de données de composante (530, 540, 550, 560) identifiés selon l'étape de procédé aa.) par évaluation des données de la deuxième source de données (405) et/ou des informations supplémentaires à ces données,
et/ou
identification d'informations de relation entre des groupes de données de sous-composante identifiés selon l'étape de procédé aa1.) et/ou d'informations supplémentaires à ces données,
dans lequel en outre
à l'étape de procédé c.), le jumeau numérique (800) est créé en outre en utilisant des informations de relation (536, 546) identifiées.

7. Procédé selon l'une quelconque des revendications précédentes, **caractérisé en ce**
**qu'**à la suite de l'étape de procédé a.), a1.), aa.), aa1.), b.), b1.), b2.), bb.), bb1.), bb2.), bbb.) et/ou d'autres étapes de procédé selon l'une des revendications précédentes, un résultat de l'étape de procédé respective est conservé en mémoire dans une base de données d'attribution aux groupes (700),
et/ou
**qu'**à la suite de l'étape de procédé a.), a1.), aa.), aa1.), b.), b1.), b2.), bb.), bb1.), bb2.), bbb.) et/ou d'autres étapes de procédé selon l'une des revendications précédentes, un réseau neuronal d'attribution aux groupes (752) est entraîné en utilisant des résultats de l'étape de procédé respective.

8. Procédé selon la revendication 7, **caractérisé en ce que** la base de données d'attribution aux groupes (700) et/ou le réseau neuronal d'attribution aux groupes (752) est employé lors de l'exécution d'un procédé selon l'une des revendications 1 à 6, en particulier que l'identification des groupes de données de composante (310, 320, 330, 340, 250, 530, 540, 550, 560) et/ou des groupes de données de sous-composante s'effectue en utilisant la base de données d'attribution aux groupes (700) et/ou le réseau neuronal d'attribution aux groupes (752), et/ou
que l'attribution de la désignation de type de composante (312, 322, 352) ou de la désignation d'informations d'identification de composante (314, 334, 344, 354, 534, 544, 554, 564) et/ou de la désignation de type de sous-composante ou respectivement d'une désignation d'informations d'identification de sous-composante s'effectue en utilisant la base de données d'attribution aux groupes et/ou le réseau neuronal d'attribution aux groupes.

9. Procédé selon l'une quelconque des revendications précédentes, **caractérisé en ce que** le jumeau numérique (800) et/ou la base de données d'attribution aux groupes (700) est conçu(e) en tant qu'une base de données relationnelle, base de données NoSQL et/ou base de données de graphes de connaissances.

10. Procédé de création d'un jumeau numérique (800) d'une installation ou d'un dispositif (100) selon l'une des revendications 1 à 9,
dans lequel une première source de données (205) de la liste suivante de sources de données est présente :
- des données d'ingénierie d'automatisation (205) relatives à une automatisation et/ou une planification d'automatisation de l'installation ou du dispositif (100) ou de parties de ceux-ci,
- données MCAD (400) relatives à une planification mécanique et/ou physique du dispositif ou de l'installation (100) ou de parties de ceux-ci,
et/ou relatives à un agencement mécanique et/ou physique du dispositif ou de l'installation ou de parties de ceux-ci,
- données ECAD (152) relatives à une planification électrique et/ou une planification de câblage du dispositif ou de l'installation ou de parties de ceux-ci,
et/ou relatives à un agencement électrique et/ou une planification de câblage réalisée du dispositif ou de l'installation ou de parties de ceux-ci,
- données de robot (154) relatives à une planification et/ou un agencement d'un ou de plusieurs robot(s) (115, 125) du dispositif ou de l'installation (100),
et dans lequel la première source de données (205) comprend des données d'au moins deux catégories de données.

11. Procédé selon la revendication 10,
**caractérisé en ce qu'**une deuxième source de données (405) différente de la première source de données (205) est choisie dans la liste suivante de sources de données :
- données d'ingénierie d'automatisation (205) relatives à une automatisation et/ou une planification d'automatisation de l'installation ou du dispositif (100) ou de parties de ceux-ci,
- données MCAD (400) relatives à une planification mécanique et/ou physique du dispositif ou de l'installation (100) ou de parties de ceux-ci,
et/ou relatives à un agencement mécanique et/ou physique du dispositif ou de l'installation ou de parties de ceux-ci,
- données ECAD (152) relatives à une planification électrique et/ou une planification de câblage du dispositif ou de l'installation ou de parties de ceux-ci,
et/ou relatives à un agencement électrique et/ou une planification de câblage réalisée du dispositif ou de l'installation ou de parties de ceux-ci,
- données de robot (154) relatives à une planification et/ou un agencement d'un ou de plusieurs robot(s) (115, 125) du dispositif ou de l'installation (100),
- données de description (156) relatives à une planification et/ou un agencement du dispositif ou de l'installation (100) ou de parties de ceux-ci,
dans lequel le procédé comprend en outre en plus les étapes de procédé suivantes avant de créer le jumeau numérique (800) selon la caractéristique c.) :
aa.) identification de groupes de données de composante (530, 540, 550, 560) à **l'intérieur** de la deuxième source de données (405), dans lequel les groupes de données de composante (530, 540, 550, 560) peuvent être attribués ou sont attribués à des types de composantes ou des informations **d'identification** de composante relatifs/relatives à l'installation ou au dispositif (100),
bb.) attribution respectivement **d'une** désignation de type de composante ou respectivement **d'une** désignation **d'informations** d'identification de composante (534, 544, 554, 564) à au moins un groupe de données de composante (530, 540, 550, 560) identifié à l'étape de procédé aa.),
bbb.) attribution des groupes de données de composante (310, 320, 330, 340, 250) identifiés à l'étape de procédé b.) selon la revendication 10 ou 11 et/ou groupes de données de sous-composante des données de la première source de données (205) aux groupes de données de composante (530, 540, 550, 560) identifiés à l'étape de procédé bb.).

12. Procédé selon l'une des revendications 10 ou 11,
**caractérisé en ce que**
le procédé est en outre conçu et équipé selon les caractéristiques d'une ou plusieurs des revendications 5 à 9.

13. Jumeau numérique pour un dispositif ou une installation,
**caractérisé en ce que**
le jumeau numérique (800) a été créé en utilisant un procédé selon l'une des revendications 1 à 12.

14. Support de mémoire lisible sur ordinateur comprenant un jumeau numérique (800) qui a été créé en utilisant un procédé selon l'une des revendications 1 à 12.

15. Utilisation d'un jumeau numérique (800) qui a été créé par un procédé selon l'une des revendications 4 à 9, pour identifier des inconsistances entre les données d'ingénierie d'automatisation (205) et les données de la deuxième source de données (405), ou
emploi d'un jumeau numérique, qui a été créé par un procédé selon l'une des revendications 11 ou 12, pour identifier des inconsistances entre les données de la première source de données (205) et les données de la deuxième source de données (405).

16. Utilisation d'un jumeau numérique (800) qui a été créé par un procédé selon l'une des revendications 1 à 12,
- pour créer un jumeau numérique d'un dispositif ou d'une installation modifié(e),
- pour créer une simulation du dispositif ou de l'installation (100) ou de parties de ceux-ci et/ou pour la mise en service virtuelle du dispositif ou de l'installation (100) ou de parties de ceux-ci, et/ou
- pour vérifier que le jumeau numérique (800) correspond à des données de planification d'origine du dispositif ou de l'installation (100).
